(19) Europäisches Patentamt
European Patent Office
Office européen des brevets

(11) EP 4 383 913 A1

(12) EUROPEAN PATENT APPLICATION
published in accordance with Art. 153(4) EPC

(43) Date of publication:
**12.06.2024 Bulletin 2024/24**

(21) Application number: **22863578.5**

(22) Date of filing: **01.09.2022**

(51) International Patent Classification (IPC):
***H04W 72/12*** *(2023.01)*

(52) Cooperative Patent Classification (CPC):
**H04L 5/00; H04W 72/12; H04W 72/54**

(86) International application number:
**PCT/CN2022/116503**

(87) International publication number:
**WO 2023/030443 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2021 CN 202111040607**

(71) Applicant: **Huawei Technologies Co., Ltd.**
**Shenzhen, Guangdong 518129 (CN)**

(72) Inventors:
- **LUO, Zhe**
  **Shenzhen, Guangdong 518129 (CN)**
- **LI, Xinxian**
  **Shenzhen, Guangdong 518129 (CN)**
- **PENG, Jinlin**
  **Shenzhen, Guangdong 518129 (CN)**
- **LONG, Yi**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) WIRELESS COMMUNICATION METHOD AND COMMUNICATION APPARATUS

(57) This application provides a wireless communication method and a communication apparatus. The wireless communication method includes: A terminal device sends first information to a network device on a first carrier, where the first information is for determining channel information on the first carrier, and the channel information on the first carrier includes a modulation and coding scheme MCS and/or spectrum efficiency on the first carrier. The terminal device receives second information from the network device, where the second information is for scheduling a transmission resource on a second carrier, the second information indicates channel information on the second carrier, the channel information on the second carrier includes an MCS and/or spectrum efficiency on the second carrier, and the channel information on the second carrier is determined based on the channel information on the first carrier. According to the communication method, a multi-carrier transmission rate can be increased, and spectrum usage efficiency can be improved, so that system transmission performance can be improved.

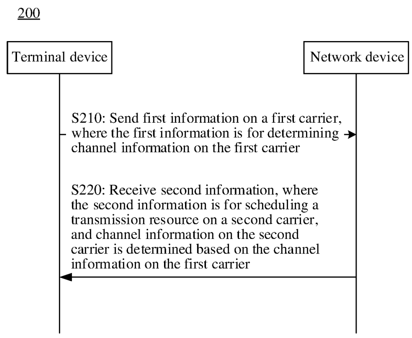


FIG. 2

EP 4 383 913 A1

## Description

This application claims priority to Chinese Patent Application No. 202111040607.9, filed with the China National Intellectual Property Administration on September 6, 2021 and entitled "WIRELESS COMMUNICATION METHOD AND COMMUNICATION APPARATUS", which is incorporated herein by reference in its entirety.

## TECHNICAL FIELD

Embodiments of this application relate to the communications field, and more specifically, to a wireless communication method and a communication apparatus.

## BACKGROUND

With demand for an increasing network capacity, use of a frequency division duplex (frequency division duplex, FDD) spectrum resource is especially important. Currently, a carrier aggregation (carrier aggregation, CA) technology is introduced to implement FDD carrier aggregation, to support a higher transmission bandwidth and increase spectrum usage of user equipment (user equipment, UE).

However, when the UE needs to communicate large data, channel measurement usually needs to be performed on a plurality of activated carriers. Before a channel measurement result is obtained, channel information on the foregoing carriers is unknown. Consequently, a multi-carrier transmission rate decreases. Further, system transmission performance is affected. Therefore, how to increase the multi-carrier transmission rate and improve the system transmission performance is an urgent problem to be resolved.

## SUMMARY

This application provides a wireless communication method and a communication apparatus, to increase a multi-carrier transmission rate and improve system transmission performance.

According to a first aspect, a wireless communication method is provided. The method may be performed by a terminal device, or may be performed by a chip or a circuit used in the terminal device. This is not limited in this application. For ease of description, the following uses an example in which the method is performed by the terminal device for description.

The method includes: The terminal device sends first information to a network device on a first carrier, where the first information is for determining channel information on the first carrier, and the channel information on the first carrier includes a modulation and coding scheme (modulation and coding scheme, MCS) and/or spectrum efficiency on the first carrier. The terminal device receives second information from the network device, where the second information is for scheduling a transmission resource on a second carrier, the second information indicates channel information on the second carrier, the channel information on the second carrier includes an MCS and/or spectrum efficiency on the second carrier, and the channel information on the second carrier is determined based on the channel information on the first carrier.

According to the solution provided in this application, an MCS and/or spectrum efficiency on another carrier (for example, the second carrier) on which channel information is not fed back are/is obtained based on the MCS and/or the spectrum efficiency on the first carrier. In other words, the transmission resource on the second carrier can be scheduled without performing time/frequency synchronization and channel measurement on the second carrier. According to the method, spectrum usage efficiency can be improved, and a transmission rate before the channel information is fed back on the another carrier can be improved, so that a system transmission delay is reduced, and system transmission performance is improved.

It should be noted that the channel information on the first carrier and the channel information on the second carrier are real-time shared channel information. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a channel quality indication (channel quality indication, CQI), an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

The second information indicates that the terminal device carries a physical downlink shared channel (physical downlink shared channel, PDSCH) or a physical uplink shared channel (physical uplink shared channel, PUSCH) on the second carrier and that the terminal device may receive downlink data or send uplink data on the corresponding second carrier.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates the channel information on the first carrier and the second carrier. In this implementation, cross-carrier scheduling may also be performed on the transmission resource on the second carrier based on the channel information on the first carrier.

With reference to the first aspect, in some implementations of the first aspect, the terminal device sends third information to the network device, where the third information indicates first association information, the first association information indicates channel difference information between the first carrier and the second carrier, and the channel information on the second carrier is determined based on the first association information and the first information.

In this implementation, the network device further determines the channel information on the second carrier by using the first information (the channel information on the first carrier) in combination with the third information (the channel difference information between the first carrier and the second carrier), so that accuracy of the channel information on the second carrier can be ensured.

The first association information may include a path loss difference, a historical MCS correspondence and/or a historical spectrum-efficiency correspondence, and the like between the first carrier and the second carrier.

For example, if a reference signal received power (reference signal received power, RSRP) on the first carrier is X dBm, and an RSRP on the second carrier is Y dBm, the path loss difference between the carriers is $\Delta$=Y-X. In this case, with reference to a case in which the channel information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, the MCS used on the second carrier is V1; or when the MCS used on the first carrier is U2, the MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is $\Delta$ dB. With reference to a case in which each MCS on the first carrier is U, the network device further learns that the MCS on the second carrier is close to V, for example, from V-2 to V+1 (including V-2 and V+1), so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control (radio resource control, RRC) signaling. This is not specifically limited in this application.

According to a second aspect, a wireless communication method is provided. The method may be performed by a terminal device, or may be performed by a chip or a circuit used in the terminal device. This is not limited in this application. For ease of description, the following uses an example in which the method is performed by the terminal device for description.

The method includes: The terminal device receives channel information on a first carrier and second association information from a network device, where the channel information on the first carrier includes a modulation and coding scheme MCS and/or spectrum efficiency on the first carrier, and the second association information indicates channel difference information between the first carrier and a second carrier. The terminal device determines channel information on the second carrier based on the channel information on the first carrier and the second association information, where the channel information on the second carrier includes an MCS and/or spectrum efficiency on the second carrier.

According to the solution provided in this application, an MCS and/or spectrum efficiency on another carrier (for example, the second carrier) on which channel information is not fed back are/is obtained based on the MCS and/or the spectrum efficiency on the first carrier. In other words, a transmission resource on the second carrier can be scheduled without performing time/frequency synchronization and channel measurement on the second carrier. According to the method, spectrum usage efficiency can be improved, and a transmission rate before the channel information is fed back on the another carrier can be improved, so that a system transmission delay is reduced, and system transmission performance is improved.

It should be noted that the channel information on the first carrier and the channel information on the

second carrier are shared channel information. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

Second information indicates that the terminal device carries a downlink data channel PDSCH or an uplink data channel PUSCH on the second carrier and that the terminal device may receive downlink data or send uplink data on the corresponding second carrier.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates the channel information on the first carrier and the second carrier. In this implementation, cross-carrier scheduling may also be performed on the transmission resource on the second carrier based on the channel information on the first carrier.

With reference to the second aspect, in some implementations of the second aspect, the terminal device receives second information from the network device, where the second information is for scheduling a transmission resource on the second carrier. The terminal device communicates with the network device by using the transmission resource on the second carrier based on the second information and the channel information on the second carrier.

With reference to the second aspect, in some implementations of the second aspect, the terminal device sends first information to the network device on the first carrier, where the first information is for determining the channel information on the first carrier.

With reference to the second aspect, in some implementations of the second aspect, the terminal device sends third information to the network device, where the third information indicates first association information, the first association information is for determining the second association information, and the first association information indicates channel difference information that is between the first carrier and the second carrier and that is not updated.

In this implementation, the second association information is updated based on the first association information. It may be understood as that the second association information is determined by the network device based on a current system resource allocation status, and adaptability and flexibility are better.

The first association information may include a path loss difference, a historical MCS correspondence and/or a historical spectrum-efficiency correspondence, and the like between the first carrier and the second carrier.

For example, if a reference signal received power RSRP on the first carrier is X dBm, and an RSRP on the second carrier is Y dBm, the path loss difference between the carriers is $\Delta$=Y-X. In this case, with reference to a case in which the channel information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, the MCS used on the second carrier is V1; or when the MCS used on the first carrier is U2, the MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is $\Delta$ dB. With reference to a case in which each MCS on the first carrier is U, the network device further learns that the MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information

(for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

With reference to the first aspect or the second aspect, in some implementations, the first association information or the second association information includes one or more of the following information: a propagation path loss difference, an antenna efficiency difference, an optimal-beam difference, an MCS correspondence, and a spectrum efficiency correspondence.

With reference to the first aspect or the second aspect, in some implementations, a value range of the spectrum efficiency on the second carrier is [0.8*W*, 1.1*W*], and W satisfies:

$$W = \log_2(1 + 10^{\Delta/10}(2^z - 1))$$

where Δ is the propagation path loss difference between the second carrier and the first carrier, and Z is spectrum efficiency corresponding to an index U of a real-time MCS on the first carri er.

For example, the spectrum efficiency on the second carrier may alternatively be any value in 0.6W to 1.2W. Accordingly, a value range of an index of a real-time MCS on the second carrier may be [*V* - 2, *V* +1], and V corresponds to the real-time spectrum efficiency W.

Optionally, a value range of the spectrum efficiency on the second carrier is [0.7*W*, 1.2*W*], [0.6*W*, 1.0*W*], or the like.

It should be noted that the value range of the spectrum efficiency on the second carrier is merely an example for description, and should not constitute any limitation on the technical solutions in this application.

With reference to the first aspect or the second aspect, in some implementations, the propagation path loss difference Δ between the first carrier and the second carrier satisfies:

$$\Delta = 10\log_{10}((2^W - 1)/(2^Z - 1))$$

where W is spectrum efficiency corresponding to an MCS index V on the second carrier, and Z is the spectrum efficiency corresponding to the MCS index U on the first carrier.

With reference to the first aspect or the second aspect, in some implementations, the first information includes one or more of the following information: a reference signal received power RSRP on the first carrier, reference signal received quality (reference signal received quality, RSRQ) on the first carrier, a channel quality indication CQI on the first carrier, a sounding reference signal (sounding reference signal, SRS) on the first carrier, acknowledgement (acknowledgement, ACK) or negative acknowledgement (negative acknowledgement, NACK) information of a communication device on the first carrier, and information indicating whether the communication device successfully demodulates information on the first carrier.

By way of example but not limitation, the network device may send fourth information to the terminal device.

Accordingly, the terminal device receives the fourth indication information from the network device.

The fourth information is for scheduling the transmission resources on both the first carrier and the second carrier.

For example, the fourth information indicates the channel information on the first carrier and the second carrier. That is, the terminal device communicates resources on the first carrier and the second carrier based on the fourth information.

Optionally, the fourth information includes the channel information on the first carrier. For example, after determining the channel information on the first carrier based on the first information, the network device determines the updated second association information with reference to the first association information between the plurality of carriers, and sends the second association information to the terminal device. Then, when sending the fourth information to schedule the transmission resources on the first carrier and the second carrier, the network device may send the channel information on the first carrier to the terminal device. The terminal device obtains the channel information on the second carrier from the second association information based on the channel information on the first carrier, and communicates the resources on both the first carrier and the second carrier.

In this implementation, a diversified scheduling requirement of communication can be implemented, the channel information on the second carrier can be obtained based on the channel information on the first carrier, and a transmission rate before the channel information is fed back on the second carrier can be improved, so that system transmission performance can be improved.

According to a third aspect, a wireless communication method is provided. The method may be performed by a network device, or may be performed by a chip or a circuit used in the network device. This is not limited in this application. For ease of description, the following uses an example in which the method is performed by the network device for description.

The method includes: The network device receives first information from a terminal device on a first carrier, where the first information is for determining channel information on the first carrier, and the channel information on the first carrier includes a modulation and

coding scheme MCS and/or spectrum efficiency on the first carrier. The network device sends second information to the terminal device, where the second information is for scheduling a transmission resource on a second carrier, the second information indicates channel information on the second carrier, the channel information on the second carrier includes an MCS and/or spectrum efficiency on the second carrier, and the channel information on the second carrier is determined based on the channel information on the first carrier.

According to the solution provided in this application, an MCS and/or spectrum efficiency on another carrier (for example, the second carrier) on which channel information is not fed back are/is obtained based on the MCS and/or the spectrum efficiency on the first carrier. In other words, the transmission resource on the second carrier can be scheduled without performing time/frequency synchronization and channel measurement on the second carrier. According to the method, spectrum usage efficiency can be improved, and a transmission rate before the channel information is fed back on the another carrier can be improved, so that a system transmission delay is reduced, and system transmission performance is improved.

It should be noted that the channel information on the first carrier and the channel information on the second carrier are shared channel information. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

The second information indicates that the terminal device carries a downlink data channel PDSCH or an uplink data channel PUSCH on the second carrier and that the terminal device may receive downlink data or send uplink data on the corresponding second carrier. For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates the channel information on the first carrier and the second carrier. In this implementation, cross-carrier scheduling may also be performed on the transmission resource on the second carrier based on the channel information on the first carrier.

With reference to the third aspect, in some implementations of the third aspect, the network device determines the channel information on the first carrier based on the first information. The network device determines the channel information on the second carrier based on the channel information on the first carrier.

In this implementation, the network device sequentially determines the channel information on the first carrier and the channel information on the second carrier, to subsequently schedule the transmission resource on the first carrier and/or the transmission resource on the second carrier.

With reference to the third aspect, in some implementations of the third aspect, the network device receives third information from the terminal device, where the third information indicates first association information, and the first association information indicates channel difference information between the first carrier and the second carrier. The network device determines the channel information on the second carrier based on the first association information and the first information.

In this implementation, the network device further determines the channel information on the second carrier by using the first information (the channel information on the first carrier) in combination with the third information (the channel difference information between the first carrier and the second carrier), so that accuracy of the channel information on the second carrier can be ensured.

The first association information may include a path loss difference, a historical MCS correspondence and/or a historical spectrum-efficiency correspondence, and the like between the first carrier and the second carrier.

For example, if an RSRP on the first carrier is X dBm, and an RSRP on the second carrier is Y dBm, the path loss difference between the carriers is $\Delta$=Y-X. In this case, with reference to a case in which the channel

information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, the MCS used on the second carrier is V1; or when the MCS used on the first carrier is U2, the MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is $\Delta$ dB. With reference to a case in which each MCS on the first carrier is U, the network device further learns that the MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

According to a fourth aspect, a wireless communication method is provided. The method may be performed by a network device, or may be performed by a chip or a circuit used in the network device. This is not limited in this application. For ease of description, the following uses an example in which the method is performed by the network device for description.

The method includes: The network device sends channel information on a first carrier and second association information to a terminal device, where the channel information on the first carrier includes a modulation and coding scheme MCS and/or spectrum efficiency on the first carrier, the second association information indicates channel difference information between the first carrier and a second carrier, the channel information on the first carrier and the second association information are for determining channel information on the second carrier, and the channel information on the second carrier includes an MCS and/or spectrum efficiency on the second carrier.

According to the solution provided in this application, an MCS and/or spectrum efficiency on another carrier (for example, the second carrier) on which channel information is not fed back are/is obtained based on the MCS and/or the spectrum efficiency on the first carrier. In other words, a transmission resource on the second carrier can be scheduled without performing time/frequency synchronization and channel measurement on the second carrier. According to the method, spectrum usage efficiency can be improved, and a transmission rate before the channel information is fed back on the another carrier can be improved, so that a system transmission delay is reduced, and system transmission performance is improved.

It should be noted that the channel information on the first carrier and the channel information on the second carrier are shared channel information. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

Second information indicates that the terminal device carries a downlink data channel PDSCH or an uplink data channel PUSCH on the second carrier and that the terminal device may receive downlink data or send uplink data on the corresponding second carrier.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates

the channel information on the first carrier and the second carrier. In this implementation, cross-carrier scheduling may also be performed on the transmission resource on the second carrier based on the channel information on the first carrier.

With reference to the fourth aspect, in some implementations of the fourth aspect, the network device sends second information to the terminal device, where the second information is for scheduling a transmission resource on the second carrier.

With reference to the fourth aspect, in some implementations of the fourth aspect, the network device receives first information from the terminal device on the first carrier. The network device determines the channel information on the first carrier based on the first information.

With reference to the fourth aspect, in some implementations of the fourth aspect, the network device receives third information from the terminal device, where the third information indicates first association information, and the first association information indicates channel difference information that is between the first carrier and the second carrier and that is not updated. The network device determines the second association information based on the first association information.

In this implementation, the second association information is updated based on the first association information. It may be understood as that the second association information is determined by the network device based on a current system resource allocation status, and adaptability and flexibility are better.

The first association information may include a path loss difference, a historical MCS correspondence and/or a historical spectrum-efficiency correspondence, and the like between the first carrier and the second carrier.

For example, if an RSRP on the first carrier is X dBm, and an RSRP on the second carrier is Y dBm, the path loss difference between the carriers is $\Delta$=Y-X. In this case, with reference to a case in which the channel information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, the MCS used on the second carrier is V1; or when the MCS used on the first carrier is U2, the MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is $\Delta$ dB. With reference to a case in which each MCS on the first carrier is U, the network device further learns that the MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

With reference to the third aspect or the fourth aspect, in some implementations, the first association information or the second association information includes one or more of the following information: a propagation path loss difference, an antenna efficiency difference, an optimal-beam difference, an MCS correspondence, and a spectrum efficiency correspondence.

With reference to the third aspect or the fourth aspect, in some implementations, a value range of the spectrum efficiency on the second carrier is [0.8*W*, 1.1*W*], and W satisfies:

$$W = \log_2(1+10^{\Delta/10}(2^z-1))$$

where $\Delta$ is the propagation path loss difference between the second carrier and the first carrier, and Z is spectrum efficiency corresponding to an index U of a real-time MCS on the first carri er.

For example, the spectrum efficiency on the second carrier may alternatively be any value in 0.6W to 1.2W. Accordingly, a value range of an index of a real-time MCS on the second carrier may be [*V* - 2, *V* +1], and V corresponds to the real-time spectrum efficiency W.

Optionally, a value range of the spectrum efficiency on the second carrier is [0.7*W*, 1.2W], [0.6W, 1.0W], or the like.

It should be noted that the value range of the spectrum efficiency on the second carrier is merely an example for description, and should not constitute any limitation on the technical solutions in this application.

With reference to the third aspect or the fourth aspect, in some implementations, the propagation path loss difference $\Delta$ between the first carrier and the second carrier satisfies:

$$\Delta = 10\log_{10}((2^W-1)/(2^Z-1))$$

where W is spectrum efficiency corresponding to an MCS index V on the second carrier, and Z is the spectrum efficiency corresponding to the MCS index U on the first

carrier.

With reference to the third aspect or the fourth aspect, in some implementations, the first information includes one or more of the following information: a reference signal received power RSRP on the first carrier, reference signal received quality RSRQ on the first carrier, a channel quality indication CQI on the first carrier, a sounding reference signal SRS on the first carrier, acknowledgement ACK or negative acknowledgement NACK information of a communication device on the first carrier, and information indicating whether the communication device successfully demodulates information on the first carrier.

By way of example but not limitation, the network device may send fourth information to the terminal device.

Accordingly, the terminal device receives the fourth indication information from the network device.

The fourth information is for scheduling the transmission resources on both the first carrier and the second carrier.

For example, the fourth information indicates the channel information on the first carrier and the second carrier. That is, the terminal device communicates resources on the first carrier and the second carrier based on the fourth information.

Optionally, the fourth information includes the channel information on the first carrier. For example, after determining the channel information on the first carrier based on the first information, the network device determines the updated second association information with reference to the first association information between the plurality of carriers, and sends the second association information to the terminal device. Then, when sending the fourth information to schedule the transmission resources on the first carrier and the second carrier, the network device may send the channel information on the first carrier to the terminal device. The terminal device obtains the channel information on the second carrier from the second association information based on the channel information on the first carrier, and communicates the resources on both the first carrier and the second carrier.

In this implementation, a diversified scheduling requirement of communication can be implemented, the channel information on the second carrier can be obtained based on the channel information on the first carrier, and a transmission rate before the channel information is fed back on the second carrier can be improved, so that system transmission performance can be improved.

According to a fifth aspect, a wireless communication apparatus is provided, and includes: a transceiver unit, used by a terminal device to send first information to a network device on a first carrier, where the first information is for determining channel information on the first carrier, and the channel information on the first carrier includes a modulation and coding scheme MCS and/or spectrum efficiency on the first carrier; and used by the terminal device to receive second information from the network device, where the second information is for scheduling a transmission resource on a second carrier, the second information indicates channel information on the second carrier, the channel information on the second carrier includes an MCS and/or spectrum efficiency on the second carrier, and the channel information on the second carrier is determined based on the channel information on the first carrier.

It should be noted that the channel information on the first carrier and the channel information on the second carrier are shared channel information. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

The second information indicates that the terminal device carries a downlink data channel PDSCH or an uplink data channel PUSCH on the second carrier and that the terminal device may receive downlink data or send uplink data on the corresponding second carrier.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the

first carrier and the second carrier, and the DCI indicates the channel information on the first carrier and the second carrier. In this implementation, cross-carrier scheduling may also be performed on the transmission resource on the second carrier based on the channel information on the first carrier.

With reference to the fifth aspect, in some implementations of the fifth aspect, the transceiver unit is further used by the terminal device to send third information to the network device, where the third information indicates first association information, the first association information indicates channel difference information between the first carrier and the second carrier, and the channel information on the second carrier is determined based on the first association information and the first information.

In this implementation, the network device further determines the channel information on the second carrier by using the first information (the channel information on the first carrier) in combination with the third information (the channel difference information between the first carrier and the second carrier), so that accuracy of the channel information on the second carrier can be ensured.

The first association information may include a path loss difference, a historical MCS correspondence and/or a historical spectrum-efficiency correspondence, and the like between the first carrier and the second carrier.

For example, if an RSRP on the first carrier is X dBm, and an RSRP on the second carrier is Y dBm, the path loss difference between the carriers is $\Delta$=Y-X. In this case, with reference to a case in which the channel information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, the MCS used on the second carrier is V1; or when the MCS used on the first carrier is U2, the MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is $\Delta$ dB. With reference to a case in which each MCS on the first carrier is U, the network device further learns that the MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

According to a sixth aspect, a wireless communication apparatus is provided, and includes: a transceiver unit, used by a terminal device to receive channel information on a first carrier and second association information from a network device, where the channel information on the first carrier includes a modulation and coding scheme MCS and/or spectrum efficiency on the first carrier, and the second association information indicates channel difference information between the first carrier and a second carrier; and a processing unit, used by the terminal device to determine channel information on the second carrier based on the channel information on the first carrier and the second association information, where the channel information on the second carrier includes an MCS and/or spectrum efficiency on the second carrier.

It should be noted that the channel information on the first carrier and the channel information on the second carrier are shared channel information. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

Second information indicates that the terminal device carries a downlink data channel PDSCH or an uplink data channel PUSCH on the second carrier and that the terminal device may receive downlink data or send uplink data on the corresponding second carrier.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates the channel information on the first carrier and the second carrier. In this implementation, cross-carrier scheduling may also be performed on the transmission resource on the second carrier based on the channel information on the first carrier.

With reference to the sixth aspect, in some implementations of the sixth aspect, the transceiver unit is further used by the terminal device to receive second information from the network device, where the second information is for scheduling a transmission resource on the second carrier; and used by the terminal device to communicate with the network device by using the transmission resource on the second carrier based on the second information and the channel information on the second carrier.

With reference to the sixth aspect, in some implementations of the sixth aspect, the transceiver unit is further used by the terminal device to send first information to the network device on the first carrier, where the first information is for determining the channel information on the first carrier.

With reference to the sixth aspect, in some implementations of the sixth aspect, the transceiver unit is further used by the terminal device to send third information to the network device, where the third information indicates first association information, the first association information is for determining the second association information, and the first association information indicates channel difference information that is between the first carrier and the second carrier and that is not updated.

In this implementation, the second association information is updated based on the first association information. It may be understood as that the second association information is determined by the network device based on a current system resource allocation status, and adaptability and flexibility are better.

The first association information may include a path loss difference, a historical MCS correspondence and/or a historical spectrum-efficiency correspondence, and the like between the first carrier and the second carrier.

For example, if an RSRP on the first carrier is X dBm, and an RSRP on the second carrier is Y dBm, the path loss difference between the carriers is Δ=Y-X. In this case, with reference to a case in which the channel information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, the MCS used on the second carrier is V1; or when the MCS used on the first carrier is U2, the MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is Δ dB. With reference to a case in which each MCS on the first carrier is U, the network device further learns that the MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

With reference to the fifth aspect or the sixth aspect, in some implementations, at least one of the first association information or the second association information includes one or more of the following information: a propagation path loss difference, an antenna efficiency difference, an optimal-beam difference, an MCS correspondence, and a spectrum efficiency correspondence.

With reference to the fifth aspect or the sixth aspect, in some implementations, a value range of real-time spectrum efficiency on the second carrier is [0.8*W*, 1.1*W*], and W satisfies:

$$W = \log_2(1+10^{\Delta/10}(2^z-1))$$

where Δ is the propagation path loss difference between the second carrier and the first carrier, and Z is spectrum efficiency corresponding to an index U of a real-time MCS on the first carri er.

For example, the spectrum efficiency on the second carrier may alternatively be any value in 0.6W to 1.2W. Accordingly, a value range of an index of a real-time MCS on the second carrier may be [*V* - 2, *V* +1],

and V corresponds to the real-time spectrum efficiency W.

Optionally, a value range of the spectrum efficiency on the second carrier is [0.7*W*, 1.2*W*], [0.6*W*, 1.0*W*], or the like.

It should be noted that the value range of the spectrum efficiency on the second carrier is merely an example for description, and should not constitute any limitation on the technical solutions in this application.

With reference to the fifth aspect or the sixth aspect, in some implementations, the propagation path loss difference Δ between the first carrier and the second carrier satisfies:

$$\Delta = 10\log_{10}((2^{W}-1)/(2^{Z}-1))$$

where W is spectrum efficiency corresponding to an MCS index V on the second carrier, and Z is the spectrum efficiency corresponding to the MCS index U on the first carrier.

With reference to the fifth aspect or the sixth aspect, in some implementations, the first information includes one or more of the following information: a reference signal received power RSRP on the first carrier, reference signal received quality RSRQ on the first carrier, a channel quality indication CQI on the first carrier, a sounding reference signal SRS on the first carrier, acknowledgement ACK or negative acknowledgement NACK information of a communication device on the first carrier, and information indicating whether the communication device successfully demodulates information on the first carrier.

According to a seventh aspect, a wireless communication apparatus is provided, and includes: a transceiver unit, used by a network device to receive first information from a terminal device on a first carrier, where the first information is for determining channel information on the first carrier, and the channel information on the first carrier includes a modulation and coding scheme MCS and/or spectrum efficiency on the first carrier, where the transceiver unit is further used by the network device to send second information to the terminal device, where the second information is for scheduling a transmission resource on a second carrier, the second information indicates channel information on the second carrier, the channel information on the second carrier includes an MCS and/or spectrum efficiency on the second carrier, and the channel information on the second carrier is determined based on the channel information on the first carrier.

It should be noted that the channel information on the first carrier and the channel information on the second carrier are shared channel information. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

The second information indicates that the terminal device carries a downlink data channel PDSCH or an uplink data channel PUSCH on the second carrier and that the terminal device may receive downlink data or send uplink data on the corresponding second carrier.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates the channel information on the first carrier and the second carrier. In this implementation, cross-carrier scheduling may also be performed on the transmission resource on the second carrier based on the channel information on the first carrier.

With reference to the seventh aspect, in some implementations of the seventh aspect, a processing unit is used by the network device to determine the channel information on the first carrier based on the first information; and used by the network device to determine the channel information on the second carrier based on the channel information on the first carrier.

In this implementation, the network device sequentially determines the channel information on the first carrier and the channel information on the second carrier, to subsequently schedule the transmission resource on

the first carrier and/or the transmission resource on the second carrier.

With reference to the seventh aspect, in some implementations of the seventh aspect, the transceiver unit is further used by the network device to receive third information from the terminal device, where the third information indicates first association information, and the first association information indicates channel difference information between the first carrier and the second carrier; and the processing unit is used by the network device to determine the channel information on the second carrier based on the first association information and the first information. In this implementation, the network device further determines the channel information on the second carrier by using the first information (the channel information on the first carrier) in combination with the third information (the channel difference information between the first carrier and the second carrier), so that accuracy of the channel information on the second carrier can be ensured.

The first association information may include a path loss difference, a historical MCS correspondence and/or a historical spectrum-efficiency correspondence, and the like between the first carrier and the second carrier.

For example, if an RSRP on the first carrier is X dBm, and an RSRP on the second carrier is Y dBm, the path loss difference between the carriers is $\Delta$=Y-X. In this case, with reference to a case in which the channel information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, the MCS used on the second carrier is V1; or when the MCS used on the first carrier is U2, the MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is $\Delta$ dB. With reference to a case in which each MCS on the first carrier is U, the network device further learns that the MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

By way of example but not limitation, the network device may send fourth information to the terminal device.

Accordingly, the terminal device receives the fourth indication information from the network device.

The fourth information is for scheduling the transmission resources on both the first carrier and the second carrier.

For example, the fourth information indicates the channel information on the first carrier and the second carrier. That is, the terminal device communicates resources on the first carrier and the second carrier based on the fourth information.

Optionally, the fourth information includes the channel information on the first carrier. For example, after determining the channel information on the first carrier based on the first information, the network device determines the updated second association information with reference to the first association information between the plurality of carriers, and sends the second association information to the terminal device. Then, when sending the fourth information to schedule the transmission resources on the first carrier and the second carrier, the network device may send the channel information on the first carrier to the terminal device. The terminal device obtains the channel information on the second carrier from the second association information based on the channel information on the first carrier, and communicates the resources on both the first carrier and the second carrier.

In this implementation, a diversified scheduling requirement of communication can be implemented, the channel information on the second carrier can be obtained based on the channel information on the first carrier, and a transmission rate before the channel information is fed back on the second carrier can be improved, so that system transmission performance can be improved.

According to an eighth aspect, a wireless communication apparatus is provided, and includes: a transceiver unit, used by a network device to send channel information on a first carrier and second association information to a terminal device, where the channel information on the first carrier includes a modulation and coding scheme MCS and/or spectrum efficiency on the first carrier, the second association information indicates channel difference information between the first carrier and a second carrier, the channel information on the first carrier and the second association information are for determining channel information on the second carrier, and the channel information on the second carrier includes an MCS and/or spectrum efficiency on the second carrier.

It should be noted that the channel information

on the first carrier and the channel information on the second carrier are shared channel information. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

Second information indicates that the terminal device carries a downlink data channel PDSCH or an uplink data channel PUSCH on the second carrier and that the terminal device may receive downlink data or send uplink data on the corresponding second carrier.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates the channel information on the first carrier and the second carrier. In this implementation, cross-carrier scheduling may also be performed on the transmission resource on the second carrier based on the channel information on the first carrier.

With reference to the eighth aspect, in some implementations of the eighth aspect, the transceiver unit is further used by the network device to send second information to the terminal device, where the second information is for scheduling a transmission resource on the second carri er.

With reference to the eighth aspect, in some implementations of the eighth aspect, the transceiver unit is further used by the network device to receive first information from the terminal device on the first carrier; and used by the network device to determine the channel information on the first carrier based on the first information.

With reference to the eighth aspect, in some implementations of the eighth aspect, the transceiver unit is further used by the network device to receive third information from the terminal device, where the third information indicates first association information, and the first association information indicates channel difference information that is between the first carrier and the second carrier and that is not updated; and a processing unit is used by the network device to determine the second association information based on the first association information.

In this implementation, the second association information is updated based on the first association information. It may be understood as that the second association information is determined by the network device based on a current system resource allocation status, and adaptability and flexibility are better.

The first association information may include a path loss difference, a historical MCS correspondence and/or a historical spectrum-efficiency correspondence, and the like between the first carrier and the second carrier.

For example, if an RSRP on the first carrier is X dBm, and an RSRP on the second carrier is Y dBm, the path loss difference between the carriers is $\Delta$=Y-X. In this case, with reference to a case in which the channel information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, the MCS used on the second carrier is V1; or when the MCS used on the first carrier is U2, the MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is $\Delta$ dB. With reference to a case in which each MCS on the first carrier is U, the network device further learns that the MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The

terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

With reference to the seventh aspect or the eighth aspect, in some implementations, at least one of the first association information or the second association information includes one or more of the following information: a propagation path loss difference, an antenna efficiency difference, an optimal-beam difference, an MCS correspondence, and a spectrum efficiency correspondence.

With reference to the seventh aspect or the eighth aspect, in some implementations, a value range of real-time spectrum efficiency on the second carrier is [0.8*W*, 1.1*W*], and W satisfies:

$$W = \log_2(1 + 10^{\Delta/10}(2^z - 1))$$

where Δ is the propagation path loss difference between the second carrier and the first carrier, and Z is spectrum efficiency corresponding to an index U of a real-time MCS on the first carrier.

For example, the spectrum efficiency on the second carrier may alternatively be any value in 0.6W to 1.2W. Accordingly, a value range of an index of a real-time MCS on the second carrier may be [*V* - 2, *V* +1], and V corresponds to the real-time spectrum efficiency W.

Optionally, a value range of the spectrum efficiency on the second carrier is [0.7*W*, 1.2*W*], [0.6*W*, 1.0*W*], or the like.

It should be noted that the value range of the spectrum efficiency on the second carrier is merely an example for description, and should not constitute any limitation on the technical solutions in this application.

With reference to the seventh aspect or the eighth aspect, in some implementations, the propagation path loss difference Δ between the first carrier and the second carrier satisfies:

$$\Delta = 10\log_{10}((2^W - 1)/(2^Z - 1))$$

where W is spectrum efficiency corresponding to an MCS index V on the second carrier, and Z is the spectrum efficiency corresponding to the MCS index U on the first carrier.

With reference to the seventh aspect or the eighth aspect, in some implementations, the first information includes one or more of the following information: a reference signal received power RSRP on the first carrier, reference signal received quality RSRQ on the first carrier, a channel quality indication CQI on the first carrier, a sounding reference signal SRS on the first carrier, acknowledgement ACK or negative acknowledgement NACK information of a communication device on the first carrier, and information indicating whether the communication device successfully demodulates information on the first carrier.

By way of example but not limitation, the network device may send fourth information to the terminal device.

Accordingly, the terminal device receives the fourth indication information from the network device.

The fourth information is for scheduling the transmission resources on both the first carrier and the second carrier.

For example, the fourth information indicates the channel information on the first carrier and the second carrier. That is, the terminal device communicates resources on the first carrier and the second carrier based on the fourth information.

Optionally, the fourth information includes the channel information on the first carrier. For example, after determining the channel information on the first carrier based on the first information, the network device determines the updated second association information with reference to the first association information between the plurality of carriers, and sends the second association information to the terminal device. Then, when sending the fourth information to schedule the transmission resources on the first carrier and the second carrier, the network device may send the channel information on the first carrier to the terminal device. The terminal device obtains the channel information on the second carrier from the second association information based on the channel information on the first carrier, and communicates the resources on both the first carrier and the second carrier.

In this implementation, a diversified scheduling requirement of communication can be implemented, the channel information on the second carrier can be obtained based on the channel information on the first carrier, and a transmission rate before the channel information is fed back on the second carrier can be improved, so that system transmission performance can be improved.

According to a ninth aspect, a terminal device is provided, and includes a processor. Optionally, the terminal device further includes a memory. The processor is configured to control a transceiver to send and receive signals. The memory is configured to store a computer program. The processor is configured to invoke the computer program from the memory and run the computer program, to enable the terminal device to perform the method according to any one of the first aspect or the possible implementations of the first aspect, or enable the terminal device to perform the method according to any one of the second aspect or the possible implementations of the second aspect.

Optionally, there are one or more processors, and there are one or more memories.

Optionally, the memory may be integrated with the processor, or the memory and the processor are separately disposed.

Optionally, the terminal device further includes the transceiver. The transceiver may be specifically a transmitter and a receiver.

According to a tenth aspect, a network device is provided, and includes a processor. Optionally, the network device further includes a memory. The processor is configured to control a transceiver to send and receive signals. The memory is configured to store a computer program. The processor is configured to invoke the computer program from the memory and run the computer program, to enable the network device to perform the method according to any one of the third aspect or the possible implementations of the third aspect, or enable the network device to perform the method according to any one of the fourth aspect or the possible implementations of the fourth aspect.

Optionally, there are one or more processors, and there are one or more memories.

Optionally, the memory may be integrated with the processor, or the memory and the processor are separately disposed.

Optionally, the network device further includes the transceiver. The transceiver may be specifically a transmitter (transmitter) and a receiver (receiver).

According to an eleventh aspect, a communication apparatus is provided, and includes modules or units configured to implement the method according to any one of the first aspect or the possible implementations of the first aspect, modules or units configured to implement the method according to any one of the second aspect or the possible implementations of the second aspect, modules or units configured to implement the method according to any one of the third aspect or the possible implementations of the third aspect, or modules or units configured to implement the method according to any one of the fourth aspect or the possible implementations of the fourth aspect.

According to a twelfth aspect, a communication system is provided, and includes: a terminal device, configured to perform the method according to any one of the first aspect or the possible implementations of the first aspect, or configured to perform the method according to any one of the second aspect or the possible implementations of the second aspect; and a network device, configured to perform the method according to any one of the third aspect or the possible implementations of the third aspect, or configured to perform the method according to any one of the fourth aspect or the possible implementations of the fourth aspect.

According to a thirteenth aspect, a computer-readable storage medium is provided. The computer-readable storage medium stores a computer program or code. When the computer program or the code is run on a computer, the computer is enabled to perform the method according to any one of the first aspect or the possible implementations of the first aspect, the method according to any one of the second aspect or the possible implementations of the second aspect, the method according to any one of the third aspect or the possible implementations of the third aspect, and the method according to any one of the fourth aspect or the possible implementations of the fourth aspect.

According to a fourteenth aspect, a chip is provided, and includes at least one processor. The at least one processor is coupled to a memory. The memory is configured to store a computer program. The processor is configured to invoke the computer program from the memory and run the computer program, to enable a terminal device installed with the chip system to perform the method according to any one of the first aspect or the possible implementations of the first aspect, or enable a terminal device installed with the chip system to perform the method according to any one the second aspect or the possible implementations of the second aspect; and enable a network device installed with the chip system to perform the method according to any one of the third aspect or the possible implementations of the third aspect, or enable a network device installed with the chip system to perform the method according to any one of the fourth aspect or the possible implementations of the fourth aspect.

The chip may include an output circuit or interface configured to send information or data, and an input circuit or interface configured to receive information or data.

According to a fifteenth aspect, a computer program product is provided. The computer program product includes computer program code. When the computer program code is run by a terminal device, the terminal device is enabled to perform the method according to any one of the first aspect or the possible implementations of the first aspect, or the terminal device is enabled to perform the method according to any one of the second aspect or the possible implementations of the second aspect. In addition, when the computer program code is run by a network device, the network device is enabled to perform the method according to any one of the third aspect or the possible implementations of the third aspect, or the network device is enabled to perform the method according to any one of the fourth aspect or the possible implementations of the fourth aspect.

According to the solutions in embodiments of this application, the wireless communication method and the communication apparatus are provided. The terminal device explicitly or implicitly sends auxiliary information on the first carrier to the network device, and the network device estimates the channel information on the second carrier based on the obtained auxiliary information or with reference to a difference between the multi-carrier shared channel information or multi-carrier historical information, to schedule the terminal device to communicate the resource on the second carrier. In this method, the MCS on the another carrier on which the channel information is not fed back is obtained based on an MCS on a carrier, transmission efficiency before channel-related information is fed back on the another carrier is improved, and the system transmission performance is improved.

## BRIEF DESCRIPTION OF DRAWINGS

FIG. 1 is a schematic diagram of an example of a communication system used in this application;

FIG. 2 is a schematic diagram of an example of a wireless communication method applicable to this application;

FIG. 3 is a schematic diagram of another example of a wireless communication method applicable to this application;

FIG. 4 is a schematic diagram of another example of a wireless communication method applicable to this application;

FIG. 5 is a schematic diagram of still another example of a wireless communication method applicable to this application;

FIG. 6 is a schematic diagram of still another example of a wireless communication method applicable to this application;

FIG. 7 is a schematic diagram of still another example of a wireless communication method applicable to this application;

FIG. 8 is a schematic diagram of still another example of a wireless communication method applicable to this application;

FIG. 9 is a schematic diagram of still another example of a wireless communication method applicable to this application;

FIG. 10 is a schematic diagram of an example of a method that is for completing initial access by UE and that is applicable to this application;

FIG. 11 is a schematic diagram of another example of a method that is for completing initial access by UE and that is applicable to this application;

FIG. 12 is a schematic diagram of an example of a wireless communication apparatus used in this application; and

FIG. 13 is a schematic diagram of another example of a wireless communication apparatus used in this application.

## DESCRIPTION OF EMBODIMENTS

The following describes technical solutions in this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WIMAX) communication system, a future fifth generation 5G system, or a new radio (new radio, NR) system, or may be extended to similar wireless communication systems such as wireless fidelity (wireless fidelity, Wi-Fi) and a cellular system related to the 3rd generation partnership project (3rd generation partnership project, 3GPP).

Generally, a conventional communication system supports a limited quantity of connections, and is easy to implement. However, with development of communication technologies, a mobile communication system supports conventional communication, and further supports, for example, device to device (device to device, D2D) communication, machine to machine (machine to machine, M2M) communication, machine type communication (machine type communication, MTC), vehicle to everything (vehicle to everything, V2X) communication, for example, vehicle to vehicle (vehicle to vehicle, V2V) communication, vehicle to infrastructure (vehicle to infrastructure, V2I) communication, vehicle to pedestrian (vehicle to pedestrian, V2P) communication, and vehicle to network (vehicle to network, V2N) communication, long term evolution-vehicle (long term evolution-vehicle, LTE-V), an internet of things (Internet of Things, IoT), an industrial internet, and long term evolution-machine (long term evolution-machine, LTE-M).

It should be understood that the technical solutions in embodiments of this application may be further applied to various communication systems that are based on a non-orthogonal multiple access technology, for example, a sparse code multiple access (sparse code multiple access, SCMA) system. Certainly, SCMA may also have another name in the communications field. Further, the technical solutions in embodiments of this application may be applied to a multi-carrier transmission system using the non-orthogonal multiple access technology, for example, an orthogonal frequency division multiplexing (orthogonal frequency division multiplexing, OFDM) system, a filter bank multi-carrier (filter bank multi-carrier, FBMC) system, a generalized frequency division multiplexing (generalized frequency division multiplexing, GFDM) system, or a filtered-orthogonal frequency division multiplexing (filtered-OFDM, F-OFDM) system that uses the non-orthogonal multiple access technology.

For ease of understanding the technical solutions in this application, FIG. 1 is a schematic diagram of a communication system 100 used in an embodiment of this application. As shown in FIG. 1, the communication system may include at least one network device, for example, a network device 101. The communication system may further include at least one terminal device, for example, terminal devices 102 to 107. The terminal devices 102 to 107 may be mobile or fixed. The network device 101 may communicate with one or more of the terminal devices 102 to 107 through a radio link. That is, the network device may send a signal to the terminal device, and the terminal device may also send a signal to the network device. For example, each network device may provide communication coverage for a specific geographical area, and may communicate with a terminal device located in the coverage area. For example, the network device may send configuration information to the terminal device, and the terminal device may send uplink data to the network device based on the configuration information. For another example, the network device may send downlink data to the terminal device. Therefore, the communication system consists of the network device 101 and the terminal devices 102 to 107 in FIG. 1.

Optionally, the terminal devices may alternatively directly communicate with each other. For example, direct communication between the terminal devices may be implemented using a D2D technology or the like. As shown in FIG. 1, direct communication may be performed between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. In one aspect, direct communication with the network device 101 may be performed. For example, the terminal devices 105 and 106 in the figure may directly communicate with the network device 101. In addition, indirect communication with the network device 101 may be performed. For example, the terminal device 107 in the figure communicates with the network device 101 via the terminal device 105.

It should be understood that FIG. 1 shows one network device, a plurality of terminal devices, and communication links between the communication apparatuses. Optionally, the communication system 100 may include a plurality of network devices, and coverage of each network device may include another quantity of terminal devices, for example, more or fewer terminal devices. This is not specifically limited in this application.

A plurality of antennas may be configured for the foregoing communication apparatuses, for example, the network device 101 and the terminal devices 102 to 107 in FIG. 1. The plurality of antennas may include at least one transmit antenna for sending a signal and at least one receive antenna for receiving a signal. In addition, the communication apparatus further additionally includes a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving. Therefore, the network device and the terminal device may communicate with each other by using a multiple-antenna technology.

Optionally, the wireless communication system 100 may further include other network entities such as a network controller and a mobility management entity. This is not specifically limited in this application.

It should be further understood that FIG. 1 is merely a simplified schematic diagram of an example for ease of understanding. The communication system 100 may further include another network device or another terminal device that is not shown in FIG. 1.

It should be noted that embodiments of this application use signal transmission as a background, and are also applicable to a homogeneous-network scenario, a heterogeneous-network scenario, a low-frequency scenario (sub 6G), a high-frequency scenario (above 6G), terahertz, optical communication, a frequency division duplex (frequency division duplex, FDD) system, a time division duplex (time division duplex, TDD) system, and a non-terrestrial network (non-terrestrial network, NTN), for example, satellite communication. In addition, a transmission point is not limited in this application, and coordinated multipoint transmission or the like between macro base stations, between micro base stations, between a macro base station and a micro base station may be implemented. In addition, embodiments of this application are applicable to communication between a base station and a terminal, communication between terminals, and communication between base stations, and are further applicable to a central unit (central unit, CU) or distributed unit (distributed unit, DU) architecture, a CP/UP split architecture, and the like.

Embodiments of this application are applicable to the beam-based multicarrier communication system shown in FIG. 1, for example, an NR system. The system includes uplink (from the terminal device to the network device) and downlink (from an access network device to the terminal device) communication in the communication system. According to a long term evolution LTE/NR protocol, the uplink communication includes transmission of an uplink physical channel and an uplink signal, and the downlink communication includes transmission of a downlink physical channel and a downlink signal. The uplink physical channel includes a random access channel (random access channel, PRACH), an uplink control channel (physical uplink control channel, PUCCH), an uplink data channel (physical uplink shared channel, PUSCH), and the like. The uplink signal includes: a sounding reference signal SRS, an uplink control channel demodulation reference signal (PUCCH demodulation reference signal, PUCCH-DMRS), an uplink data channel demodulation reference signal (PUSCH demodulation reference signal, PUSCH-DMRS), an uplink phase noise tracking signal (phase noise tracking reference signal, PTRS), an uplink positioning signal, and the like. The downlink physical channel includes a broadcast channel (physical broadcast channel, PBCH), a downlink control channel PDCCH, a downlink data channel PDSCH, and the like. The downlink signal includes a primary synchronization signal (primary synchronization signal, PSS), a secondary synchronization signal (secondary synchronization signal, SSS), a downlink control channel demodulation reference signal (PDCCH demodulation reference signal, PDCCH-DMRS), a downlink data channel demodulation reference signal (PDSCH demodulation reference signal, PDSCH-DMRS), a phase noise tracking signal (phase tracking reference signal, PTRS), a channel state information reference signal (channel state information reference signal, CSI-RS), a cell signal (cell reference signal, CRS), a fine synchronization signal (time/frequency tracking reference signal, TRS), a positioning reference signal (positioning RS), and the like. This is not specifically limited in this application.

It should be understood that the technical solutions provided in this application are mainly applied to a 5G NR multi-carrier system, and are further applied to another or future communication system, for example, a sixth generation mobile communication system. This is not limited in this application.

In embodiments of this application, a terminal device may be referred to as user equipment (user equipment, UE), an access terminal, a subscriber unit, a subscriber station, a mobile station, a remote station, a remote terminal, a mobile device, a user terminal, a terminal, a wireless communication device, a user agent, a user apparatus, a soft terminal, or the like, and includes various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

The terminal device in embodiments of this application may alternatively be a mobile phone (mobile phone), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld terminal, a notebook computer, a cordless phone (cordless phone), a wireless local loop (wireless local loop, WLL) station, a terminal device in a future 5G network, a terminal device in a future evolved public land mobile network (public land mobile network, PLMN), or the like.

In addition, the terminal device may alternatively be a terminal device in an internet of things (internet of things, IoT) system. The IoT is an important component of future information technology development. A main technical feature of the IoT is to connect things to a network by using a communication technology, to implement a smart network for human-machine interconnection and thing-thing interconnection. It should be understood that a specific form of the terminal device is not limited in this application.

In addition, the terminal device may further include sensors such as an intelligent printer, a train detector, and a gas station, and main functions include: collecting data (which is a function of some terminal devices), receiving control information and downlink data of a network device, emitting an electromagnetic wave, and transmitting uplink data to the network device.

In embodiments of this application, the network device may be an apparatus that is deployed in a radio access network and that provides a wireless communication function for the terminal device, and may be a device configured to communicate with the terminal device or a chip of the device. The network device includes but is not limited to: a radio network controller (radio network controller, RNC), a base station controller (base station controller, BSC), a home base station (for example, home evolved NodeB, or home NodeB, HNB), a baseband unit (baseband unit, BBU), an access point (access point, AP) in a wireless fidelity system, a radio relay node, a radio backhaul node, a transmission point (transmission point, TP), a transmission reception point (transmission reception point, TRP), or the like, may be a gNB or a transmission point TRP or TP in a 5G NR system, or one or a group (including a plurality of antenna panels) of antenna panels of a base station in the 5G system, or may be a network node that the gNB or the transmission point consists of, for example, the baseband unit BBU or a distributed unit (distributed unit, DU).

The network device in embodiments of this application may include various forms of macro base stations, micro base stations (which are also referred to as small cells), relay stations, access points, and the like, and may be a base transceiver station (Base Transceiver Station, BTS) in a global system for mobile communications GSM system or code division multiple access CDMA, may be a NodeB (NodeB, NB) in a wideband code division multiple access WCDMA system, may be an evolved NodeB (Evolved NodeB, eNB or eNodeB) in the LTE system, or may be a radio controller in a cloud radio access network (Cloud Radio Access Network, CRAN) scenario. Alternatively, the network device may be a relay

station, an access point, a wearable device, a vehicle-mounted device, a network device in the future 5G network, a network device in the future evolved public land mobile network PLMN network, or the like.

In some network deployments, the network device may include a central unit (central unit, CU) and a distributed unit (distributed unit, DU). The network device may further include a radio unit (radio unit, RU) and an active antenna unit (active antenna unit, AAU). The CU implements some functions of the network device. For example, the CU is responsible for processing non-real-time protocols and services, and implements functions of a radio resource control RRC layer and a packet data convergence protocol (packet data convergence protocol, PDCP) layer. The DU implements some functions of the network device. For example, the DU is responsible for processing physical layer protocols and real-time services, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered as being sent by the DU or sent by the DU and the AAU. It may be understood that the network device may be a CU node, a DU node, or a device including the CU node and the DU node. In addition, the CU may be classified as a network device in the radio access network RAN, or the CU may be classified as a network device in a core network CN. This is not limited herein.

The network device provides a service for a cell. The terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and a low transmit power, and are applicable to providing a high-rate data transmission service.

Alternatively, the network device may be a positioning service center, for example, an evolved serving mobile location center (evolved serving mobile location center, E-SMLC) or a location management function (location management function, LMF). The positioning service center is for measurement information and location information of a mobile phone network device and the terminal device. The positioning service center is further responsible for performing location resolution on a measurement result of the terminal device, to determine a location of the terminal device. Information exchange between the terminal device and the positioning service center may be implemented by using an LTE positioning protocol (LTE positioning protocol) or an NR positioning protocol (NR positioning protocol). Interaction between the network device and a positioning center is implemented by using an LTE positioning protocol A (LTE positioning protocol A, LPPa) or an NR positioning protocol A (NR positioning protocol A, NRPPa).

In embodiments of this application, the network device and the terminal device each include a radio resource control RRC signaling exchange module, a media access control (media access control, MAC) signaling exchange module, and a physical (physical, PHY) signaling exchange module. The RRC signaling exchange module may be a module used by the network device and the terminal device to send and receive RRC signaling. The MAC signaling exchange module may be a module used by the network device and the terminal device to send and receive media access control control element (media access control control element, MAC CE) signaling. The PHY layer signaling and data exchange module may be a module used by the network device and the terminal device to send and receive uplink control signaling or downlink control signaling, and uplink data or downlink data.

Currently, compared with a C-band (C-band), a low and medium frequency FDD spectrum may provide better coverage. Therefore, with demand for an increasing network capacity, a frequency division duplex FDD spectrum resource is widely used.

However, an FDD spectrum currently owned by an operator is quite discrete. For example, it is found through statistics that available spectrum information of 63 operators on 1.4 to 2.6G is scattered. Bandwidths of 95% of single carriers are not greater than 30 MHz, and 93% of the operators own at least two FDD carriers.

Although these FDD carriers are discrete, an aggregation bandwidth thereof is quite high when these discrete spectrums are combined. Through a comparison between the aggregation bandwidth of the FDD carriers and a bandwidth of a C-band TDD carrier, it can be observed that the aggregated FDD carriers may provide a downlink bandwidth similar to that of the C-band TDD carrier and an uplink bandwidth that is 2.4 times that of the C-band TDD carrier.

Therefore, a carrier aggregation CAtechnology is introduced to implement FDD carrier aggregation, to support a higher transmission bandwidth, increase spectrum usage of the user equipment UE, and improve user experience.

It should be understood that carrier aggregation is to aggregate two or more component carriers (component carriers, CCs) together to support the higher transmission bandwidth. A carrier to which the terminal device performs random access is referred to as a primary component carrier (primary carrier component, PCC). A cell corresponding to the primary component carrier is a primary cell (primary cell, PCell). The primary cell maintains

a radio resource control RRC connection to the terminal device. The primary cell may include one downlink carrier and one uplink carrier. A carrier other than the primary component carrier is referred to as a secondary component carrier (secondary carrier component, SCC). A cell corresponding to the secondary component carrier is a secondary cell (secondary cell, SCell), and is for providing an additional radio resource. There is no RRC communication between the SCell and the terminal device. The secondary cell may include one downlink carrier. It should be noted that the PCell is determined when the connection is established. The SCell is added, modified, or released by using an RRC connection reconfiguration message after an initial security activation procedure.

Actually, each component carrier corresponds to one independent cell. One component carrier may usually be equivalent to one cell. Aggregated cells are classified into the PCell and the SCell. The terminal device performs functions such as basic RRC communication and radio link management (radio link management, RLM) in the PCell, and the SCell is mainly for increasing a transmission bandwidth of the terminal device.

In embodiments of this application, meanings of the carrier and the component carrier may be understood as the same. A CA function may support aggregation of contiguous or non-contiguous carriers. To efficiently use fragmented spectrums, the carrier aggregation supports aggregation of different component carriers, specifically including aggregation of component carriers with a same bandwidth or different bandwidths, aggregation of adjacent or non-adjacent component carriers in a same band, and aggregation of component carriers in different bands. In other words, carrier aggregation scenarios may be classified into three types: intra-band contiguous carrier aggregation, intra-band non-contiguous carrier aggregation, and inter-band non-contiguous carrier aggregation.

In addition, in this application, a manner in which one cell includes a plurality of uplink carriers and/or a plurality of downlink carriers may be further used to support the higher transmission bandwidth. In this case, the cell and the carriers are no longer in a one-to-one correspondence. That is, one cell may include a plurality of bands (bands), and may be divided into a plurality of carriers. In other words, the plurality of carriers belong to a same cell. In embodiments of this application, one cell may include one carrier, or may include a plurality of carriers. This is not specifically limited in this application. The technical solutions are described based on a carrier in embodiments of this application.

To save energy of the terminal device, currently, after a plurality of SCells are configured for the terminal device, the SCells are not always in an activated state, but are in a deactivated state. The terminal device activates the SCells only when there is big data to be communicated.

A common SCell activation process in multi-carrier aggregation may include: First, the network device sends a radio access control control element (media access control control element, MAC-CE) for activating the SCell to the terminal device. Then, the terminal device sends a hybrid automatic repeat request (hybrid automatic repeat request, HARQ). In addition, the terminal device starts to wait for the first synchronization signal block (synchronization signal block, SSB) in the SCell to perform time-frequency synchronization. After the time-frequency synchronization, the terminal device waits for a CSI-RS to perform channel measurement. Finally, the terminal device sends a channel state information reference signal report CSI-RS report to the network device. That is, an SCell activation procedure is completed. A delay of the SCell activation process usually needs at least 30 ms.

If the SCell activation steps are simplified, the delay can be reduced to at least 10 ms. Compared with the foregoing common activation process, a main difference lies in that the terminal device does not need to wait for the SSB in the SCell to perform time-frequency synchronization, but the network device directly sends a temporary reference signal (temporary reference signal, temporary RS) to the terminal device for the time-frequency synchronization.

In addition, to save the energy of the terminal device, on a single carrier in NR, the transmission bandwidth of the terminal device can dynamically change based on bandwidth part (bandwidth part, BWP) switching.

For example, the network device configures two BWP configurations for the terminal device on a single carrier with a bandwidth of 100 MHz. A bandwidth of one BWP configuration is 100 MHz, and a bandwidth of the other BWP configuration is 20 MHz. When communicated data is small, the terminal device may use the BWP configuration with the bandwidth of 20 MHz. When big data needs to be communicated, the network device sends downlink control information DCI to the terminal device, where the DCI indicates the terminal device to perform handover to use the BWP configuration with the bandwidth of 100 MHz. A delay of a handover process in this implementation is approximately 1 to 2 ms.

It can be found that the delay of the BWP switching on the single carrier in the NR is less than the delay of the SCell activation in the multi-carrier CA. A reason thereof is that a prerequisite for using a spectrum on the single carrier based on a BWP is that different frequencies of the single carrier share same time-frequency synchronization and channel information. Therefore, synchronization and channel measurement do not need to be performed again. On the contrary, due to a shared-channel-information difference between a plurality of carriers, time-frequency synchronization and channel information measurement need to be performed again.

In conclusion, compared with the manner in which the single carrier in the NR uses the spectrum based on the BWP, the CA-based SCell activation and deactivation manner has a longer delay, which causes

lower multi-carrier spectrum usage efficiency. In addition, for different carriers, although time-frequency synchronization may be implemented through sharing of a clock source and calibration, shared channel information cannot be completely the same due to a propagation path loss difference and an antenna efficiency difference between different frequencies. Further, system transmission performance is affected.

In other words, when a spectrum resource is used with a low delay, there is no solution currently to a problem that shared channel information is different on the plurality of carriers. Therefore, how to efficiently use the spectrum with the low delay and improve the system transmission performance is an urgent problem to be resolved.

In view of this, this application provides a wireless communication method and apparatus. A terminal device explicitly or implicitly sends auxiliary information on a first carrier to a network device. The network device estimates channel information on a second carrier based on the auxiliary information on the first carrier. Alternatively, the network device sends updated second association information to the terminal device based on the auxiliary information on the first carrier and first association information between a plurality of carriers that are reported by the terminal device, and the terminal device determines channel information on a second carrier. According to the method, spectrum usage efficiency can be improved, the channel information on the second carrier can be obtained based on channel information on the first carrier, and a transmission rate before the channel information is fed back on the second carrier can be improved, so that system transmission performance can be improved.

For ease of understanding embodiments of this application, the following points are described.

In embodiments of this application, unless otherwise stated or there is a logic conflict, terms and/or descriptions between different embodiments are consistent and may be mutually referenced, and technical features in the different embodiments may be combined based on an internal logical relationship thereof, to form a new embodiment.

In this application, "at least one" refers to one or more, and "a plurality of" refers to two or more. "And/or" describes an association relationship between associated objects, and represents that three relationships may exist. For example, A and/or B may represent the following cases: Only A exists, both A and B exist, and only B exists, where A and B may be singular or plural. In the descriptions of this application, the character "/" usually indicates an "or" relationship between the associated objects. "At least one of the following" or a similar expression thereof refers to any combination of these items, including a singular item or any combination of plural items. For example, at least one of a, b, and c may indicate a, b, c, a and b, a and c, b and c, or a, b, and c. Each of a, b, and c may be in a singular form or a plural form.

In embodiments of this application, "first", "second", and various numbers are merely for differentiation for ease of description, and are not for limiting the scope of embodiments of this application, for example, are for differentiating between different indication information.

In embodiments of this application, definition in a protocol may be implemented by pre-storing corresponding code or a corresponding table in a device (for example, a terminal device or a network device) or in another manner that can indicate related information. A specific implementation thereof is not limited in this application. A "protocol" in embodiments of this application may be a standard protocol in the communications field, and may include, for example, an LTE protocol, an NR protocol, and a related protocol applied to a future communication system. This is not limited in this application.

In embodiments of this application, descriptions such as "when" and "in a case" all mean that a device (for example, the terminal device or the network device) performs corresponding processing in an objective situation, and are not intended to limit time, and the device (for example, the terminal device or the network device) is not required to perform a determining action during implementation; and do not mean any other limitation.

In embodiments of this application, "indicate" may include "directly indicate" and "indirectly indicate". When a piece of indication information is described as indicating A, the indication information may directly indicate A or indirectly indicate A, but it does not indicate that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application. The sending periodicities and/or the sending occasions of the sub-information may be predefined, for example, pre-defined according to a protocol, or may be configured by a transmitting end device by sending configuration information to a receiving end device. The configuration information may be, for example, but is not limited to one or a combination of at least two of radio resource control signaling, media access control MAC layer signaling, and physical PHY layer signaling. The radio resource control signaling includes RRC signaling, the MAC layer signaling includes a MAC CE, and the physical PHY layer signaling includes downlink control information DCI and the like.

In embodiments of this application, "wireless communication" may be referred to as "communication" for short. "Communication" may further be described as "data transmission", "information transmission", "data processing", and the like. "Transmission" includes "sending" and "receiving". This is not specifically limited in this

application.

To better understand the technical solutions, the following first briefly describes some terms in this application.

1. A carrier refers to a segment of contiguous spectrums, and may be an uplink carrier, a downlink carrier, or a flexible carrier. The flexible carrier is both an uplink carrier and a downlink carrier. UE may communicate uplink information on the uplink carrier, and communicate downlink information on the downlink carrier.
2. A band (band) refers to a segment of contiguous spectrums, and may be divided into a plurality of carriers.
3. A cell refers to a logical entity. Each cell has a cell ID. Broadcast information configured for the cell is usually carried on a downlink carrier in the cell. A cell may include a downlink carrier and/or an uplink carrier. UE may access the cell, and communicate uplink information on the uplink carrier in the cell, and/or communicate downlink information on the downlink carrier in the cell.
4. Shared channel information is channel information that may be shared by two carriers, for example, a path loss and an optimal-beam direction. In embodiments of this application, the shared channel information is channel information that may be shared and that is at a granularity of a carrier.
5. Real-time channel information is current and instantaneous channel information. The channel information may vary rapidly with time, and is, for example, a CQI, an MCS, spectrum efficiency, and an optimal-beam direction. The CQI is an index number of channel information fed back by UE to a base station, and the MCS is an index number of coding and modulation information used when the base station schedules the UE to communicate a PDSCH or a PUSCH. There is a correspondence between an index number in a CQI/MCS table and spectrum efficiency.
6. Historical channel information is channel information that has been recorded before, and includes an MCS and spectrum efficiency.
7. A propagation path loss difference is a path loss difference between different bands. A path loss refers to decrease in power density that occurs when an electromagnetic wave is propagated in space. The path loss may be caused by many factors, such as a free-space loss, and losses and absorption of refraction, diffraction, and reflection.
8. Antenna efficiency difference is an antenna efficiency difference between different bands. Antenna efficiency is a ratio of a radiant power of an antenna to an input power of the antenna, and includes transmitting efficiency and receiving efficiency. The transmitting efficiency is electrical efficiency of converting a radio frequency power received by the antenna into the radiant power by the antenna. The receiving efficiency is a radio wave power intercepted by the antenna.
9. An optimal-beam difference is an optimal-beam difference between different bands. A beam is a specific combination of dipole elements in an antenna array, and is for implementing sending or receiving of a directional signal. An optimal beam indicates a beam that maximizes sending or receiving energy. Because behavior, for example, refraction, diffraction, and reflection, of an electromagnetic wave during propagation in space is related to a band, optimal beams in the different bands may be different.

FIG. 2 is a schematic flowchart of a wireless communication method 200 according to an embodiment of this application. Specific implementation steps include the following steps.

S210: A terminal device sends first information to a network device on a first carrier.

Accordingly, the network device receives the first information from the terminal device.

The first information is for determining channel information on the first carrier, and the channel information on the first carrier includes a modulation and coding scheme MCS and/or spectrum efficiency on the first carrier.

It should be noted that the channel information on the first carrier is shared channel information on the first carrier. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and a second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

For example, the first information includes one or more of the following information: a reference signal received power RSRP on the first carrier, reference signal received quality RSRQ on the first carrier, a channel quality indication CQI on the first carrier, a sounding reference signal SRS on the first carrier, acknowledgement ACK or negative acknowledgement NACK information of a communication device on the first carrier, and information indicating whether the communication device successfully demodulates information on the first carrier.

In a possible implementation, the terminal device sends third information to the network device, where

the third information indicates first association information, and the first association information indicates channel difference information between the first carrier and the second carrier. In this case, channel information on the second carrier is determined based on the first association information and the first information. In this implementation, the network device further determines the channel information on the second carrier by using the first information (the channel information on the first carrier) in combination with the third information (the channel difference information between the first carrier and the second carrier), so that accuracy of the channel information on the second carrier can be ensured.

The first association information may include a path loss difference, a historical MCS correspondence and/or a historical spectrum-efficiency correspondence, and the like between the first carrier and the second carrier.

For example, if the RSRP on the first carrier is X dBm, and an RSRP on the second carrier is Y dBm, the path loss difference between the carriers is $\Delta$=Y-X. In this case, with reference to a case in which the channel information on the first carrier is an MCS V and/or spectrum efficiency V, it may be determined that the channel information on the second carrier includes an MCS W and/or spectrum efficiency W.

For example, the historical MCS correspondence between the first carrier and the second carrier is: When the MCS used on the first carrier is U1, an MCS used on the second carrier is V1; or when the MCS used on the first carrier is U2, an MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, the path loss difference in the first association relationship is $\Delta$ dB. With reference to a case in which each MCS on the first carrier is U, the network device further learns that an MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

In the foregoing possible implementation, at least one of the first association information and second association information may include one or more of the following information: a propagation path loss difference, an antenna efficiency difference, an optimal-beam difference, an MCS correspondence, and a spectrum efficiency correspondence.

S220: The network device sends second information to the terminal device.

Accordingly, the terminal device receives the second information from the network device.

The second information is for scheduling a transmission resource on the second carrier, the second information includes indication information of the channel information on the second carrier, the channel information on the second carrier includes the MCS and/or spectrum efficiency on the second carrier, and the channel information on the second carrier is determined based on the channel information on the first carrier.

It should be noted that the channel information on the second carrier is shared channel information on the second carrier. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, the second information indicates that the terminal device carries a downlink data channel PDSCH or an uplink data channel PUSCH on the second carrier and that the terminal device may receive downlink data or send uplink data on the corresponding second carri er.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates the channel information on the first carrier and the second

carrier. In this implementation, cross-carrier scheduling may also be performed on the transmission resource on the second carrier based on the channel information on the first carrier.

In a possible implementation, before the network device sends the second information to the terminal device, the network device needs to determine the channel information on the second carrier based on the channel information on the first carrier. For example, the network device determines the channel information on the first carrier based on the first information. The network device determines the channel information on the second carrier based on the channel information on the first carrier.

The channel information on the second carrier includes the MCS and/or the spectrum efficiency on the second carrier.

For example, when an MCS index on the first carrier is U, a value range of the spectrum efficiency on the second carrier is [0.8W, 1.1W], and W satisfies:

$$W = \log_2(1 + 10^{\Delta/10}(2^z - 1))$$

where $\Delta$ is the propagation path loss difference between the second carrier and the first carrier, Z is spectrum efficiency corresponding to the MCS index U on the first carrier, a value range of an MCS index on the second carrier is [$V$-2, $V$+1], and V corresponds to the spectrum efficiency W.

For example, the spectrum efficiency on the second carrier may alternatively be any value in 0.6W to 1.2W.

Optionally, a value range of the spectrum efficiency on the second carrier is [0.8$W$, 1.1$W$], [0.7$W$, 1.2$W$], [0.6$W$, 1.0$W$], or the like.

It should be noted that the value range of the spectrum efficiency on the second carrier is merely an example for description, and should not constitute any limitation on the technical solution in this application.

For example, the propagation path loss difference $\Delta$ between the first carrier and the second carrier satisfies:

$$\Delta = 10\log_{10}((2^W - 1)/(2^Z - 1)).$$

In another possible implementation, the network device may send fourth information to the terminal device.

Accordingly, the terminal device receives the fourth indication information from the network device.

The fourth information is for scheduling transmission resources on both the carrier 1 and the carrier 2.

For example, the fourth information indicates the channel information on the first carrier and the second carrier. That is, the terminal device communicates resources on the first carrier and the second carrier based on the fourth information.

Optionally, the fourth information includes the channel information on the first carrier. For example, after determining the channel information on the first carrier based on the first information, the network device determines the updated second association information with reference to the first association information between the plurality of carriers, and sends the second association information to the terminal device. Then, when sending the fourth information to schedule the transmission resources on the first carrier and the second carrier, the network device may send the channel information on the first carrier to the terminal device. The terminal device obtains the channel information on the second carrier from the second association information based on the channel information on the first carrier, and communicates the resources on both the first carrier and the second carrier.

In this implementation, a diversified scheduling requirement of communication can be implemented, the channel information on the second carrier can be obtained based on the channel information on the first carrier, and a transmission rate before the channel information is fed back on the second carrier can be improved, so that system transmission performance can be improved.

In conclusion, the network device obtains, based on the MCS and/or the spectrum efficiency on the first carrier, an MCS and/or spectrum efficiency on another carrier (for example, the second carrier) on which channel information is not fed back, so that the MCS on the another carrier on which the channel information is not fed back is obtained based on an MCS on a carrier, transmission efficiency before channel-related information is fed back on the another carrier is improved, and the system transmission performance is improved.

FIG. 3 is a schematic flowchart of a wireless communication method 300 according to an embodiment of this application. A difference between the method 300 and the method 200 lies in: In this implementation, a network device updates association information between a plurality of carriers that is reported by a terminal device, and sends updated association information between the plurality of carriers to the terminal device. The terminal device determines channel information on a second carrier based on the updated association information in combination with channel information on a first carrier, to schedule a transmission resource on the second carrier. Specific implementation steps include the following steps.

S310: The network device sends the channel information on the first carrier and second association information to the terminal device.

Accordingly, the terminal device receives the channel information on the first carrier and the second association information from the network device.

In this embodiment of this application, the network device and the terminal device each include a radio

resource control RRC signaling exchange module, a media access control MAC signaling exchange module, and a physical PHY signaling exchange module. The RRC signaling exchange module may be a module used by the network device and the terminal device to send and receive RRC signaling. The MAC signaling exchange module may be a module used by the network device and the terminal device to send and receive media access control control element (media access control control element, MAC CE) signaling. The PHY layer signaling and data exchange module may be a module used by the network device and the terminal device to send and receive uplink control signaling or downlink control signaling, and uplink and downlink data or downlink data.

For example, the channel information on the first carrier and the second association information may be carried by using the RRC signaling. This is not specifically limited in this application.

Optionally, the network device determines the channel information on the first carrier and the second association information.

The channel information on the first carrier includes a modulation and coding scheme MCS and/or spectrum efficiency on the first carrier, and the second association information indicates channel difference information between the first carrier and the second carrier.

It should be noted that the channel information on the first carrier is shared channel information on the first carrier. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

In this implementation, a plurality of carriers (for example, the first carrier and the second carrier) may belong to a plurality of cells, namely, carrier aggregation cells. For example, one cell corresponds to one uplink carrier and one downlink carrier, or one cell corresponds to one flexible carrier. Optionally, a plurality of carriers may alternatively belong to a same cell. That is, one cell includes a plurality of bands, and may be divided into a plurality of carriers.

In a possible implementation, the terminal device sends first information to the network device on the first carrier.

Accordingly, the network device receives the first information from the terminal device.

The first information is for determining the channel information on the first carrier.

For example, the first information includes one or more of the following information: a reference signal received power RSRP on the first carrier, reference signal received quality RSRQ on the first carrier, a channel quality indication CQI on the first carrier, a sounding reference signal SRS on the first carrier, acknowledgement ACK or negative acknowledgement NACK information of a communication device on the first carrier, and information indicating whether the communication device successfully demodulates information on the first carrier.

In another possible implementation, the terminal device sends third information to the network device.

Accordingly, the network device receives the third information from the terminal device.

The third information indicates first association information, the first association information is for determining the second association information, and the first association information indicates channel difference information that is between the first carrier and the second carrier and that is not updated.

In this implementation, the second association information is updated based on the first association information. It may be understood as that the second association information is determined by the network device based on a current system resource allocation status, and adaptability and flexibility are better.

For example, if the RSRP on the first carrier is X dBm, and an RSRP on the second carrier is Y dBm, a path loss difference between the carriers is $\Delta$=Y-X. In this case, with reference to a case in which the channel information on the first carrier is an MCS V and/or spectrum efficiency V, it may be determined that the channel information on the second carrier includes an MCS W and/or spectrum efficiency W.

For example, a historical MCS correspondence between the first carrier and the second carrier is: When the MCS used on the first carrier is U1, an MCS used on the second carrier is V1; or when the MCS used on the first carrier is U2, an MCS used on the second carrier is V2. In this case, with reference to a case in which the channel information on the first carrier is an MCS V and/or spectrum efficiency V, it may also be determined that the channel information on the second carrier includes an MCS W and/or spectrum efficiency W.

For example, a path loss difference in the first association relationship is $\Delta$ dB. With reference to a case in which each MCS on the first carrier is U, the network device further learns that an MCS on the second carrier is close to V, for example, from V-2 to V+1, so that an MCS correspondence between the first carrier and the second carrier can be determined. A representation form of the MCS correspondence may be presented by using a table. For example, all MCSs 0 to 27 on the first carrier correspond to MCSs $V_0$ to $V_{27}$ on the second carrier. The terminal device may determine the channel information (for example, the MCS is $V_U$) on the second carrier based on the received channel information (for example, the MCS is U) on the first carrier and the MCS correspondence.

It should be noted that the MCS correspondence in this implementation may be carried by using radio resource control RRC signaling. This is not specifically limited in this application.

In the foregoing possible implementation, at

least one of the first association information or the second association information includes one or more of the following information: a propagation path loss difference, an antenna efficiency difference, an optimal-beam difference, an MCS correspondence, and a spectrum efficiency correspondence.

For example, the propagation path loss difference Δ between the first carrier and the second carrier satisfies:

$$\Delta = 10\log_{10}((2^W - 1)/(2^Z - 1))$$

where W is spectrum efficiency corresponding to an MCS index V on the second carrier, and Z is spectrum efficiency corresponding to the MCS index U on the first carrier.

S320: The terminal device determines the channel information on the second carrier based on the channel information on the first carrier and the second association information.

The channel information on the second carrier includes the MCS and/or spectrum efficiency on the second carrier.

It should be noted that the channel information on the second carrier is shared channel information on the second carrier. Shared channel information may be channel information at a granularity of a carrier, is channel information that may be shared by two carriers, and includes a path loss, an optimal-beam direction, and the like. Real-time channel information is current and instantaneous channel information. The channel information may vary rapidly with time, and is, for example, a CQI, an MCS, spectrum efficiency, and an optimal-beam direction.

For example, a value range of the spectrum efficiency on the second carrier is [0.8*W*, 1.1*W*], and W satisfies:

$$W = \log_2(1 + 10^{\Delta/10}(2^z - 1))$$

where Δ is the propagation path loss difference between the second carrier and the first carrier, Z is the spectrum efficiency corresponding to the MCS index U on the first carrier, a value range of an MCS index on the second carrier is [*V*-2, *V*+1], and V corresponds to the spectrum efficiency W.

For example, the spectrum efficiency on the second carrier may alternatively be any value in 0.6W to 1.2W.

Optionally, a value range of the spectrum efficiency on the second carrier is [0.8*W*, 1.1*W*], [0.7*W*, 1.2*W*], [0.6W, 1.0*W*], or the like.

It should be noted that the value range of the spectrum efficiency on the second carrier is merely an example for description, and should not constitute any limitation on the technical solution in this application.

In a possible implementation, the network device sends second information to the terminal device.

Accordingly, the terminal device receives the second information from the network device, and communicates with the network device by using the transmission resource on the second carrier based on the second information and the channel information on the second carrier.

The second information is for scheduling the transmission resource on the second carri er.

In this implementation, the second information indicates that the terminal device carries a downlink data channel PDSCH or an uplink data channel PUSCH on the second carrier and that the terminal device may receive downlink data or send uplink data on the corresponding second carri er.

For example, that the terminal device receives the second information from the network device may be that the terminal device receives the second information on the first carrier, that the terminal device receives the second information on the second carrier, or that the terminal device receives the second information on another carrier. This is not specifically limited in this application.

For example, the second information may be DCI. When the DCI is carried on the first carrier, the terminal device needs to receive the DCI on the first carrier. In this implementation, overheads of monitoring the DCI by the terminal device can be reduced. Optionally, when the DCI is carried on the second carrier, the terminal device needs to receive the DCI on the second carrier, so that resource occupation of the first carrier can be reduced.

Optionally, the technical solution in this application is also applicable to scheduling both a carrier 1 and a carrier 2. That is, UE communicates resources on both the carrier 1 and the carrier 2. For example, the terminal device receives downlink control information DCI from the network device on the first carrier, where the DCI is for scheduling transmission resources on the first carrier and the second carrier, and the DCI indicates the channel information on the first carrier and the second carrier. In this implementation, cross-carrier scheduling may also be performed on the transmission resource on the second carrier based on the channel information on the first carrier.

In a possible implementation, the network device may send fourth information to the terminal device.

Accordingly, the terminal device receives the fourth indication information from the network device.

The fourth information is for scheduling transmission resources on both the carrier 1 and the carrier 2.

For example, the fourth information includes the channel information on the first carrier and the channel information on the second carrier.

Optionally, the fourth information includes the channel information on the first carrier.

In conclusion, the network device updates the association relationship between the first carrier and the second carrier, and sends the updated association relationship to the terminal device, so that the terminal device can further determine the channel information on the second carrier based on the channel information on the first carrier and the updated association relationship between the carriers, to schedule the transmission resource on the second carrier. An MCS on another carrier on which channel information is not fed back is obtained based on an MCS on a carrier, transmission efficiency before channel-related information is fed back on the another carrier is improved, and system transmission performance is improved.

For ease of understanding embodiments of this application, the following uses a base station and UE as an example to describe the technical solutions provided in this application.

FIG. 4 is a schematic flowchart of a wireless communication method 400 according to an embodiment of this application. In this implementation, a base station explicitly or implicitly obtains a shared-channel-information difference between a plurality of carriers, and estimates, based on auxiliary information on a carrier on which channel information is fed back, a modulation and coding scheme MCS on a carrier on which channel information is not fed back, to perform resource scheduling. Specific implementation steps include the following steps.

S410: UE sends auxiliary information #1 to the base station.

Accordingly, the base station receives the auxiliary information #1 from the UE.

The auxiliary information #1 explicitly or implicitly indicates the shared-channel-information difference between the plurality of carriers (for example, a carrier 1 and a carrier 2).

In this embodiment of this application, the shared-channel-information difference between the plurality of carriers may include a propagation path loss difference and an antenna efficiency difference between different frequencies.

The following provides several implementations of explicit or implicit indication of the auxiliary information #1, which specifically include:

Manner 1 (explicit): The auxiliary information #1 is the shared-channel-information difference between the plurality of carriers of the UE. Specifically, the UE sends the shared-channel-information difference between the plurality of carriers to the base station. Two carriers of the UE are used as an example. It is assumed that the carrier 1 is used as a reference (for example, 0 dB), and a difference between the carrier 2 and the carrier 1 is $\Delta$ dB. In this case, the auxiliary information #1 is $\Delta$ dB, and the base station may directly determine, based on the auxiliary information #1, that the shared-channel-information difference between the carrier 1 and the carrier 2 is $\Delta$ dB.

Manner 2 (implicit): This implementation is for obtaining a shared-channel-information difference in a downlink. That is, the base station sends a request message to the UE, and CSI-RS reports that are on the plurality of carriers and that are fed back by the UE to the base station include reference signal received powers RSRPs or reference signal received quality RSRQ of CSI-RSs. A unit of the RSRP is dBm, and a unit of the RSRQ is dB.

Two carriers of the UE are used as an example. The auxiliary information #1 indicates that an RSRP on the carrier 1 is *X dBm* and that an RSRP on the carrier 2 is *Y dBm.* In this case, the base station may indirectly determine, based on the auxiliary information #1, that the shared-channel-information difference between the carrier 1 and the carrier 2 is $\Delta = Y - X$ .

Manner 3 (implicit): This implementation is for obtaining a shared-channel-information difference in a downlink. That is, the base station sends a request message to the UE, and CSI-RS reports that are on the plurality of carriers and that are fed back by the UE to the base station include channel quality indications CQIs of CSI-RSs. Two carriers of the UE are used as an example. The auxiliary information #1 indicates that a CQI on the carrier 1 is a and that a CQI on the carrier 2 is b. In this case, the base station may separately determine, according to the standard protocol, that spectrum efficiency corresponding to the carrier 1 is $\alpha$ and that spectrum efficiency corresponding to the carrier 2 is $\beta$. Further, in this implementation, the shared-channel-information difference between the carrier 1 and the carrier 2 is $\Delta = 10\log_{10}((2^{\beta}-1)/(2^{\alpha}-1))$.

Manner 4 (implicit): This implementation may be for obtaining a shared-channel-information difference in an uplink or a downlink. The UE separately sends a sounding reference signal SRS to the base station on the plurality of carriers. Two carriers of the UE are used as an example. The auxiliary information #1 indicates that an RSRP of an SRS on the carrier 1 is *x dBm* and that an RSRP of an SRS on the carrier 2 is *ydBm.* In this case, the base station further performs measurement based on the auxiliary information #1, and may indirectly determine that a shared-channel-information difference between the carrier 1 and the carrier 2 in the uplink or the downlink (using reciprocity) is $\Delta = y-x$.

It should be noted that the foregoing possible implementations are merely examples for description, and should not constitute any limitation on the technical solution in this application.

S420: The UE performs transmission on the carrier 1, and sends auxiliary information #2 related to the carrier 1 to the base station.

Accordingly, the base station receives the auxiliary information #2 from the UE.

The auxiliary information #2 may include one or more of an RSRP or RSRQ that is of a CSI-RS and that is included in a CSI-RS report on the carrier 1, a CQI that is of the CSI-RS and that is included in the CSI-RS report

on the carrier 1, the sounding reference signal SRS on the carrier 1, a fed-back acknowledgement ACK or negative acknowledgement NACK information, and information indicating whether uplink data of the UE is successfully demodulated.

S430: The base station determines a real-time (current) MCS on the carrier 1 based on the auxiliary information #2.

Based on the auxiliary information #2 fed back by the UE in step S420, the following several implementations of determining the real-time (current) MCS on the carrier 1 are provided, and include:

Manner 1: This manner is for obtaining a downlink MCS on the carrier 1. The base station determines the real-time (current) MCS on the carrier 1 based on the RSRP or the RSRQ that is of the CSI-RS, that is included in the CSI-RS report on the carrier 1, and that is fed back by the UE.

Manner 2: This manner is for obtaining a downlink MCS on the carrier 1. The CSI-RS report that is on the carrier 1 and that is fed back by the UE includes the CQI of the CSI-RS, and the real-time (current) MCS on the carrier 1 is determined.

Manner 3: This manner may be for obtaining an uplink or downlink MCS on the carrier 1. The base station obtains uplink or downlink (using reciprocity) channel information on the carrier 1 through measurement based on the SRS sent by the UE on the carrier 1, thereby determining the real-time (current) MCS on the carrier 1.

Manner 4: This manner is for obtaining a downlink MCS on the carrier 1. The base station determines the real-time (current) MCS on the carrier 1 based on the ACK or NACK information fed back by the UE.

Manner 5: This manner is for obtaining an uplink MCS on the carrier 1. The base station determines the real-time (current) MCS on the carrier 1 depending on whether the uplink data of the UE is successfully demodulated.

S440: The base station determines a real-time MCS on the carrier 2 and real-time spectrum efficiency on the carrier 2 based on the MCS on the carrier 1 and the shared-channel-information difference between the plurality of carriers.

It should be noted that, in this implementation, when the UE does not feed back auxiliary information related to the carrier 2 (for example, an RSRP, RSRQ, or a CQI that is of a CSI-RS and that is included in a CSI-RS report on the carrier 2, and an SRS that is sent on the carrier 2), the UE performs transmission on the carrier 1, and sends the auxiliary information related to the carrier 1, so that an MCS most suitable for the carrier 2 is further estimated, and the real-time spectrum efficiency on the carrier 2 is calculated.

For example, assuming that the base station may determine, according to the standard protocol when an index of the real-time MCS that is on the carrier 1 and that is determined based on step S430 is U, that spectrum efficiency corresponding to the real-time MCS U on the carrier 1 is Z, the base station may calculate, based on the real-time MCS on the carrier 1, the real-time spectrum efficiency on the carrier 2, where the spectrum efficiency satisfies: $W = \log_2(1+10^{\Delta/10}(2^Z-1))$. Accordingly, the base station may determine, according to the standard protocol, that a real-time MCS that is on the carrier 2 and that corresponds to the real-time spectrum efficiency W on the carrier 2 is V

Optionally, the real-time MCS on the carrier 2 is close to V, for example, from V-2 to V+1.

Optionally, spectrum efficiency corresponding to a real-time MCS V on the carrier 2 is close to W, for example, from 0.8W to 1.1W.

S450: The base station sends DCI #1 to the UE.

Accordingly, the UE receives the DCI #1 from the base station.

The DCI #1 indicates handover and to-be-used spectrums (the carrier 1+the carrier 2). That is, the UE may perform transmission on both the carrier 1 and the carrier 2.

It should be noted that step S420 indicates that the UE performs transmission on the carrier 1, and the base station may determine the real-time MCS and spectrum efficiency on the carrier 2 after step S430 and step S440 are implemented. Step S450 indicates that the UE may perform transmission on both the carrier 1 and the carrier 2. That is, the DCI #1 indicates that the UE may be handed over from the carrier 1 to the carrier 1+the carrier 2.

It should be understood that, in this implementation, normal communication can be performed without feeding back channel information on the carrier 2, transmission efficiency on the carrier 2 can be improved, a delay of transmission performed by using the carrier 2 can be reduced, and a proportion of high-bandwidth transmission can be increased.

Optionally, this implementation may alternatively be for indicating the UE to be handed over from the carrier 1 to the carrier 2. That is, the UE may perform transmission only on the carrier 2.

A specific implementation in which the DCI #1 indicates the handover and the to-be-used spectrums (the carrier 1+the carrier 2) may include:

For example, the DCI #1 includes a field indicating an index of a carrier, where the field indicates the UE to activate the carrier. That is, the UE may perform transmission on the carrier. For example, an index of the carrier 2 is 2, and a value of the field in the DCI #1 is 2, indicating that the UE may perform transmission on the carrier 2. Because the UE has performed transmission on the carrier 1, the UE may perform transmission on both the carrier 1 and the carrier 2 in this case.

For example, the DCI #1 includes a field indicating an index of a carrier, where the field indicates the UE to activate the carrier and be handed over to the carrier. The UE may perform transmission on the carrier, but cannot perform transmission on an original activated carrier. For example, an index of the carrier 2 is 2, and a value of the field in the DCI #1 is 2, indicating that the UE may perform transmission only on the carrier 2, but cannot perform transmission on the carrier 1.

For example, the DCI #1 includes a field indicating a bitmap (bitmap) on activated carriers. Each carrier corresponds to one bit of 0 or 1 in the bitmap, and the bit indicates whether the corresponding carrier is activated. For example, the carrier 1 corresponds to the first bit, and the carrier 2 corresponds to the second bit. A value of the field in the DCI #1 is 11..., indicating that the UE may perform transmission on both the carrier 1 and the carrier 2. Alternatively, a value of the field in the DCI #1 is 01..., indicating that the UE may perform transmission only on the carrier 2, but cannot perform transmission on the carrier 1.

For example, the DCI #1 includes a field indicating an index of a BWP on a carrier, where the field indicates to activate the BWP on the carrier. The UE may perform transmission in the BWP on the carrier. For example, BWPs on all carriers are uniformly numbered, an index of a BWP on the carrier 2 is 2, and a value of the field in the DCI #1 is 2, indicating that the UE may perform transmission in the BWP on the carrier 2. For another example, the index of the BWP consists of two parts: an index of the carrier and an index of the BWP on the carrier, an index of the carrier 2 is 2, an index of a BWP is 1, and a value of the field in the DCI #1 is [2, 1], indicating that the UE may perform transmission in the BWP on the carrier 2. Because the UE has performed transmission on the carrier 1, the UE may perform transmission on both the carrier 1 and the carrier 2 in this case.

For example, the DCI #1 includes a field indicating an index of a BWP on a carrier, where the field indicates to switch an active BWP to the BWP. That is, the UE may perform transmission in the BWP on the carrier, but cannot perform transmission in the original active BWP. For example, BWPs on all carriers are uniformly numbered, an index of a BWP on the carrier 2 is 2, and a value of the field in the DCI #1 is 2, indicating that the UE may perform transmission only in the BWP on the carrier 2, but cannot perform transmission on the carrier 1. For another example, the index of the BWP consists of two parts: an index of the carrier and an index of the BWP on the carrier, an index of the carrier 2 is 2, an index of a BWP is 1, and a value of the field in the DCI #1 is [2, 1], indicating that the UE may perform transmission only in the BWP on the carrier 2, but cannot perform transmission on the carrier 1.

For example, the DCI #1 includes a field indicating a bitmap on activated carriers. Each BWP on each carrier corresponds to one bit of 0 or 1 in the bitmap, and the bit indicates whether the corresponding BWP on the corresponding carrier is activated. For example, the BWP a on the carrier 1 corresponds to the first bit, a BWP b on the carrier 1 corresponds to the second bit, a BWP c on the carrier 2 corresponds to the third bit, a BWP d on the carrier 2 corresponds to the fourth bit, and a BWP e on a carrier 3 may further correspond to the fifth bit. This is not limited herein. A value of the field in the DCI #1 is 1010..., indicating that the UE may perform transmission on both the BWP a on the carrier 1 and the BWP c on the carrier 2. Alternatively, a value of the field in the DCI #1 is 0010..., indicating that the UE may perform transmission only on the BWP c on the carrier 2, but cannot perform transmission on the carrier 1. The foregoing is merely examples for description, and should not constitute any limitation on the technical solution in this application.

For example, the DCI #1 includes a field indicating active-BWP information on each carrier, and the active-BWP information is sequentially arranged. If a BWP is activated on a carrier, active-BWP information on the carrier is a sequence number of the BWP on the carrier, and only one BWP is activated on one carrier simultaneously. If no BWP is activated on a carrier, active-BWP information on the carrier is a preset value. For example, there is a BWP a and a BWP b on the carrier 1, and sequence numbers of the BWP a and the BWP b on the carrier are 1 and 2; and there is a BWP c and a BWP d on the carrier 2, and sequence numbers of the BWP c and the BWP d on the carrier are 1 and 2. A value of the field in the DCI #1 is 11..., indicating that the UE may perform transmission on both the BWP a on the carrier 1 and the BWP c on the carrier 2. Alternatively, a value of the field in the DCI #1 is 21..., indicating that the UE may perform transmission on both the BWP b on the carrier 1 and the BWP c on the carrier 2. Alternatively, a value of the field in the DCI #1 is 01..., indicating that the UE may perform transmission only on the BWP c on the carrier 2, but cannot perform transmission on the carrier 1. Alternatively, a value of the field in the DCI #1 is 02..., indicating that the UE may perform transmission only on the BWP d on the carrier 2, but cannot perform transmission on the carrier 1. The foregoing is merely examples for description, and should not constitute any limitation on the technical solution in this application.

It should be understood that the DCI #1 may also be for deactivating a carrier or a BWP. For brevity, details are not described herein again.

S460: The base station sends DCI #2 to the UE.

Accordingly, the UE receives the DCI #2 from the base station.

The DCI #2 is for scheduling the UE to perform transmission on both the carrier 1 and the carrier 2, to implement carrier aggregation, thereby improving transmission efficiency. That is, the UE may perform transmission on both the carrier 1 and the carrier 2.

In addition, the DCI #2 includes the real-time MCSs and/or real-time spectrum efficiency on the carrier 1 and the carrier 2.

It should be understood that, in this implementation, scheduling a carrier for transmission is that a PDSCH or a PUSCH is carried on the carrier and that the

UE receives downlink data or sends uplink data on the corresponding carrier.

In an implementation, if the base station indicates the UE to use, on the carrier 1, an MCS whose index is U, the real-time MCS that is obtained in step S440 and whose index is V is used on the carrier 2.

In another implementation, the base station indicates the UE to use a same MCS on the carrier 1 and the carrier 2. For example, an index of the same MCS is from the index U (the real-time MCS on the carrier 1) to the index V (the real-time MCS obtained in step S540).

It should be noted that, in this implementation, when the UE does not feed back the auxiliary information related to the carrier 2 (for example, the RSRP, the RSRQ, or the CQI that is of the CSI-RS and that is included in the CSI-RS report on the carrier 2, and the SRS that is sent on the carrier 2), the base station indicates the UE to schedule spectrum resources on both the carrier 1 and the carrier 2.

For example, the DCI #1 in step S450 and the DCI #2 in step S460 may be used as a whole, that is, are sent and received by using a same piece of DCI. That is, the DCI indicates the handover and the to-be-used spectrums, and further indicates and is for scheduling the UE to perform transmission on both the carrier 1 and the carrier 2.

Optionally, the DCI #1 may not be sent. That is, the base station only needs to send the DCI #2 to the UE. The DCI #2 indicates that the UE needs to perform transmission on both the carrier 1 and the carrier 2. This implementation implies that the UE may perform transmission on the carrier 2. Therefore, the DCI #1 may alternatively not be sent. This is not specifically limited in this application.

By way of example but not limitation, the real-time MCS (the index is V) and the spectrum efficiency $W = \log_2(1+10^{\Delta/10}(2^z-1))$ that are on the carrier 2 and that are determined by the base station in step S440 may be sent to the UE before step S460. In this case, in step S460, the DCI #2 sent by the base station may include only the real-time (current) MCS on the carrier 1 and/or the real-time spectrum efficiency on the carrier 1. In other words, if the base station has sent real-time MCSs on the plurality of carriers to the UE before indicating the UE to schedule the spectrum resources, the DCI #2 may include only the real-time (current) MCS on the carrier 1 during final resource scheduling. On the contrary, real-time (current) MCSs on scheduled carriers need to be sent to the UE together during final resource scheduling. In the two implementations, a transmission delay on the carrier 2 can be reduced, and spectrum usage efficiency can be improved. This is not specifically limited in this application.

In conclusion, the base station can obtain, by obtaining a shared-channel-information difference of the UE on different carriers (for example, the path loss difference between the carrier 1 and the carrier 2) and based on an MCS on one (for example, the carrier 1) of the carriers, an MCS on another carrier (for example, the carrier 2) on which channel information is not fed back. According to the method, a delay of transmission performed by using the another carrier can be shortened, a proportion of high-bandwidth transmission can be increased, transmission efficiency before channel-related information is fed back on the another carrier is improved, and system transmission performance is improved. In addition, a problem that the channel information on the another carrier on which the channel information is not fed back is unknown because shared channel information on the different frequencies is not completely the same is resolved.

FIG. 5 is a schematic flowchart of a wireless communication method 500 according to an embodiment of this application. A difference between the method 500 and the method 400 lies in: In this implementation, a base station sends, to UE, an MCS correspondence that is between a plurality of carriers and that is determined based on a shared-channel-information difference between the plurality of carriers, so that signaling overheads during subsequent resource scheduling can be reduced. Specific implementation steps include the following steps.

S510: The UE sends auxiliary information #A to the base station.

Accordingly, the base station receives the auxiliary information #A from the UE.

The auxiliary information #A explicitly or implicitly indicates the shared-channel-information difference between the plurality of carriers (for example, a carrier 1 and a carrier 2).

In this embodiment of this application, the shared-channel-information difference between the plurality of carriers may include a propagation path loss difference and an antenna efficiency difference between different frequencies.

The following provides several implementations of explicit or implicit indication of the auxiliary information #A, which specifically include:

Manner 1 (explicit): The auxiliary information #A is the shared-channel-information difference between the plurality of carriers of the UE. Specifically, the UE sends the shared-channel-information difference between the plurality of carriers to the base station. Two carriers of the UE are used as an example. It is assumed that the carrier 1 is used as a reference (for example, 0 dB), and a difference between the carrier 2 and the carrier 1 is $\Delta$ dB. In this case, the auxiliary information #A is $\Delta$ dB, and the base station may directly determine, based on the auxiliary information #A, that the shared-channel-information difference between the carrier 1 and the carrier 2 is $\Delta$ dB.

Manner 2 (implicit) : This implementation is for obtaining a shared-channel-information difference in a downlink. That is, the base station sends a request

message to the UE, and CSI-RS reports that are on the plurality of carriers and that are fed back by the UE to the base station include RSRPs or RSRQ of CSI-RSs. Two carriers of the UE are used as an example. The auxiliary information #A indicates that an RSRP on the carrier 1 is *X dBm* and that an RSRP on the carrier 2 is *Y dBm.* In this case, the base station may indirectly determine, based on the auxiliary information #A, that the shared-channel-information difference between the carrier 1 and the carrier 2 is $\Delta = Y - X$.

Manner 3 (implicit): This implementation is for obtaining a shared-channel-information difference in a downlink. That is, the base station sends a request message to the UE, and CSI-RS reports that are on the plurality of carriers and that are fed back by the UE to the base station include channel quality indications (channel quality indications, CQIs) of CSI-RSs. Two carriers of the UE are used as an example. The auxiliary information #A indicates that a CQI on the carrier 1 is a and that a CQI on the carrier 2 is b. In this case, the base station may separately determine, according to the standard protocol, that spectrum efficiency corresponding to the carrier 1 is $\alpha$ and that spectrum efficiency corresponding to the carrier 2 is $\beta$. Further, in this implementation, the shared-channel-information difference between the carrier 1 and the carrier 2 is

$$\Delta = 10\log_{10}((2^{\beta} - 1) / (2^{\alpha} - 1)) .$$

Manner 4 (implicit): This implementation may be for obtaining a shared-channel-information difference in an uplink or a downlink. The UE separately sends a sounding reference signal SRS to the base station on the plurality of carriers. Two carriers of the UE are used as an example. The auxiliary information #A indicates that an RSRP of an SRS on the carrier 1 is *x dBm* and that an RSRP of an SRS on the carrier 2 is *y dBm.* In this case, the base station further performs measurement based on the auxiliary information #A, and may indirectly determine that a shared-channel-information difference between the carrier 1 and the carrier 2 in the uplink or the downlink (using reciprocity) is $\Delta = y - x$.

It should be noted that the foregoing possible implementations are merely examples for description, and should not constitute any limitation on the technical solution in this application.

S520: The base station determines the MCS correspondence between the plurality of carriers (for example, the carrier 1 and the carrier 2) based on the shared-channel-information difference between the plurality of carriers (for example, the carrier 1 and the carrier 2).

For example, when an index of a real-time MCS on the carrier 1 is U, the base station determines that a real-time MCS on the carrier 2 is close to V, for example, from V-2 to V+1; or the base station determines that spectrum efficiency corresponding to a real-time MCS V on the carrier 2 is close to W, for example, from 0.8W to 1.1W.

First, the shared-channel-information difference obtained by the base station in step S510 is $\Delta$ dB. That is, a difference between the carrier 2 and the carrier 1 is $\Delta$ dB. Then, the base station may determine, according to the standard protocol, that spectrum efficiency corresponding to the real-time MCS U on the carrier 1 is Z. In this case, the base station may determine that the real-time spectrum efficiency W on the carrier 2 satisfies: $W = \log_2(1+10^{\Delta/10}(2^{Z}-1))$. In addition, it may be determined, according to the standard protocol, that the real-time spectrum efficiency W on the carrier 2 corresponds to the real-time MCS V.

In this implementation, the MCS is an index number of coding and modulation information used when the base station schedules the UE to communicate a PDSCH or a PUSCH. The MCS correspondence may be carried by using RRC signaling, and a representation form of the MCS correspondence may be a table. For example, there is a one-to-one correspondence between all MCSs 0 to 27 on the carrier 1 and MCSs $V_0$ to $V_{27}$ on the carrier 2.

That is, MCSMapping: := SEQUENCE (SIZE (27)) OF INTEGER (0..27).

S530: The base station sends the MCS correspondence between the plurality of carriers (for example, the carrier 1 and the carrier 2) to the UE.

Accordingly, the UE receives the MCS correspondence between the plurality of carriers (for example, the carrier 1 and the carrier 2) from the base station.

S540: The UE performs transmission on the carrier 1, and sends auxiliary information #B related to the carrier 1 to the base station.

Accordingly, the base station receives the auxiliary information #B from the UE.

The auxiliary information #B may include one or more of an RSRP or RSRQ that is of a CSI-RS and that is included in a CSI-RS report on the carrier 1, a CQI that is of the CSI-RS and that is included in the CSI-RS report on the carrier 1, the sounding reference signal SRS on the carrier 1, a fed-back acknowledgement ACK or negative acknowledgement NACK information, and information indicating whether uplink data of the UE is successfully demodulated.

S550: The base station determines the real-time (current) MCS on the carrier 1 based on the auxiliary information #B.

Based on the auxiliary information #B fed back by the UE in step S540, the following several implementations of determining the real-time (current) MCS on the carrier 1 are provided, and include:

Manner 1: This manner is for obtaining a downlink

MCS on the carrier 1. The base station determines the real-time (current) MCS on the carrier 1 based on the RSRP or the RSRQ that is of the CSI-RS, that is included in the CSI-RS report on the carrier 1, and that is fed back by the UE.

Manner 2: This manner is for obtaining a downlink MCS on the carrier 1. The CSI-RS report that is on the carrier 1 and that is fed back by the UE includes the CQI of the CSI-RS, and the real-time (current) MCS on the carrier 1 is determined.

Manner 3: This manner may be for obtaining an uplink or downlink MCS on the carrier 1. The base station obtains uplink or downlink (using reciprocity) channel information on the carrier 1 through measurement based on the SRS sent by the UE on the carrier 1, thereby determining the real-time (current) MCS on the carrier 1.

Manner 4: This manner is for obtaining a downlink MCS on the carrier 1. The base station determines the real-time (current) MCS on the carrier 1 based on the ACK or NACK information fed back by the UE.

Manner 5: This manner is for obtaining an uplink MCS on the carrier 1. The base station determines the real-time (current) MCS on the carrier 1 depending on whether the uplink data of the UE is successfully demodulated.

S560: The base station sends DCI #A to the UE.

Accordingly, the UE receives the DCI #A from the base station.

The DCI #A indicates handover and to-be-used spectrums (the carrier 1+the carrier 2). That is, the UE may perform transmission on both the carrier 1 and the carrier 2.

It should be understood that, in this implementation, normal communication can be performed without feeding back channel information on the carrier 2, transmission efficiency on the carrier 2 can be improved, a delay of transmission performed by using the carrier 2 can be reduced, and a proportion of high-bandwidth transmission can be increased.

Optionally, this implementation may alternatively be for indicating the UE to be handed over from the carrier 1 to the carrier 2. That is, the UE may perform transmission only on the carrier 2.

For a specific implementation in which the DCI #A indicates the handover and the to-be-used spectrums (the carrier 1+the carrier 2), refer to step S450. For brevity, details are not described herein again.

S570: The base station sends DCI #B to the UE.

Accordingly, the UE receives the DCI #B from the base station.

The DCI #B indicates and is for scheduling the UE to perform transmission on both the carrier 1 and the carrier 2, to implement carrier aggregation, thereby improving transmission efficiency. That is, the UE may perform transmission on both the carrier 1 and the carrier 2.

In addition, the DCI #B may include the real-time MCS (that is, the MCS index is U) on the carrier 1 and/or the real-time spectrum efficiency Z on the carrier 1. In step S530, the UE has obtained the real-time-MCS correspondence between the carrier 1 and the carrier 2. Therefore, in step S570, the DCI #B sent by the base station may include the real-time MCS U on the carrier 1. Accordingly, after receiving the DCI #B, the UE may determine that the real-time MCS on the carrier 2 is V, and the corresponding spectrum efficiency is W. That is, $V_U$ may be obtained through table lookup. In this case, the UE may perform resource scheduling on the carrier 1 and the carrier 2.

In this implementation, signaling overheads, namely, the MCS in the DCI #B, can be reduced.

For example, when the base station indicates the UE to use, on the carrier 1, the real-time MCS whose index is U, based on the MCS correspondence obtained in step S530, the index of the real-time MCS used by the UE on the carrier 2 is V

By way of example but not limitation, the DCI #A in step S560 and the DCI #B in step S570 may be used as a whole, that is, are sent and received by using a same piece of DCI. That is, the DCI indicates the handover and the to-be-used spectrums, and further indicates and is for scheduling the UE to perform transmission on both the carrier 1 and the carrier 2.

Optionally, the DCI #A may not be sent. That is, the base station only needs to send the DCI #B to the UE. The DCI #B indicates that the UE needs to perform transmission on both the carrier 1 and the carrier 2. This implementation implies that the UE may perform transmission on the carrier 2. Therefore, the DCI #A may alternatively not be sent. This is not specifically limited in this application.

It should be noted that step S530 may not be performed. That is, the base station does not send the real-time-MCS correspondence and/or real-time-spectrum-efficiency correspondence between the carrier 1 and the carrier 2 to the UE. In this case, in step S570, the DCI #B sent by the base station needs to include the real-time (current) MCSs and/or spectrum efficiency on both the carrier 1 and the carrier 2. This manner is merely an example for description, and should not constitute any limitation on the technical solution in this application.

In conclusion, the base station can obtain, by obtaining a shared-channel-information difference of the UE on different carriers (for example, the path loss difference between the carrier 1 and the carrier 2) and based on an MCS on one (for example, the carrier 1) of the carriers, an MCS on another carrier (for example, the carrier 2) on which channel information is not fed back. According to the method, a delay of transmission performed by using the another carrier can be shortened, a proportion of high-bandwidth transmission can be increased, transmission efficiency before channel-related information is fed back on the another carrier is improved, and system transmission performance is improved. In addition, signaling overheads are reduced, and a problem that the channel information on the another carrier on which the channel information is not fed back is unknown because shared channel information on the different frequencies is not completely the same is resolved.

FIG. 6 is a schematic flowchart of a wireless communication method 600 according to an embodiment of this application. A difference between the method 600 and the method 400 lies in: In this implementation, a base station obtains a historical MCS correspondence between a plurality of carriers, and estimates, based on auxiliary information on a carrier on which channel information is fed back, an MCS on a carrier on which channel information is not fed back, to perform resource scheduling. Specific implementation steps include the following steps.

S610: UE performs transmission on the plurality of carriers (for example, a carrier 1 and a carrier 2), and sends auxiliary information #a related to the carrier 1 and the carrier 2 to the base station. Accordingly, the base station receives the auxiliary information #a from the UE.

The auxiliary information #a may include one or more of RSRPs or RSRQ that are of CSI-RSs and that are included in CSI-RS reports on the carrier 1 and the carrier 2, CQIs that are of the CSI-RSs and that are included in the CSI-RS reports on the carrier 1 and the carrier 2, sounding reference signals SRSs on the carrier 1 and the carrier 2, a fed-back acknowledgement ACK or negative acknowledgement NACK information, and information indicating whether uplink data of the UE is successfully demodulated.

Optionally, the auxiliary information #a may be a shared-channel-information difference (for example, a path loss difference or an antenna efficiency difference) between the carrier 1 and the carrier 2.

S620: The base station determines a historical real-time-MCS correspondence between the carrier 1 and the carrier 2 based on the auxiliary information #a.

For example, when an index corresponding to a real-time MCS used on the carrier 1 is U1, it is determined that an index corresponding to a real-time MCS used on the carrier 2 is V1. When a real-time MCS used on the carrier 1 corresponds to U2, an MCS used on the carrier 2 is V2.

S630: The UE performs transmission on the carrier 1, and sends auxiliary information #b related to the carrier 1 to the base station.

Accordingly, the base station receives the auxiliary information #b from the UE.

The auxiliary information #b may include one or more of the RSRP or the RSRQ that is of the CSI-RS and that is included in the CSI-RS report on the carrier 1, the CQI that is of the CSI-RS and that is included in the CSI-RS report on the carrier 1, the sounding reference signal SRS on the carrier 1, the fed-back acknowledgement ACK or negative acknowledgement NACK information, and information indicating whether the uplink data of the UE is successfully demodulated.

S640: The base station determines the real-time (current) MCS on the carrier 1 based on the auxiliary information #b.

Based on the auxiliary information #b fed back by the UE in step S630, the following several implementations of determining the real-time (current) MCS on the carrier 1 are provided, and include:

Manner 1: This manner is for obtaining a downlink MCS on the carrier 1. The base station determines the real-time (current) MCS on the carrier 1 based on the RSRP or the RSRQ that is of the CSI-RS, that is included in the CSI-RS report on the carrier 1, and that is fed back by the UE.

Manner 2: This manner is for obtaining a downlink MCS on the carrier 1. The CSI-RS report that is on the carrier 1 and that is fed back by the UE includes the CQI of the CSI-RS, and the real-time (current) MCS on the carrier 1 is determined.

Manner 3: This manner may be for obtaining an uplink or downlink MCS on the carrier 1. The base station obtains uplink or downlink (using reciprocity) channel information on the carrier 1 through measurement based on the SRS sent by the UE on the carrier 1, thereby determining the real-time (current) MCS on the carrier 1.

Manner 4: This manner is for obtaining a downlink MCS on the carrier 1. The base station determines the real-time (current) MCS on the carrier 1 based on the ACK or NACK information fed back by the UE.

Manner 5: This manner is for obtaining an uplink MCS on the carrier 1. The base station determines the real-time (current) MCS on the carrier 1 depending on whether the uplink data of the UE is successfully demodulated.

S650: The base station sends DCI #a to the UE.

Accordingly, the UE receives the DCI #a from the base station.

The DCI #a indicates handover and to-be-used spectrums (the carrier 1+the carrier 2). That is, the UE may perform transmission on both the carrier 1 and the carrier 2.

It should be understood that, in this implementation, normal communication can be performed without feeding back channel information on the carrier 2, transmission efficiency on the carrier 2 can be improved, a delay of transmission performed by using the carrier 2 can be reduced, and a proportion of high-bandwidth transmission can be increased.

Optionally, this implementation may alternatively be for indicating the UE to be handed over from the carrier 1 to the carrier 2. That is, the UE may perform transmission only on the carrier 2.

For a specific implementation in which the DCI #a indicates the handover and the to-be-used spectrums (the carrier 1+the carrier 2), refer to step S450. For brevity, details are not described herein again.

S660: The base station sends DCI #b to the UE.

Accordingly, the UE receives the DCI #b from the base station.

The DCI #b indicates and is for scheduling the UE to perform transmission on both the carrier 1 and the carrier 2, to implement carrier aggregation, thereby improving transmission efficiency. That is, the UE may perform transmission on both the carrier 1 and the carrier 2.

In addition, the DCI #2 includes the real-time MCSs and/or real-time spectrum efficiency on the carrier 1 and the carrier 2.

For example, assuming that the real-time MCS used on the carrier 1 is U3, the index corresponding to the real-time MCS used on the carrier 2 is V3. When $U3 < U1$; when $U3 > U1$, $V3>V1$; or when $U1 < U3 < U2$, $V1 < V3 < V2$.

It should be noted that, in this implementation, when the UE does not feed back the auxiliary information related to the carrier 2 (for example, the RSRP, the RSRQ, or the CQI that is of the CSI-RS and that is included in the CSI-RS report on the carrier 2, and the SRS that is sent on the carrier 2), the base station indicates the UE to schedule spectrum resources on both the carrier 1 and the carrier 2.

For example, the DCI #a in step S650 and the DCI #b in step S660 may be used as a whole, that is, are sent and received by using a same piece of DCI. That is, the DCI indicates the handover and the to-be-used spectrums, and further indicates and is for scheduling the UE to perform transmission on both the carrier 1 and the carrier 2.

Optionally, the DCI #a may not be sent. That is, the base station only needs to send the DCI #b to the UE. The DCI #b indicates that the UE needs to perform transmission on both the carrier 1 and the carrier 2. This implementation implies that the UE may perform transmission on the carrier 2. Therefore, the DCI #a may alternatively not be sent. This is not specifically limited in this application.

By way of example but not limitation, the real-time-MCS correspondence that is between the carrier 1 and the carrier 2 and that is determined by the base station in step S620 may be sent to the UE before step S660. In this case, in step S660, the DCI #b sent by the base station may include only the real-time (current) MCS on the carrier 1 and/or the real-time spectrum efficiency on the carrier 1. In other words, if the base station has sent real-time MCSs on the plurality of carriers to the UE before indicating the UE to schedule the spectrum resources, the DCI #b may include only the real-time (current) MCS on the carrier 1 during final resource scheduling. On the contrary, real-time (current) MCSs on scheduled carriers need to be sent to the UE together during final resource scheduling. In the two implementations, a transmission delay on the carrier 2 can be reduced, and spectrum usage efficiency can be improved. This is not specifically limited in this application.

In conclusion, the base station can obtain, by obtaining a shared-channel-information difference of the UE on different carriers (for example, the path loss difference between the carrier 1 and the carrier 2) and based on an MCS on one (for example, the carrier 1) of the carriers, an MCS on another carrier (for example, the carrier 2) on which channel information is not fed back. According to the method, a delay of transmission performed by using the another carrier can be shortened, a proportion of high-bandwidth transmission can be increased, transmission efficiency before channel-related information is fed back on the another carrier is improved, and system transmission performance is improved. In addition, a problem that the channel information on the another carrier on which the channel information is not fed back is unknown because shared channel information on the different frequencies is not completely the same is resolved.

FIG. 7 is a schematic flowchart of a wireless communication method 700 according to an embodiment of this application. A difference between the method 700 and the method 400 lies in: In this implementation, a base station directly estimates, based on an MCS on a carrier on which channel information is fed back, an MCS on a carrier on which channel information is not fed back, to perform resource scheduling. Specific implementation steps include the following steps.

S710: UE performs transmission on a carrier 1, and sends auxiliary information related to the carrier 1 to the base station.

Accordingly, the base station receives the auxiliary information from the UE.

The auxiliary information may include one or more of an RSRP or RSRQ that is of a CSI-RS and that is included in a CSI-RS report on the carrier 1, a CQI that is of the CSI-RS and that is included in the CSI-RS report on the carrier 1, a sounding reference signal SRS on the carrier 1, a fed-back acknowledgement ACK or negative acknowledgement NACK information, and information indicating whether uplink data of the UE is successfully demodulated.

S720: The base station determines a real-time (current) MCS on the carrier 1 based on the auxiliary information.

For example, it is assumed that an index corresponding to the real-time (current) MCS that is on the carrier 1 and that is determined by the base station is U.

Based on the auxiliary information fed back by the UE in step S710, the following several implementations of determining the real-time (current) MCS on the carrier 1 are provided, and include:

Manner 1: This manner is for obtaining a downlink MCS on the carrier 1. The base station determines the real-time (current) MCS on the carrier 1 based on the RSRP or the RSRQ that is of the CSI-RS, that is included in the CSI-RS report on the carrier 1, and that is fed back by the UE.

Manner 2: This manner is for obtaining a downlink MCS on the carrier 1. The CSI-RS report that is on

the carrier 1 and that is fed back by the UE includes the CQI of the CSI-RS, and the real-time (current) MCS on the carrier 1 is determined.

Manner 3: This manner may be for obtaining an uplink or downlink MCS on the carrier 1. The base station obtains uplink or downlink (using reciprocity) channel information on the carrier 1 through measurement based on the SRS sent by the UE on the carrier 1, thereby determining the real-time (current) MCS on the carrier 1.

Manner 4: This manner is for obtaining a downlink MCS on the carrier 1. The base station determines the real-time (current) MCS on the carrier 1 based on the ACK or NACK information fed back by the UE.

Manner 5: This manner is for obtaining an uplink MCS on the carrier 1. The base station determines the real-time (current) MCS on the carrier 1 depending on whether the uplink data of the UE is successfully demodulated.

S730: The base station estimates a real-time (current) MCS on a carrier 2 based on the real-time (current) MCS on the carrier 1.

For example, when the index corresponding to the real-time MCS used on the carrier 1 is U, the base station estimates that an index V corresponding to the real-time MCS used on the carrier 2 is close to U, for example, from U-2 to U+2. That is, $V$ e ($U$ - 2, $U$ + 2).

Optionally, if spectrum efficiency Z on the carrier 1 is lower than spectrum efficiency W on the carrier 2, the base station estimates that an index V corresponding to the real-time (current) MCS used on the carrier 2 is from U-2 to U.

Optionally, if spectrum efficiency Z on the carrier 1 is higher than spectrum efficiency W on the carrier 2, the base station estimates that an index V corresponding to the real-time (current) MCS used on the carrier 2 is from U to U+2.

It should be noted that, in this implementation, the index U of the real-time MCS on the carrier 1 corresponds to the spectrum efficiency Z, and the index V of the real-time MCS on the carrier 2 corresponds to the spectrum efficiency W.

S740: The base station sends DCI #α to the UE.

Accordingly, the UE receives the DCI #α from the base station.

The DCI #α indicates handover and to-be-used spectrums (the carrier 1+the carrier 2). That is, the UE may perform transmission on both the carrier 1 and the carrier 2.

It should be understood that, in this implementation, normal communication can be performed without feeding back channel information on the carrier 2, transmission efficiency on the carrier 2 can be improved, a delay of transmission performed by using the carrier 2 can be reduced, and a proportion of high-bandwidth transmission can be increased.

Optionally, this implementation may alternatively be for indicating the UE to be handed over from the carrier 1 to the carrier 2. That is, the UE may perform transmission only on the carrier 2.

For a specific implementation in which the DCI #α indicates the handover and the to-be-used spectrums (the carrier 1+the carrier 2), refer to step S450. For brevity, details are not described herein again.

S750: The base station sends DCI #β to the UE.

Accordingly, the UE receives the DCI #β from the base station.

The DCI #β indicates and is for scheduling the UE to perform transmission on both the carrier 1 and the carrier 2, to implement carrier aggregation, thereby improving transmission efficiency. That is, the UE may perform transmission on both the carrier 1 and the carrier 2.

In a possible implementation, the DCI #β includes the real-time MCSs and/or real-time spectrum efficiency on the carrier 1 and the carrier 2. For details, refer to the real-time MCSs used on the carrier 1 and the carrier 2 and provided in step S730. Details are not described herein again.

It should be understood that this manner is implemented when the UE does not feed back the channel information on the carrier 2 to the base station and the UE does not know the real-time (current) MCS on the carrier 2 in advance.

In another possible implementation, the DCI #β may include the real-time MCS and/or the real-time spectrum efficiency on the carrier 1. In this case, the base station needs to send a real-time-MCS correspondence between the carrier 1 and the carrier 2 to the UE before step S750.

For example, when the index corresponding to the real-time MCS that is on the carrier 1 and that is in the DCI #β received by the UE is U, the index V corresponding to the real-time MCS for scheduling a resource on the carrier 2 is close to U, for example, from U-2 to U+2. If the spectrum efficiency Z that is on the carrier 1 and that is in the DCI #β received by the UE is lower than the spectrum efficiency W that is on the carrier 2 and that is in the DCI #β received by the UE, the base station estimates that the index V corresponding to the real-time (current) MCS used on the carrier 2 is from U-2 to U. If the spectrum efficiency Z that is on the carrier 1 and that is in the DCI #β received by the UE is higher than the spectrum efficiency W on the carrier 2 and that is in the DCI #β received by the UE, the base station estimates that the index V corresponding to the real-time (current) MCS used on the carrier 2 is from U to U+2. The foregoing implementations are merely examples for description, and should not constitute any limitation on the technical solution in this application.

By way of example but not limitation, the DCI #α in step S740 and the DCI #β in step S750 may be used as a whole, that is, are sent and received by using a same piece of DCI. That is, the DCI indicates the handover and the to-be-used spectrums, and further indicates and is for scheduling the UE to perform transmission on

both the carrier 1 and the carrier 2.

Optionally, the DCI #α may not be sent. That is, the base station only needs to send the DCI #β to the UE. The DCI #β indicates that the UE needs to perform transmission on both the carrier 1 and the carrier 2. This implementation implies that the UE may perform transmission on the carrier 2. Therefore, the DCI #α may alternatively not be sent. This is not specifically limited in this application.

In conclusion, the base station can obtain, by obtaining a shared-channel-information difference of the UE on different carriers (for example, a path loss difference between the carrier 1 and the carrier 2) and based on an MCS on one (for example, the carrier 1) of the carriers, an MCS on another carrier (for example, the carrier 2) on which channel information is not fed back. According to the method, a delay of transmission performed by using the another carrier can be shortened, a proportion of high-bandwidth transmission can be increased, transmission efficiency before channel-related information is fed back on the another carrier is improved, and system transmission performance is improved. In addition, a problem that the channel information on the another carrier on which the channel information is not fed back is unknown because shared channel information on the different frequencies is not completely the same is resolved.

FIG. 8 is a schematic flowchart of a wireless communication method 800 according to an embodiment of this application. A difference between the method 800 and the method 400 lies in: In this implementation, a base station explicitly or implicitly obtains an optimal-beam difference between a plurality of carriers, and estimates, based on optimal-beam information on a carrier on which channel information is fed back, an optimal beam on a carrier on which channel information is not fed back, to perform resource scheduling. Specific implementation steps include the following steps.

S810: UE sends auxiliary information #a to the base station. Accordingly, the base station receives the auxiliary information #a from the UE.

The auxiliary information #a explicitly or implicitly indicates the optimal-beam difference between the plurality of carriers (for example, a carrier 1 and a carrier 2).

The following provides several implementations of explicit or implicit indication of the auxiliary information #a, which specifically include:

Manner 1: The auxiliary information #a is an optimal-beam correspondence between different carriers of the UE, and the base station explicitly obtains the optimal-beam correspondence.

Manner 2: The auxiliary information #a is an optimal beam separately used by the UE on the carrier 1 and the carrier 2, and the base station implicitly obtains an optimal-beam correspondence.

For example, the optimal-beam correspondence may include:

(1) The carrier 1 and the carrier 2 share a same optimal beam.

(2) When an optimal beam A1 is used on the carrier 1, optimal beams B1, B2, and B3 are used on the carrier 2. When an optimal beam A2 is used on the carrier 1, optimal beams B4, B5, and B6 are used on the carrier 2.

In other words, the optimal beam used on the carrier 2 may be the same as the optimal beam used on the carrier 1; or the optimal beam used on the carrier 2 is different from the optimal beam used on the carrier 1, where a quantity of optimal beams on the carrier 2 is greater than or equal to 1. This is not specifically limited in this application.

It should be noted that the implementations provided above are merely examples for description, and should not constitute any limitation on the technical solution in this application.

S820: The UE performs transmission on the carrier 1, and sends auxiliary information #b related to the carrier 1 to the base station.

Accordingly, the base station receives the auxiliary information #b from the UE.

The auxiliary information #b may include: RSRPs or RSRQ that is of CSI-RSs and that is included in CSI-RS reports on a plurality of beams on the carrier 1, CQIs that are of the CSI-RSs and that are included in the CSI-RS reports on the plurality of beams on the carrier 1, and sounding reference signals SRSs on the plurality of beams on the carrier 1.

Optionally, the auxiliary information #b may include a real-time optimal beam on the carrier 1.

S830: The base station determines the real-time (current) optimal beam on the carrier 1 based on the auxiliary information #b.

Based on the auxiliary information #b fed back by the UE in step S820, the following several implementations of determining the real-time (current) optimal beam on the carrier 1 are provided, and include:

Manner 1: The base station determines the real-time (current) optimal beam on the carrier 1, that is, a beam corresponding to a highest RSRP or highest RSRQ, based on the RSRPs or the RSRQ that is of the CSI-RSs, that is included in the CSI-RS reports on the plurality of beams on the carrier 1, and that is fed back by the UE.

Manner 2: The base station determines the real-time (current) optimal beam on the carrier 1, that is, a beam corresponding to a largest CQI value, based on the CQIs that are of the CSI-RSs, that are included in the CSI-RS reports on the plurality of beams on the carrier 1, and that are fed back by the UE.

Manner 3: The UE sends the SRSs on the plurality

of beams on the carrier 1, and the base station determines the real-time (current) optimal beam on the carrier 1 based on the SRSs, for example, a beam corresponding to a largest RSRP or RSRQ of the SRSs.

S840: The base station determines one or more optimal beams on the carrier 2 based on the optimal beam on the carrier 1 and the optimal-beam difference between the plurality of carriers.

It should be noted that, in this implementation, when the UE does not feed back auxiliary information related to the carrier 2 (for example, an RSRP, RSRQ, or a CQI that is of a CSI-RS and that is included in a CSI-RS report on the carrier 2, and an SRS that is sent on the carrier 2), the UE performs transmission on the carrier 1, and sends the auxiliary information related to the carrier 1, so that an optimal beam most suitable for the carrier 2 is further estimated.

First, the optimal-beam correspondence is that the carrier 1 and the carrier 2 share the same optimal beam.

For example, if the real-time optimal beam on the carrier 1 is a beam 1, the real-time optimal beam on the carrier 2 is also the beam 1. If the real-time optimal beam on the carrier 1 is a beam 2, the real-time optimal beam on the carrier 2 is also the beam 2.

Second, when the optimal-beam correspondence is that the optimal beams B1, B2, and B3 may be used on the carrier 2 when the optimal beam A1 is used on the carrier 1; or that the optimal beams B4, B5, and B6 may be used on the carrier 2 when the optimal beam A2 is used on the carrier 1.

For example, if the real-time optimal beam on the carrier 1 is the beam A1, the real-time optimal beam on the carrier 2 is one of the beams B1, B2, and B3. If the real-time optimal beam on the carrier 1 is the beam A2, the real-time optimal beam on the carrier 2 is one of the beams B4, B5, and B6.

S850: The base station sends DCI #Aa to the UE.

Accordingly, the UE receives the DCI #Aa from the base station.

The DCI #Aa indicates handover and to-be-used spectrums (the carrier 1+the carrier 2). That is, the UE may perform transmission on both the carrier 1 and the carrier 2.

It should be noted that step S820 indicates that the UE performs transmission on the carrier 1, and the base station may determine the real-time optimal beam on the carrier 2 after step S830 and step S840 are implemented. Step S850 indicates that the UE may perform transmission on both the carrier 1 and the carrier 2. That is, the DCI #Aa indicates that the UE may be handed over from the carrier 1 to the carrier 1+the carrier 2.

It should be understood that, in this implementation, normal communication can be performed without feeding back channel information on the carrier 2, transmission efficiency on the carrier 2 can be improved, a delay of transmission performed by using the carrier 2 can be reduced, and a proportion of high-bandwidth transmission can be increased.

Optionally, this implementation may alternatively be for indicating the UE to be handed over from the carrier 1 to the carrier 2. That is, the UE may perform transmission only on the carrier 2.

For a specific implementation in which the DCI #Aa indicates the handover and the to-be-used spectrums (the carrier 1+the carrier 2), refer to step S450. For brevity, details are not described herein again.

S860: The base station performs transmission and measurement by using the optimal beams on the carrier 1 and the carrier 2.

The optimal beam on the carrier 2 is one or more of the real-time optimal beams obtained in step S840.

In this step, before the UE feeds back the channel-related information on the carrier 2, the base station estimates the real-time optimal beam on the carrier 2 by using the real-time optimal beam on the carrier 1 and the optimal-beam difference between the carriers, to perform resource scheduling and transmission.

In an implementation, when the real-time optimal beam used by the base station on the carrier 1 is the beam A1, the real-time optimal beam used on the carrier 2 is one or more of the beams B1, B2, and B3. When the real-time optimal beam used by the base station on the carrier 1 is the beam A2, the real-time optimal beam used on the carrier 2 is one of the beams B4, B5, and B6.

In another implementation, the base station uses the same optimal beam on the carrier 1 and the carrier 2. For example, if the real-time optimal beam used by the base station on the carrier 1 is the beam 1, the real-time optimal beam used on the carrier 2 is also the beam 1. If the real-time optimal beam used by the base station on the carrier 1 is the beam 2, the real-time optimal beam used on the carrier 2 is also the beam 2.

The foregoing possible implementations are merely examples for description, and should not constitute any limitation on the technical solution in this application.

In conclusion, the base station estimates, by obtaining the optimal-beam difference of the UE on the different carriers and based on an optimal beam on a carrier on which channel information is fed back, an optimal beam (or an optimal beam range) on another carrier on which channel information is not fed back. This improves transmission efficiency before channel-related information is fed back on the another carrier, reduces a delay of transmission performed by using the another carrier, increases a proportion of high-bandwidth transmission, and resolves a problem that channel information on the another carrier on which the channel information is not fed back is unknown.

FIG. 9 is a schematic flowchart of a wireless communication method 900 according to an embodiment of this application. A difference between the method 900

and the method 400 lies in: In this implementation, UE reports an identifier indicating whether the UE moves, and a base station determines, depending on whether the UE moves, whether the UE needs to rescan an optimal beam. Specific implementation steps include the following steps.

S910: The UE performs transmission on optimal beams on both a carrier 1 and a carrier 2, and sends auxiliary information related to the carrier 1 and the carrier 2.

The auxiliary information may include: RSRPs or RSRQ that is of CSI-RSs and that is included in CSI-RS reports on a plurality of beams on the carrier 1 and the carrier 2, CQIs that are of the CSI-RSs and that are included in the CSI-RS reports on the plurality of beams on the carrier 1 and the carrier 2, and sounding reference signals SRSs on the plurality of beams on the carrier 1 and the carrier 2.

Optionally, the auxiliary information is an optimal-beam correspondence of the UE on the carrier 1 and the carrier 2; or the auxiliary information is a real-time (current) optimal beam separately used by the UE on the carrier 1 and the carrier 2.

S920: The base station determines the real-time (current) optimal beam on the carrier 2 based on the auxiliary information related to the carrier 2.

Based on the auxiliary information fed back by the UE in step S910, the following several implementations of determining the real-time (current) optimal beam on the carrier 1 are provided, and include:

Manner 1: The base station determines the real-time (current) optimal beams on the carrier 1 and the carrier 2, that is, beams corresponding to highest RSRPs or highest RSRQ, based on the RSRPs or the RSRQ that is of the CSI-RSs, that is included in the CSI-RS reports on the plurality of beams on the carrier 1 and the carrier 2, and that is fed back by the UE.

Manner 2: The base station determines the real-time (current) optimal beams on the carrier 1 and the carrier 2, that is, beams corresponding to largest CQI values, based on the CQIs that are of the CSI-RSs, that are included in the CSI-RS reports on the plurality of beams on the carrier 1 and the carrier 2, and that are fed back by the UE.

Manner 3: The UE sends the SRSs on the plurality of beams on the carrier 1 and the carrier 2, and the base station determines the real-time (current) optimal beams on the carrier 1 and the carrier 2 based on the SRSs, for example, beams corresponding to largest RSRPs or RSRQ of the SRSs.

S930: The UE sends, to the base station, the identifier indicating whether the UE moves.

Accordingly, the base station receives, from the UE, the identifier indicating whether the UE moves.

It should be noted that, a prerequisite for implementing this step is that the UE does not perform transmission on the carrier 2, and sends the auxiliary information on the carrier 2 to the base station no longer. In other words, in this case, the UE performs transmission on the carrier 1, and the UE sends the auxiliary information on the carrier 1 to the base station.

Therefore, if the UE continues to schedule a spectrum resource on the carrier 2, the UE needs to report the identifier indicating whether the UE moves, to determine whether an optimal beam on the carrier 2 needs to be rescanned.

S940: The base station determines, based on the identifier that is reported by the UE and that indicates whether the UE moves, whether the UE needs to rescan the optimal beam on the carrier 2.

S950: The base station sends information to the UE, to indicate whether the UE needs to rescan the optimal beam on the carrier 2.

For example, according to the foregoing step S930 to step S950, if the UE reports the identifier indicating that the UE does not move, the base station determines and indicates that the UE does not need to rescan the optimal beam on the carrier 2. That is, the UE may continue to use the optimal beam on the carrier 2 in step S910 for transmission. If the UE reports the identifier indicating that the UE moves, the base station determines and indicates that the UE needs to rescan the optimal beam on the carrier 2. That is, in subsequent resource scheduling, the UE needs to perform transmission by using the optimal beam scanned on the carrier 2.

S960: The base station sends DCI to the UE, where the DCI indicates handover and to-be-used spectrums (the carrier 1+the carrier 2). That is, the UE may perform transmission on both the carrier 1 and the carrier 2.

For example, the base station determines, based on the identifier that is reported by the UE in step S920 and that indicates whether the UE moves, whether the UE needs to rescan the optimal beam.

It should be noted that step S930 indicates that the UE performs transmission on the carrier 1, and the base station may determine, after step S940 and step S950 are implemented, whether the UE needs to rescan the optimal beam on the carrier 2. Step S960 indicates that the UE may perform transmission on both the carrier 1 and the carrier 2. That is, the DCI indicates that the UE may be handed over from the carrier 1 to the carrier 1+the carrier 2. The optimal beam on the carrier 1 remains unchanged, and information indicating whether the optimal beam on the carrier 2 changes depends on whether the UE moves in step S930.

It should be understood that, in this implementation, normal communication can be performed without feeding back channel information on the carrier 2 in real time, transmission efficiency on the carrier 2 can be improved, a delay of transmission performed by using the carrier 2 can be reduced, and a proportion of high-bandwidth transmission can be increased.

Optionally, this implementation may alternatively be for indicating the UE to be handed over from the carrier 1 to the carrier 2. That is, the UE may perform transmission only on the carrier 2. If the UE does not move in step S930, the optimal beam on the carrier 2 does not change, and is still the optimal transmission beam on the carrier 2 in step S910. If the UE moves in step S930, the optimal beam on the carrier 2 changes. That is, the UE scans a real-time (current) optimal beam re-determined on the carrier 2 for resource scheduling.

S970: The base station performs transmission and measurement by using the optimal beams on the carrier 1 and the carrier 2.

The optimal beam on the carrier 2 is a real-time optimal beam determined after step S950.

In an implementation, when the UE performs transmission on the carrier 1, and the UE does not move, the optimal beam on the carrier 2 does not change. That is, the base station performs transmission and measurement on the original optimal beam on the carrier 2.

In another implementation, when the UE performs transmission on the carrier 1, and the UE moves, the optimal beam on the carrier 2 changes. That is, the base station performs transmission and measurement on the optimal beam that is on the carrier 2 and that is determined after the UE performs rescanning.

The foregoing possible implementations are merely examples for description, and should not constitute any limitation on the technical solution in this application.

In conclusion, the base station obtains the identifier indicating whether the UE moves, to reduce a quantity of times of rescanning the optimal beam by the UE, thereby reducing a delay of obtaining an optimal beam by the UE on another carrier, and increasing a proportion of high-bandwidth transmission. In addition, a problem that channel information on the another carrier on which the channel information is not fed back is unknown is resolved.

It should be noted that, when UE communicates big data, a plurality of carriers need to be activated, and channel measurement needs to be performed. Before a channel measurement result is obtained, channel information on carriers is unknown. Consequently, a multi-carrier transmission rate decreases. Further, system transmission performance is affected. Therefore, in a multi-carrier application scenario, to better resolve this problem and implement the wireless communication methods in FIG. 2 to FIG. 9, before performing the wireless communication with a base station, the UE first needs to complete an initial access process. In other words, when interacting with the base station, the UE is in a radio resource control connected RRC_CONNECTED state.

It should be understood that, in embodiments of this application, a pre-defined signal type is sent by using one of a plurality of downlink carriers. The pre-defined signal types include a synchronization signal block (SSB) and remaining minimum system information (remaining minimum system information, RMSI). The RMSI may also be referred to as a system information block 1 (system information block 1, SIB1). The SIB 1 includes information about a plurality of uplink carriers and/or information about a plurality of downlink carriers. The information about the downlink carrier includes one or more of a carrier frequency, a carrier identifier (for example, an index), a location of a control resource set 0 (CORESET 0), a subcarrier spacing (SCS) available for the carrier, and a start location and a bandwidth of an available resource block (resource block, RB) corresponding to the subcarrier spacing. The CORESET 0 is a common control resource block 0. The information about the uplink carrier includes one or more of a carrier frequency, a carrier identifier (for example, an index), a subcarrier spacing available for the carrier, a start location and a bandwidth of an available resource block RB corresponding to the subcarrier spacing, and a random access channel (random access channel, RACH) resource. The plurality of carriers in the SIB1 may belong to one cell, or may belong to a plurality of cells. This is not specifically limited in this application.

To ensure that the technical solutions in this application are more complete and clearer, the following separately describes, in a possible implementation such as an implementation in which the control resource set 0 (CORESET 0) is configured on one or more downlink carriers of the UE and the RACH resource is configured on one or more uplink carriers of the UE, a process in which the UE completes initial access in a multi-carrier scenario.

FIG. 10 is a schematic diagram of an example of a method for performing initial access by UE. In this implementation, a control resource set 0 (CORESET 0) is configured on only one downlink carrier of the UE, and a RACH resource is configured on one or more uplink carriers of the UE. Specific implementation method 1000 include the following steps.

S1010: The UE sends a preamble to a base station on an RACH resource on a first uplink carrier, where a sequence of the preamble or an RB location of the RACH resource may be bound to an uplink carrier that is predicted by the UE to be used in a radio resource control RRC connected state.

Optionally, before performing step S1010, the UE needs to determine the first uplink carri er.

The first uplink carrier is an uplink carrier randomly selected from the one or more uplink carriers on which the RACH resource is configured.

S1020: The UE monitors DCI on a first downlink carrier.

The DCI is for scheduling a random access response (random access response, RAR), and the control resource set 0 (CORESET 0) is configured on the first downlink carrier. The RAR indicates whether the preamble sent by the UE in step S1010 is successfully received by the base station. In addition, the RAR indicates an

uplink resource for sending a random access message 3 (Msg 3).

S1030: The UE sends the Msg 3 to the base station on a third uplink carrier by using uplink resource in the RAR.

That is, the UE sends the Msg 3 to the base station on the third uplink carrier based on a grant of the RAR, the indicated resource, and an indicated format.

Accordingly, the base station receives the Msg 3 from the UE on the third uplink carrier.

In a possible implementation, the RAR received by the UE in step S1020 may carry indication information, where the indication information indicates that an uplink carrier for communicating the Msg 3 is the third uplink carrier. The third uplink carrier may be the same as or different from the first uplink carrier, or the third uplink carrier may be the same as or different from the uplink carrier that is predicted by the UE to be used in the RRC connected state. This is not specifically limited in this application.

In another possible implementation, the RAR received by the UE in step S1020 may not carry indication information, and the third uplink carrier is determined based on a pre-definition manner. For example, the first uplink carrier is the third uplink carrier, an uplink carrier that is in a same band as the downlink carrier of the CORESET 0 is the third uplink carrier, or the uplink carrier that is predicted by the UE to be used in the RRC connected state is the third uplink carri er.

Optionally, the base station sends, to the UE on the first downlink carrier, signaling indicating that the initial access is completed.

Accordingly, the UE receives, from the base station on the first downlink carrier, the signaling indicating that the initial access is completed, to enter the RRC connected state.

In this case, the signaling indicating that the initial access is completed includes indication information of uplink and downlink carriers on which the UE works. Alternatively, uplink and downlink carriers on which the UE works are determined based on a protocol pre-definition manner. For example, the downlink carrier on which the UE works is the downlink carrier on which the CORESET 0 is configured, that is, the first downlink carrier. For example, if the sequence of the preamble or the RB location of the RACH resource is bound to the uplink carrier that is predicted by the UE to be used in the RRC connected state, the uplink carrier on which the UE works is the bound uplink carrier. Alternatively, the uplink carrier on which the UE works is an uplink carrier on which the UE sends the preamble, that is, the first uplink carrier. Alternatively, the uplink carrier on which the UE works is the uplink carrier on which the UE sends the Msg 3, that is, the third uplink carrier.

In this implementation, load balancing of the UE on different uplink carriers can be enabled, an access delay of the UE can be reduced, and network flexibility can be improved. For a contention-free random access process, the base station may also select a random access resource on any uplink carrier, and send the random access resource to the UE.

FIG. 11 is a schematic diagram of another example of a method for performing initial access by UE. In this implementation, control resource sets 0 (CORESETs 0) are configured on a plurality of downlink carriers of the UE, and a RACH resource is configured on one or more uplink carriers of the UE. Specific implementation method 1100 include the following steps.

S1110: The UE sends a preamble to a base station on an RACH resource on a second uplink carrier.

A sequence of the preamble or an RB location of the RACH resource may be bound to an uplink carrier that is predicted by the UE to be used in a radio resource control RRC connected state, or may be bound to a downlink carrier that is predicted by the UE to be used in a radio resource control RRC connected state.

Optionally, before performing step S1110, the UE needs to determine the second uplink carri er.

The second uplink carrier is an uplink carrier randomly selected from the one or more uplink carriers on which the RACH resource is configured.

S1120: The UE monitors DCI on a downlink carrier.

The DCI is for scheduling a random access response RAR, and the RAR is communicated on a second downlink carrier.

Optionally, the UE monitors, on the plurality of downlink carriers on which the CORESETs 0 are configured, the DCI for scheduling the RAR.

Optionally, if the sequence of the preamble or the RB location of the RACH resource is bound to the downlink carrier that is predicted by the UE to be used in the RRC connected state, the UE monitors, on a CORESET 0 on the bound downlink carrier, the DCI for scheduling the RAR.

The RAR indicates whether the preamble sent by the UE in step S1110 is successfully received by the base station. In addition, the RAR indicates an uplink resource for sending a random access message 3 (Msg 3).

S1130: The UE sends the Msg 3 to the base station on a fourth uplink carrier by using uplink resource in the RAR.

That is, the UE sends the Msg 3 to the base station on the fourth uplink carrier based on a grant of the RAR, the indicated resource, and an indicated format.

Accordingly, the base station receives the Msg 3 from the UE on the fourth uplink carri er.

In a possible implementation, the RAR received by the UE in step S1120 may carry indication information, where the indication information indicates that an uplink carrier for communicating the Msg 3 is the fourth uplink carrier. The fourth uplink carrier may be the same as or different from the second uplink carrier, or the fourth uplink carrier may be the same as or different from the uplink carrier that is predicted by the UE to be used in the RRC

connected state. This is not specifically limited in this application.

In another possible implementation, the RAR received by the UE in step S1120 may not carry indication information, and the fourth uplink carrier is determined based on a protocol pre-definition manner. For example, the second uplink carrier is the fourth uplink carrier, an uplink carrier that is in a same band as the downlink carrier for receiving the RAR is the fourth uplink carrier, or the uplink carrier that is predicted by the UE to be used in the RRC connected state is the fourth uplink carrier.

Optionally, the base station sends, to the UE on the downlink carrier, signaling indicating that the initial access is completed.

Accordingly, the UE receives, from the base station on the downlink carrier, the signaling indicating that the initial access is completed, to enter the RRC connected state.

The downlink carrier is the same as the downlink carrier used by the base station to send the RAR in step S1120, that is, the second downlink carrier.

In this case, the signaling indicating that the initial access is completed includes indication information of uplink and downlink carriers on which the UE works. Alternatively, uplink and downlink carriers on which the UE works are determined based on a protocol pre-definition manner. For example, the downlink carrier on which the UE works is the downlink carrier on which the base station sends the RAR, that is, the second downlink carrier. Alternatively, if the sequence of the preamble or the RB location of the RACH resource is bound to the downlink carrier that is predicted by the UE to be used in the RRC connected state, the downlink carrier on which the UE works is the bound downlink carrier. For example, if the sequence of the preamble or the RB location of the RACH resource is bound to the uplink carrier that is predicted by the UE to be used in the RRC connected state, the uplink carrier on which the UE works is the bound uplink carrier. Alternatively, the uplink carrier on which the UE works is an uplink carrier on which the UE sends the preamble, that is, the second uplink carrier. Alternatively, the uplink carrier on which the UE works is the uplink carrier on which the UE sends the Msg3, that is, the fourth uplink carri er.

In this implementation, load balancing of the UE on different uplink and downlink carriers can be enabled, an access delay of the UE can be reduced, and network flexibility can be improved. For a contention-free random access process, the base station may also select a random access resource on any uplink or downlink carrier, and send the random access resource to the UE.

In conclusion, after completing the initial access, the UE performs wireless communication with the base station. The base station obtains the path loss difference of the UE between the different carriers, the channel information on the another carrier on which the channel information is not fed back can be obtained based on channel information on a carrier, and the transmission efficiency before the channel-related information is fed back on the another carrier is improved, so that the system transmission performance can be improved.

The foregoing describes in detail embodiments of the wireless communication method in this application with reference to FIG. 1 to FIG. 11. The following describes in detail embodiments on a wireless communication apparatus side in this application with reference to FIG. 12 and FIG. 13. It should be understood that descriptions of the apparatus embodiments correspond to the descriptions of the method embodiments. Therefore, for a part that is not described in detail, refer to the foregoing method embodiments.

FIG. 12 is a schematic block diagram of a wireless communication apparatus according to an embodiment of this application. As shown in FIG. 12, the wireless communication apparatus 1000 may include a processing unit 1100 and a transceiver unit 1200.

Optionally, the wireless communication apparatus 1000 may correspond to the terminal device in the foregoing method embodiments, for example, may be a terminal device or a component (for example, a circuit, a chip, or a chip system) configured in the terminal device.

It should be understood that the wireless communication apparatus 1000 may correspond to the terminal device in the method 200, the method 300, the method 400, the method 500, the method 600, the method 700, the method 800, the method 900, the method 1000, and the method 1100 according to embodiments of this application. The wireless communication apparatus 1000 may include a unit configured to perform the method performed by the terminal device in the method 200 in FIG. 2, the method 300 in FIG. 3, the method 400 in FIG. 4, the method 500 in FIG. 5, the method 600 in FIG. 6, the method 700 in FIG. 7, the method 800 in FIG. 8, the method 900 in FIG. 9, the method 1000 in FIG. 10, or the method 1100 in FIG. 11. In addition, the units in the wireless communication apparatus 1000 and the foregoing other operations and/or functions are separately for implementing the corresponding procedure in the method 200 in FIG. 2, the method 300 in FIG. 3, the method 400 in FIG. 4, the method 500 in FIG. 5, the method 600 in FIG. 6, the method 700 in FIG. 7, the method 800 in FIG. 8, the method 900 in FIG. 9, the method 1000 in FIG. 10, or the method 1100 in FIG. 11.

For example, the transceiver unit 1200 is used by the terminal device to send first information to a network device on a first carrier, where the first information is for determining channel information on the first carrier, and the channel information on the first carrier includes a modulation and coding scheme MCS and/or spectrum efficiency on the first carrier.

The transceiver unit 1200 is further used by the terminal device to receive second information from the network device, where the second information is for scheduling a transmission resource on a second carrier, the second information indicates channel information on the second carrier, the channel information on the second

carrier includes an MCS and/or spectrum efficiency on the second carrier, and the channel information on the second carrier is determined based on the channel information on the first carrier.

For example, the transceiver unit 1200 is further used by the terminal device to receive channel information on a first carrier and second association information from a network device, where the channel information on the first carrier includes a modulation and coding scheme MCS and/or spectrum efficiency on the first carrier, and the second association information indicates channel difference information between the first carrier and a second carrier.

The processing unit 1100 is used by the terminal device to determine channel information on the second carrier based on the channel information on the first carrier and the second association information, where the channel information on the second carrier includes an MCS and/or spectrum efficiency on the second carrier.

It should be further understood that, when the wireless communication apparatus 1000 is the terminal device, the transceiver unit 1200 in the wireless communication apparatus 1000 may be implemented by using a transceiver, for example, may correspond to a transceiver 2020 in a wireless communication apparatus 2000 shown in FIG. 13; and the processing unit 1100 in the wireless communication apparatus 1000 may be implemented by using at least one processor, for example, may correspond to a processor 2010 in the wireless communication apparatus 2000 shown in FIG. 13.

It should be further understood that, when the wireless communication apparatus 1000 is the chip or the chip system configured in the terminal device, the transceiver unit 1200 in the wireless communication apparatus 1000 may be implemented by using an input/output interface, a circuit, or the like, and the processing unit 1100 in the wireless communication apparatus 1000 may be implemented by using a processor, a microprocessor, an integrated circuit, or the like integrated on the chip or the chip system.

Optionally, the wireless communication apparatus 1000 may correspond to the network device in the foregoing method embodiments, for example, may be a network device or a component (for example, a circuit, a chip, or a chip system) configured in the network device.

It should be understood that the wireless communication apparatus 1000 may correspond to the network device in the method 200, the method 300, the method 400, the method 500, the method 600, the method 700, the method 800, the method 900, the method 1000, and the method 1100 according to embodiments of this application. The wireless communication apparatus 1000 may include a unit configured to perform the method performed by the network device in the method 200 in FIG. 2, the method 300 in FIG. 3, the method 400 in FIG. 4, the method 500 in FIG. 5, the method 600 in FIG. 6, the method 700 in FIG. 7, the method 800 in FIG. 8, the method 900 in FIG. 9, the method 1000 in FIG. 10, or the method 1100 in FIG. 11. In addition, the units in the wireless communication apparatus 1000 and the foregoing other operations and/or functions are separately for implementing the corresponding procedure in the method 200 in FIG. 2, the method 300 in FIG. 3, the method 400 in FIG. 4, the method 500 in FIG. 5, the method 600 in FIG. 6, the method 700 in FIG. 7, the method 800 in FIG. 8, the method 900 in FIG. 9, the method 1000 in FIG. 10, or the method 1100 in FIG. 11.

For example, the transceiver unit 1200 is used by the network device to receive first information from a terminal device on a first carrier, where the first information is for determining channel information on the first carrier, and the channel information on the first carrier includes a modulation and coding scheme MCS and/or spectrum efficiency on the first carrier.

The transceiver unit 1200 is further used by the network device to send second information to the terminal device, where the second information is for scheduling a transmission resource on a second carrier, the second information indicates channel information on the second carrier, the channel information on the second carrier includes an MCS and/or spectrum efficiency on the second carrier, and the channel information on the second carrier is determined based on the channel information on the first carrier.

For example, the transceiver unit 1200 is used by the network device to send channel information on a first carrier and second association information to a terminal device, where the channel information on the first carrier includes a modulation and coding scheme MCS and/or spectrum efficiency on the first carrier, the second association information indicates channel difference information between the first carrier and a second carrier, the channel information on the first carrier and the second association information are for determining channel information on the second carrier, and the channel information on the second carrier includes an MCS and/or spectrum efficiency on the second carrier.

It should be further understood that, when the wireless communication apparatus 1000 is the network device, the transceiver unit 1200 in the wireless communication apparatus 1000 may be implemented by using a transceiver, for example, may correspond to a transceiver 2020 in a wireless communication apparatus 2000 shown in FIG. 13; and the processing unit 1100 in the wireless communication apparatus 1000 may be implemented by using at least one processor, for example, may correspond to a processor 2010 in the wireless communication apparatus 2000 shown in FIG. 13.

It should be further understood that, when the wireless communication apparatus 1000 is the chip or the chip system configured in the network device, the transceiver unit 1200 in the wireless communication apparatus 1000 may be implemented by using an input/output interface, a circuit, or the like, and the processing unit 1100 in the wireless communication apparatus 1000 may be implemented by using a processor, a microprocessor,

an integrated circuit, or the like integrated on the chip or the chip system.

FIG. 13 is another schematic block diagram of a wireless communication apparatus 2000 according to an embodiment of this application. As shown in FIG. 13, the wireless communication apparatus 2000 includes a processor 2010, a transceiver 2020, and a memory 2030. The processor 2010, the transceiver 2020, and the memory 2030 communicate with each other through an internal connection path. The memory 2030 is configured to store instructions. The processor 2010 is configured to execute the instructions stored in the memory 2030, to control the transceiver 2020 to send a signal and/or receive a signal.

It should be understood that the wireless communication apparatus 2000 may correspond to the network device or the terminal device in the foregoing method embodiments, and may be configured to perform the steps and/or the procedures performed by the network device or the terminal device in the foregoing method embodiments. Optionally, the memory 2030 may include a read-only memory and a random access memory, and provide instructions and data for the processor. A part of the memory may further include a nonvolatile random access memory. The memory 2030 may be an independent device, or may be integrated into the processor 2010. The processor 2010 may be configured to execute the instructions stored in the memory 2030. When the processor 2010 executes the instructions stored in the memory, the processor 2010 is configured to perform the steps and/or the procedures corresponding to the network device or the terminal device in the foregoing method embodiments.

Optionally, the wireless communication apparatus 2000 is the terminal device in the foregoing embodiments.

Optionally, the wireless communication apparatus 2000 is the network device in the foregoing embodiments.

The transceiver 2020 may include a transmitter and a receiver. The transceiver 2020 may further include an antenna, and there may be one or more antennas. The processor 2010, the memory 2030, and the transceiver 2020 may be components integrated on different chips. For example, the processor 2010 and the memory 2030 may be integrated into a baseband chip, and the transceiver 2020 may be integrated into a radio frequency chip. Alternatively, the processor 2010, the memory 2030, and the transceiver 2020 may be components integrated on a same chip. This is not limited in this application.

Optionally, the wireless communication apparatus 2000 is a component configured in the terminal device, for example, a circuit, a chip, or a chip system.

Optionally, the wireless communication apparatus 2000 is a component configured in the network device, for example, a circuit, a chip, or a chip system.

Alternatively, the transceiver 2020 may be a communication interface, such as an input/output interface or a circuit. The transceiver 2020, the processor 2010, and the memory 2030 may be integrated into a same chip, for example, integrated into a baseband chip.

It should be understood that, the processor in embodiments of this application may be a central processing unit (central processing unit, CPU). The processor may alternatively be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, any conventional processor, or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the methods in this specification aims to include, but not limited to, these and any memory of another appropriate type.

The method steps in embodiments of this application may be implemented in a hardware manner, or may be implemented in a manner of executing software instructions by the processor. The software instructions may consist of a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium,

and can write information to the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

It should be understood that, the foregoing embodiments may be independent solutions, or may be combined based on internal logic. These solutions fall within the protection scope of this application. The terminal device and/or the network device may perform some or all of the steps in embodiments. These steps or operations are merely examples. In this application, other operations or variants of various operations may be further performed. In addition, the steps may be performed in different sequences presented in embodiments, and not all operations in embodiments of this application may need to be performed.

It may be understood that numbers in embodiments of this application are used for differentiation merely for ease of description, but are not for limiting the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed by various computer-readable media that store various data structures. The components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A wireless communication method, comprising:

sending, by a terminal device, first information to a network device on a first carrier, wherein the first information is for determining channel information on the first carrier, and the channel information on the first carrier comprises a modulation and coding scheme MCS and/or spectrum efficiency on the first carrier; and

receiving, by the terminal device, second information from the network device, wherein the second information is for scheduling a transmission resource on a second carrier, the second information indicates channel information on the second carrier, the channel information on the second carrier comprises an MCS and/or spectrum efficiency on the second carrier, and the channel information on the second carrier is determined based on the channel information on the first carri er.

**2.** The method according to claim 1, wherein the method further comprises:

sending, by the terminal device, third information to the network device, wherein the third information indicates first association information, the channel information on the second carrier is determined based on the first association information and the first information, and the first association information indicates channel difference information between the first carrier and the second carrier.

**3.** The method according to claim 2, wherein the first association information comprises one or more of the following information: a propagation path loss difference, an antenna efficiency difference, an optimal-beam difference, an MCS correspondence, and a spectrum efficiency correspondence.

**4.** The method according to any one of claims 1 to 3, wherein a value range of the spectrum efficiency on the second carrier is [0.8W, 1.1W], and W satisfies:

$$W = \log_2(1 + 10^{\Delta/10}(2^z - 1))$$

wherein Δ is the propagation path loss difference between the second carrier and the first carrier, Z is spectrum efficiency corresponding to an MCS index U on the first carrier, and a value range of an MCS index corresponding to the spectrum efficiency on the second carrier is [*V* -2, *V*+1].

**5.** The method according to claim 4, wherein the propagation path loss difference Δ between the first carrier and the second carrier satisfies:

$$\Delta = 10\log_{10}((2^W - 1)/(2^Z - 1))$$

wherein W is spectrum efficiency corresponding to an MCS index V on the second carrier, and Z is the spectrum efficiency corresponding to the MCS index U on the first carrier.

**6.** The method according to any one of claims 1 to 5, wherein the first information comprises one or more of the following information: a reference signal received power RSRP on the first carrier, reference signal received quality RSRQ on the first carrier, a channel quality indication CQI on the first carrier, a sounding reference signal SRS on the first carrier,

acknowledgement ACK or negative acknowledgement NACK information of a communication device on the first carrier, and information indicating whether the communication device successfully demodulates information on the first carrier.

**7.** A wireless communication method, comprising:

receiving, by a terminal device, channel information on a first carrier and second association information from a network device, wherein the channel information on the first carrier comprises a modulation and coding scheme MCS and/or spectrum efficiency on the first carrier, and the second association information indicates channel difference information between the first carrier and a second carrier; and
determining, by the terminal device, channel information on the second carrier based on the channel information on the first carrier and the second association information, wherein the channel information on the second carrier comprises an MCS and/or spectrum efficiency on the second carrier.

**8.** The method according to claim 7, wherein the method further comprises:

receiving, by the terminal device, second information from the network device, wherein the second information is for scheduling a transmission resource on the second carrier; and
communicating, by the terminal device, with the network device by using the transmission resource on the second carrier based on the second information and the channel information on the second carrier.

**9.** The method according to claim 7 or 8, wherein the method further comprises:
sending, by the terminal device, first information to the network device on the first carrier, wherein the first information is for determining the channel information on the first carrier.

**10.** The method according to any one of claims 7 to 9, wherein the method further comprises:
sending, by the terminal device, third information to the network device, wherein the third information indicates first association information, the first association information is for determining the second association information, and the first association information indicates channel difference information that is between the first carrier and the second carrier and that is not updated.

**11.** The method according to any one of claims 7 to 10, wherein at least one of the first association information or the second association information comprises one or more of the following information: a propagation path loss difference, an antenna efficiency difference, an optimal-beam difference, an MCS correspondence, and a spectrum efficiency correspondence.

**12.** The method according to any one of claims 7 to 11, wherein a value range of the spectrum efficiency on the second carrier is [0.8*W*, 1.1*W*], and *W* satisfies:

$$W = \log_2(1 + 10^{\Delta/10}(2^z - 1))$$

wherein Δ is the propagation path loss difference between the second carrier and the first carrier, Z is spectrum efficiency corresponding to an MCS index U on the first carrier, and a value range of an MCS index corresponding to the spectrum efficiency on the second carrier is [*V* -2, *V*+1].

**13.** The method according to claim 12, wherein the propagation path loss difference Δ between the first carrier and the second carrier satisfies:

$$\Delta = 10\log_{10}((2^W - 1)/(2^Z - 1))$$

wherein W is spectrum efficiency corresponding to an MCS index V on the second carrier, and Z is the spectrum efficiency corresponding to the MCS index U on the first carrier.

**14.** The method according to any one of claims 8 to 13, wherein the first information comprises one or more of the following information: a reference signal received power RSRP on the first carrier, reference signal received quality RSRQ on the first carrier, a channel quality indication CQI on the first carrier, a sounding reference signal SRS on the first carrier, acknowledgement ACK or negative acknowledgement NACK information of a communication device on the first carrier, and information indicating whether the communication device successfully demodulates information on the first carrier.

**15.** A wireless communication method, comprising:

receiving, by a network device, first information from a terminal device on a first carrier, wherein the first information is for determining channel information on the first carrier, and the channel information on the first carrier comprises a modulation and coding scheme MCS and/or spectrum efficiency on the first carrier; and
sending, by the network device, second information to the terminal device, wherein the second information is for scheduling a transmission

resource on a second carrier, the second information indicates channel information on the second carrier, the channel information on the second carrier comprises an MCS and/or spectrum efficiency on the second carrier, and the channel information on the second carrier is determined based on the channel information on the first carri er.

**16.** The method according to claim 15, wherein the method further comprises:

determining, by the network device, the channel information on the first carrier based on the first information; and
determining, by the network device, the channel information on the second carrier based on the channel information on the first carrier.

**17.** The method according to claim 15 or 16, wherein the method further comprises:

receiving, by the network device, third information from the terminal device, wherein the third information indicates first association information, and the first association information indicates channel difference information between the first carrier and the second carrier; and
determining, by the network device, the channel information on the second carrier based on the first association information and the first information.

**18.** The method according to claim 17, wherein the first association information comprises one or more of the following information: a propagation path loss difference, an antenna efficiency difference, an optimal-beam difference, an MCS correspondence, and a spectrum efficiency correspondence.

**19.** The method according to any one of claims 15 to 18, wherein a value range of the spectrum efficiency on the second carrier is [0.8*W*, 1.1W], and W satisfies:

$$W = \log_2(1 + 10^{\Delta/10}(2^z - 1))$$

wherein Δ is the propagation path loss difference between the second carrier and the first carrier, Z is spectrum efficiency corresponding to an index U of a real-time MCS on the first carrier, and a value range of an MCS index corresponding to the spectrum efficiency on the second carrier is [*V*-2,*V*+1].

**20.** The method according to claim 19, wherein the propagation path loss difference Δ between the first carrier and the second carrier satisfies:

$$\Delta = 10\log_{10}((2^W - 1)/(2^Z - 1))$$

wherein W is spectrum efficiency corresponding to an MCS index V on the second carrier, and Z is the spectrum efficiency corresponding to the MCS index U on the first carrier.

**21.** The method according to any one of claims 15 to 20, wherein the first information comprises one or more of the following information: a reference signal received power RSRP on the first carrier, reference signal received quality RSRQ on the first carrier, a channel quality indication CQI on the first carrier, a sounding reference signal SRS on the first carrier, acknowledgement ACK or negative acknowledgement NACK information of a communication device on the first carrier, and information indicating whether the communication device successfully demodulates information on the first carrier.

**22.** A wireless communication method, comprising:
sending, by a network device, channel information on a first carrier and second association information to a terminal device, wherein the channel information on the first carrier comprises a modulation and coding scheme MCS and/or spectrum efficiency on the first carrier, the second association information indicates channel difference information between the first carrier and a second carrier, the channel information on the first carrier and the second association information are for determining channel information on the second carrier, and the channel information on the second carrier comprises an MCS and/or spectrum efficiency on the second carrier.

**23.** The method according to claim 22, wherein the method further comprises:
sending, by the network device, second information to the terminal device, wherein the second information is for scheduling a transmission resource on the second carrier.

**24.** The method according to claim 22 or 23, wherein the determining, by the network device, the channel information on the first carrier comprises:

receiving, by the network device, first information from the terminal device on the first carrier; and
determining, by the network device, the channel information on the first carrier based on the first information.

**25.** The method according to any one of claims 22 to 24, wherein the determining, by the network device, the second association information comprises:

receiving, by the network device, third information from the terminal device, wherein the third information indicates first association information, and the first association information indicates channel difference information that is between the first carrier and the second carrier and that is not updated; and

determining, by the network device, the second association information based on the first association information.

**26.** The method according to any one of claims 22 to 25, wherein at least one of the first association information or the second association information comprises one or more of the following information: a propagation path loss difference, an antenna efficiency difference, an optimal-beam difference, an MCS correspondence, and a spectrum efficiency correspondence.

**27.** The method according to any one of claims 22 to 26, wherein a value range of the spectrum efficiency on the second carrier is [0.8*W*, 1.1W], and W satisfies:

$$W = \log_2(1 + 10^{\Delta/10}(2^z - 1))$$

wherein Δ is the propagation path loss difference between the second carrier and the first carrier, Z is spectrum efficiency corresponding to an MCS index U on the first carrier, and a value range of an MCS index corresponding to the spectrum efficiency on the second carrier is [*V* -2, *V*+1].

**28.** The method according to claim 27, wherein the propagation path loss difference Δ between the first carrier and the second carrier satisfies:

$$\Delta = 10\log_{10}((2^W - 1)/(2^Z - 1))$$

wherein W is spectrum efficiency corresponding to an MCS index V on the second carrier, and Z is the spectrum efficiency corresponding to the MCS index U on the first carrier.

**29.** The method according to any one of claims 24 to 28, wherein the first information comprises one or more of the following information: a reference signal received power RSRP on the first carrier, reference signal received quality RSRQ on the first carrier, a channel quality indication CQI on the first carrier, a sounding reference signal SRS on the first carrier, acknowledgement ACK or negative acknowledgement NACK information of a communication device on the first carrier, and information indicating whether the communication device successfully demodulates information on the first carrier.

**30.** A wireless communication apparatus, comprising: a unit configured to implement the method according to any one of claims 1 to 6 or 7 to 14.

**31.** A wireless communication apparatus, comprising: a unit configured to implement the method according to any one of claims 15 to 21 or 22 to 29.

**32.** A wireless communication apparatus, comprising a processor, wherein the processor is coupled to a memory, and the processor is configured to execute a computer program stored in the memory, to enable the apparatus to perform the method according to any one of claims 1 to 6 or 7 to 14, or to enable the apparatus to perform the method according to any one of claims 15 to 21 or 22 to 29.

**33.** A chip, comprising a processor, configured to invoke a computer program from a memory and run the computer program, to enable a terminal device installed with the chip to perform the method according to any one of claims 1 to 6 or 7 to 14, and/or enable a network device installed with the chip to perform the method according to any one of claims 15 to 21 or 22 to 29.

**34.** A computer program, wherein when the computer program is executed by a communication apparatus, the method according to any one of claims 1 to 29 is implemented.

**35.** A computer-readable storage medium, wherein the computer-readable storage medium stores a computer program; and when the computer program is run, a computer is enabled to perform the method according to any one of claims 1 to 6 or 7 to 14, or a computer is enabled to perform the method according to any one of claims 15 to 21 or 22 to 29.

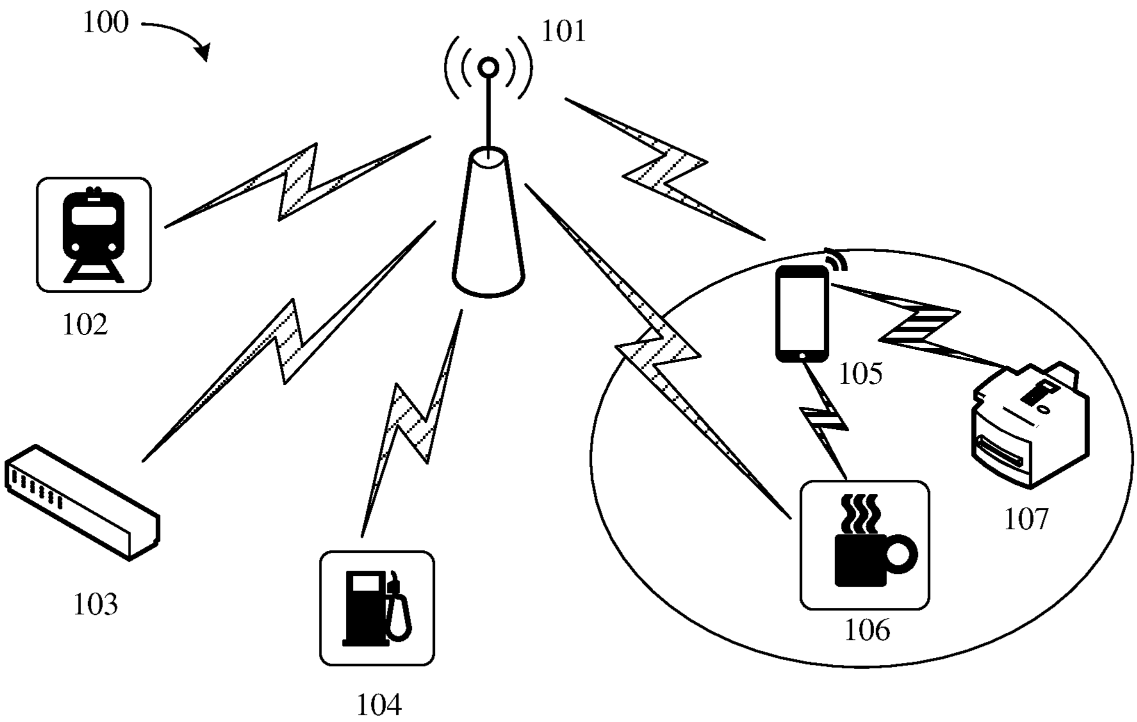
100
101
102
103
104
105
106
107

FIG. 1

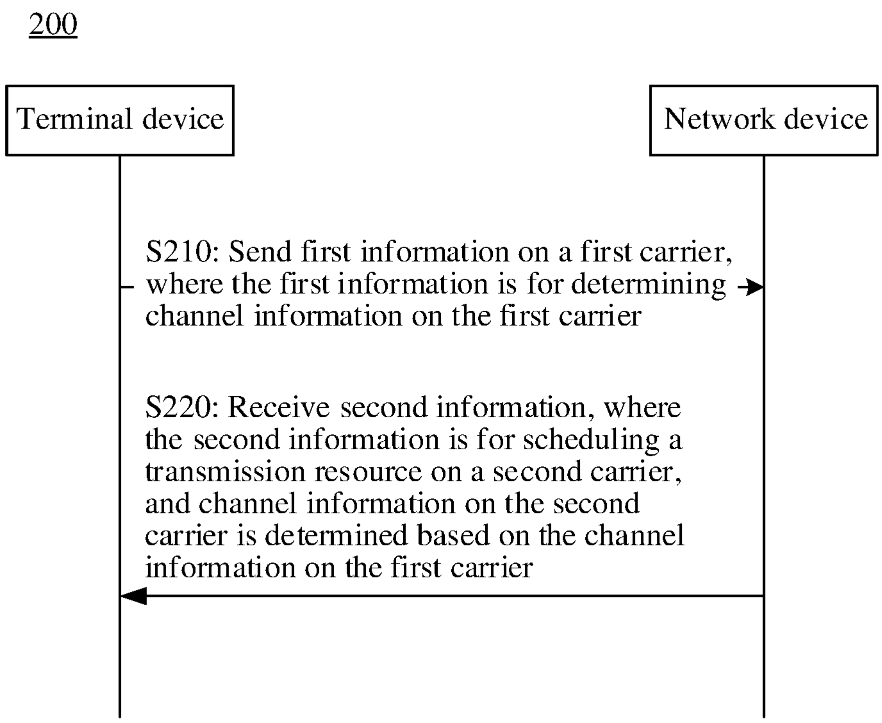
200
Terminal device
Network device
S210: Send first information on a first carrier, where the first information is for determining channel information on the first carrier
S220: Receive second information, where the second information is for scheduling a transmission resource on a second carrier, and channel information on the second carrier is determined based on the channel information on the first carrier

FIG. 2

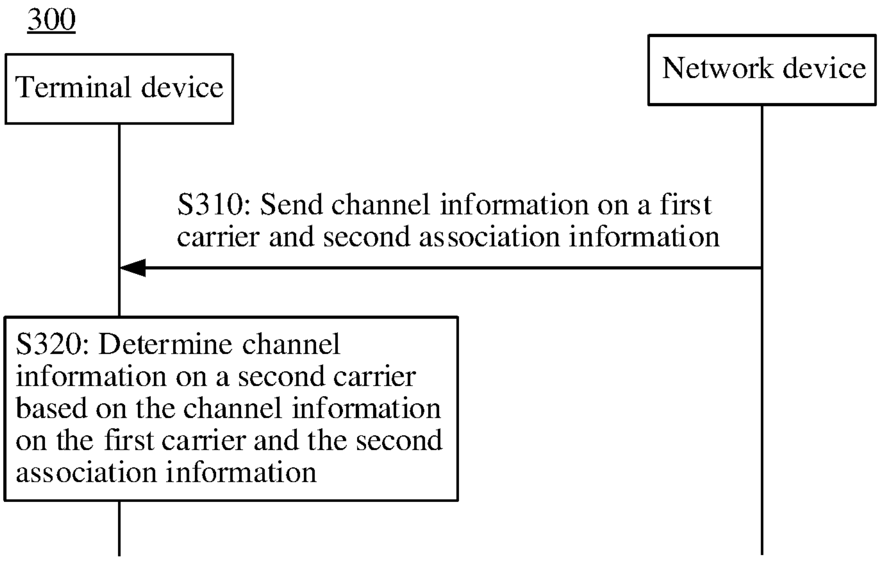
300
Terminal device
Network device
S310: Send channel information on a first carrier and second association information
S320: Determine channel information on a second carrier based on the channel information on the first carrier and the second association information

FIG. 3

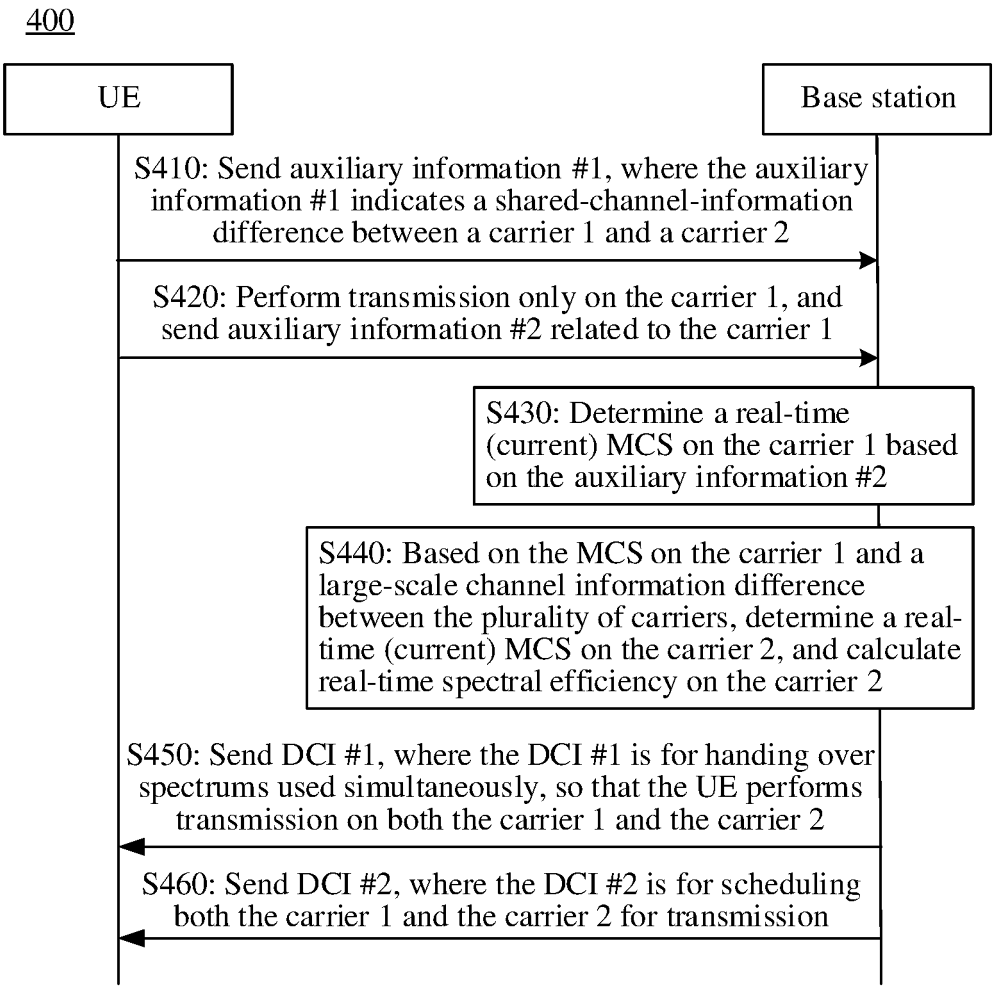
400
UE
Base station
S410: Send auxiliary information #1, where the auxiliary information #1 indicates a shared-channel-information difference between a carrier 1 and a carrier 2
S420: Perform transmission only on the carrier 1, and send auxiliary information #2 related to the carrier 1
S430: Determine a real-time (current) MCS on the carrier 1 based on the auxiliary information #2
S440: Based on the MCS on the carrier 1 and a large-scale channel information difference between the plurality of carriers, determine a real-time (current) MCS on the carrier 2, and calculate real-time spectral efficiency on the carrier 2
S450: Send DCI #1, where the DCI #1 is for handing over spectrums used simultaneously, so that the UE performs transmission on both the carrier 1 and the carrier 2
S460: Send DCI #2, where the DCI #2 is for scheduling both the carrier 1 and the carrier 2 for transmission

FIG. 4

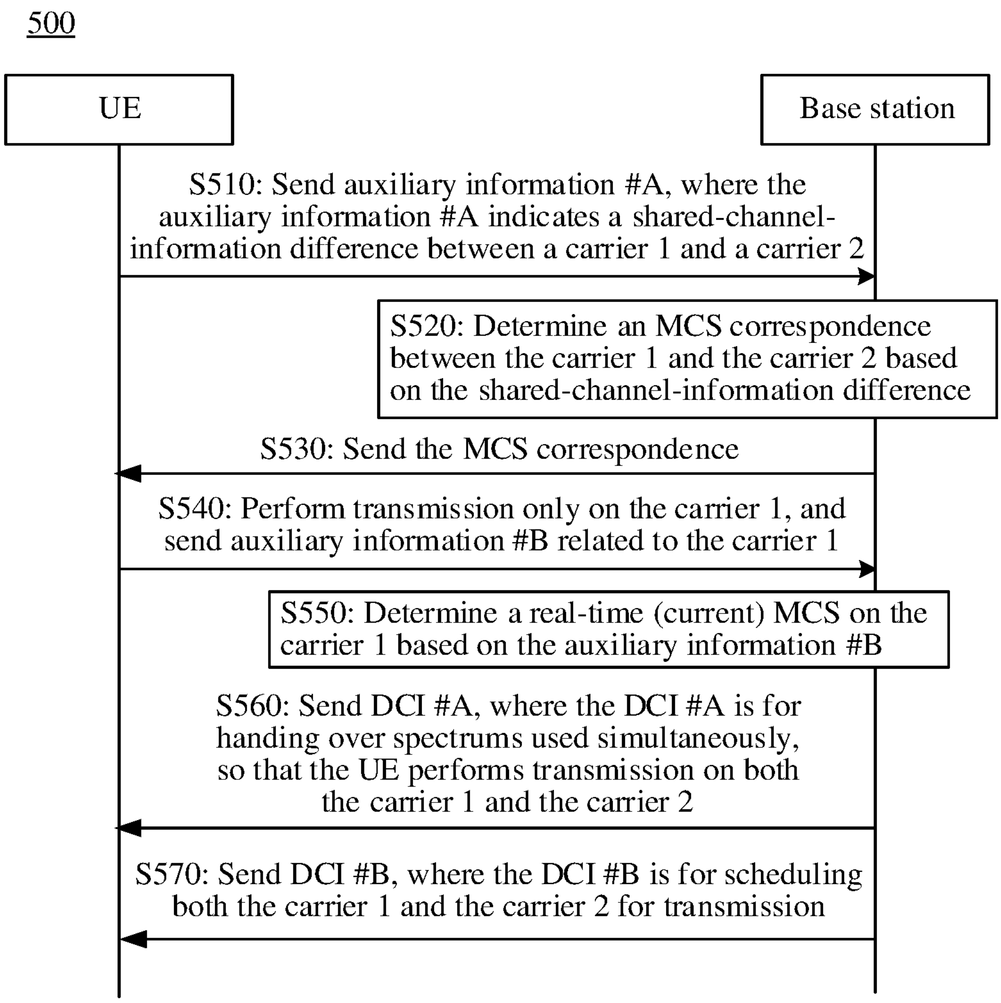
500
UE
Base station
S510: Send auxiliary information #A, where the auxiliary information #A indicates a shared-channel-information difference between a carrier 1 and a carrier 2
S520: Determine an MCS correspondence between the carrier 1 and the carrier 2 based on the shared-channel-information difference
S530: Send the MCS correspondence
S540: Perform transmission only on the carrier 1, and send auxiliary information #B related to the carrier 1
S550: Determine a real-time (current) MCS on the carrier 1 based on the auxiliary information #B
S560: Send DCI #A, where the DCI #A is for handing over spectrums used simultaneously, so that the UE performs transmission on both the carrier 1 and the carrier 2
S570: Send DCI #B, where the DCI #B is for scheduling both the carrier 1 and the carrier 2 for transmission

FIG. 5

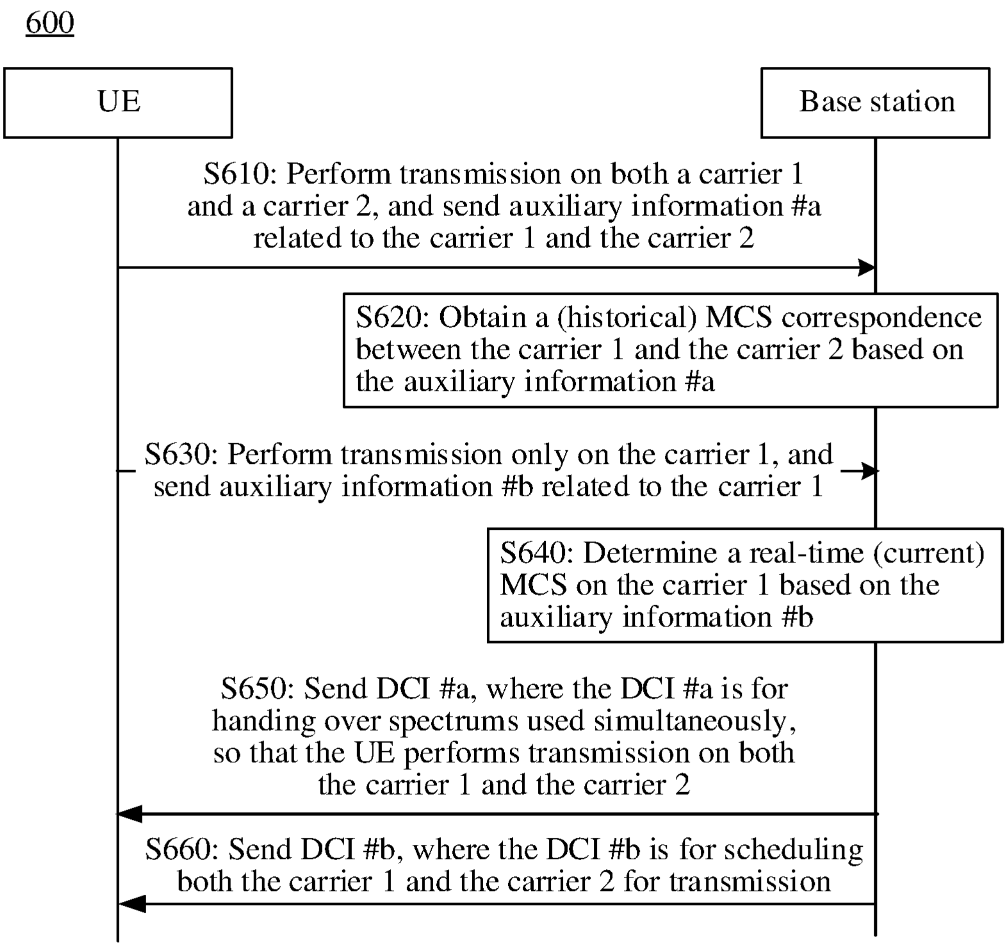
600
UE
Base station
S610: Perform transmission on both a carrier 1 and a carrier 2, and send auxiliary information #a related to the carrier 1 and the carrier 2
S620: Obtain a (historical) MCS correspondence between the carrier 1 and the carrier 2 based on the auxiliary information #a
S630: Perform transmission only on the carrier 1, and send auxiliary information #b related to the carrier 1
S640: Determine a real-time (current) MCS on the carrier 1 based on the auxiliary information #b
S650: Send DCI #a, where the DCI #a is for handing over spectrums used simultaneously, so that the UE performs transmission on both the carrier 1 and the carrier 2
S660: Send DCI #b, where the DCI #b is for scheduling both the carrier 1 and the carrier 2 for transmission

FIG. 6

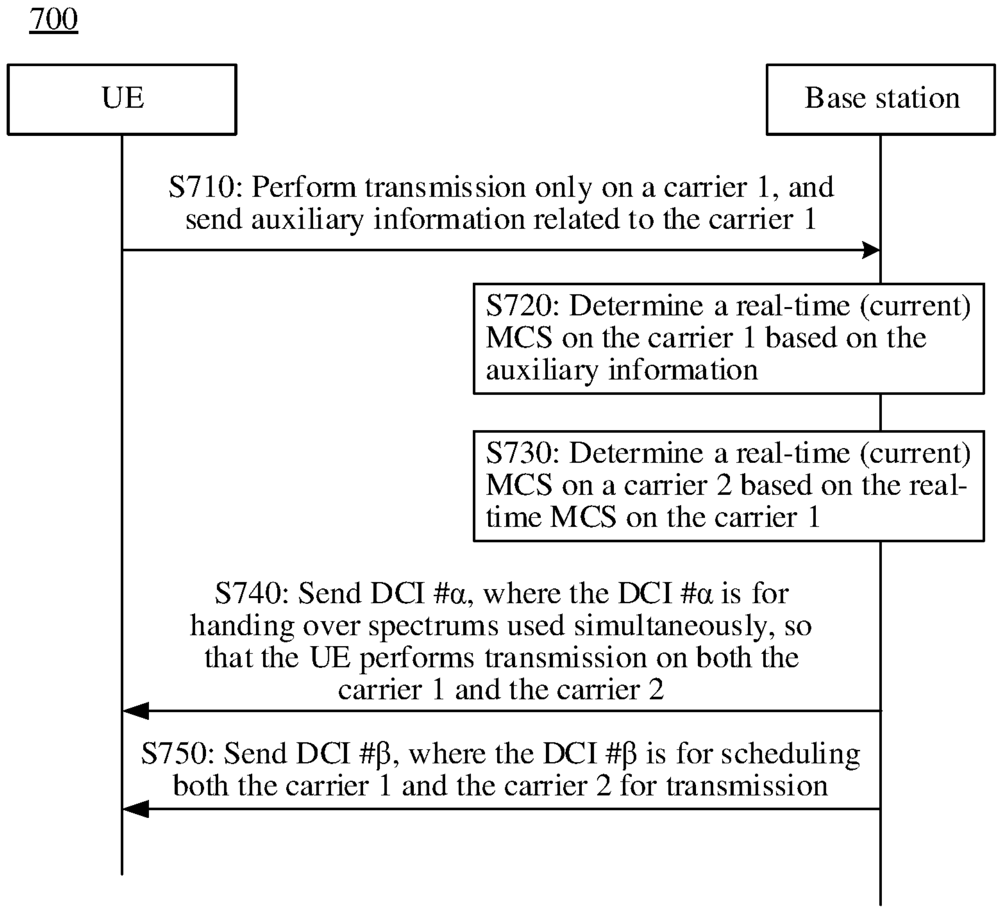
700
UE
Base station
S710: Perform transmission only on a carrier 1, and send auxiliary information related to the carrier 1
S720: Determine a real-time (current) MCS on the carrier 1 based on the auxiliary information
S730: Determine a real-time (current) MCS on a carrier 2 based on the real-time MCS on the carrier 1
S740: Send DCI #α, where the DCI #α is for handing over spectrums used simultaneously, so that the UE performs transmission on both the carrier 1 and the carrier 2
S750: Send DCI #β, where the DCI #β is for scheduling both the carrier 1 and the carrier 2 for transmission

FIG. 7

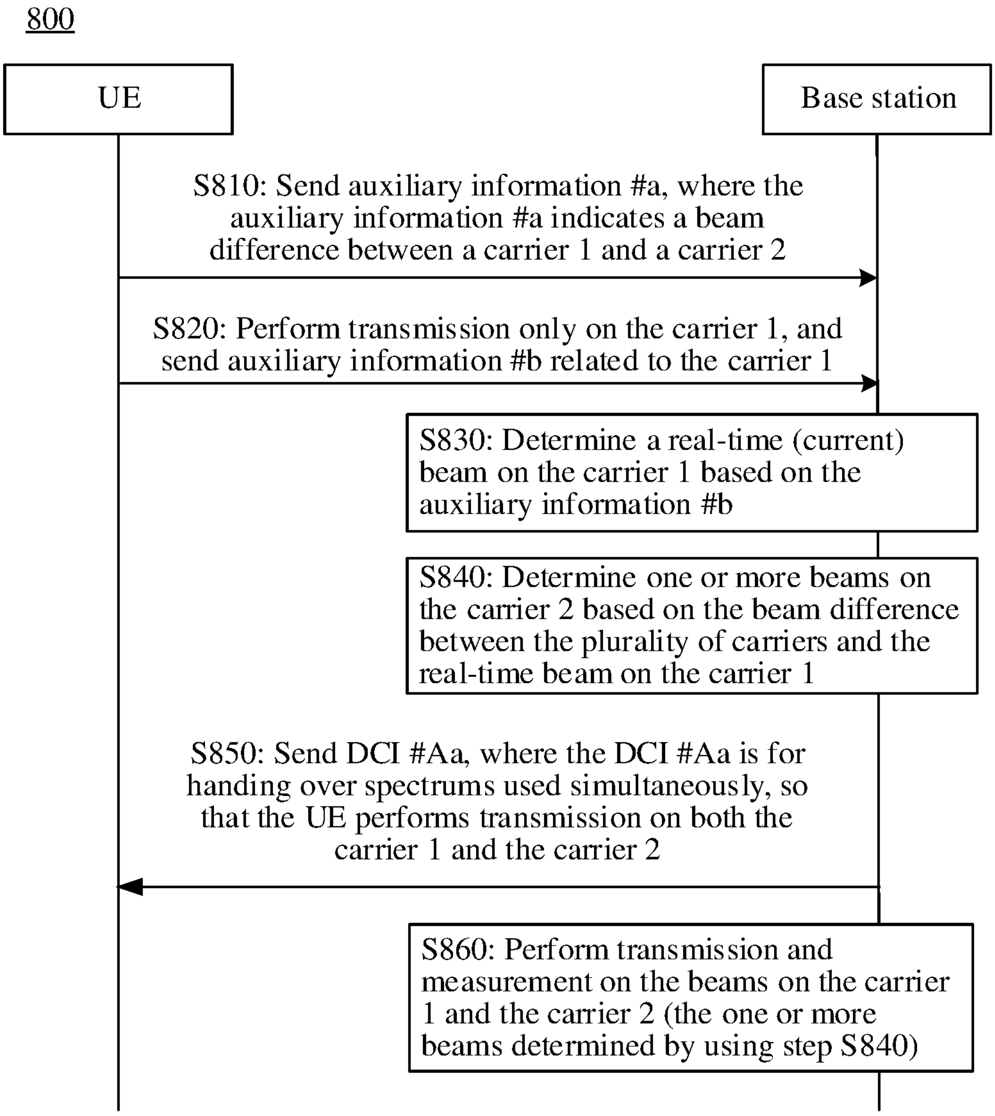
800
UE
Base station
S810: Send auxiliary information #a, where the auxiliary information #a indicates a beam difference between a carrier 1 and a carrier 2
S820: Perform transmission only on the carrier 1, and send auxiliary information #b related to the carrier 1
S830: Determine a real-time (current) beam on the carrier 1 based on the auxiliary information #b
S840: Determine one or more beams on the carrier 2 based on the beam difference between the plurality of carriers and the real-time beam on the carrier 1
S850: Send DCI #Aa, where the DCI #Aa is for handing over spectrums used simultaneously, so that the UE performs transmission on both the carrier 1 and the carrier 2
S860: Perform transmission and measurement on the beams on the carrier 1 and the carrier 2 (the one or more beams determined by using step S840)

FIG. 8

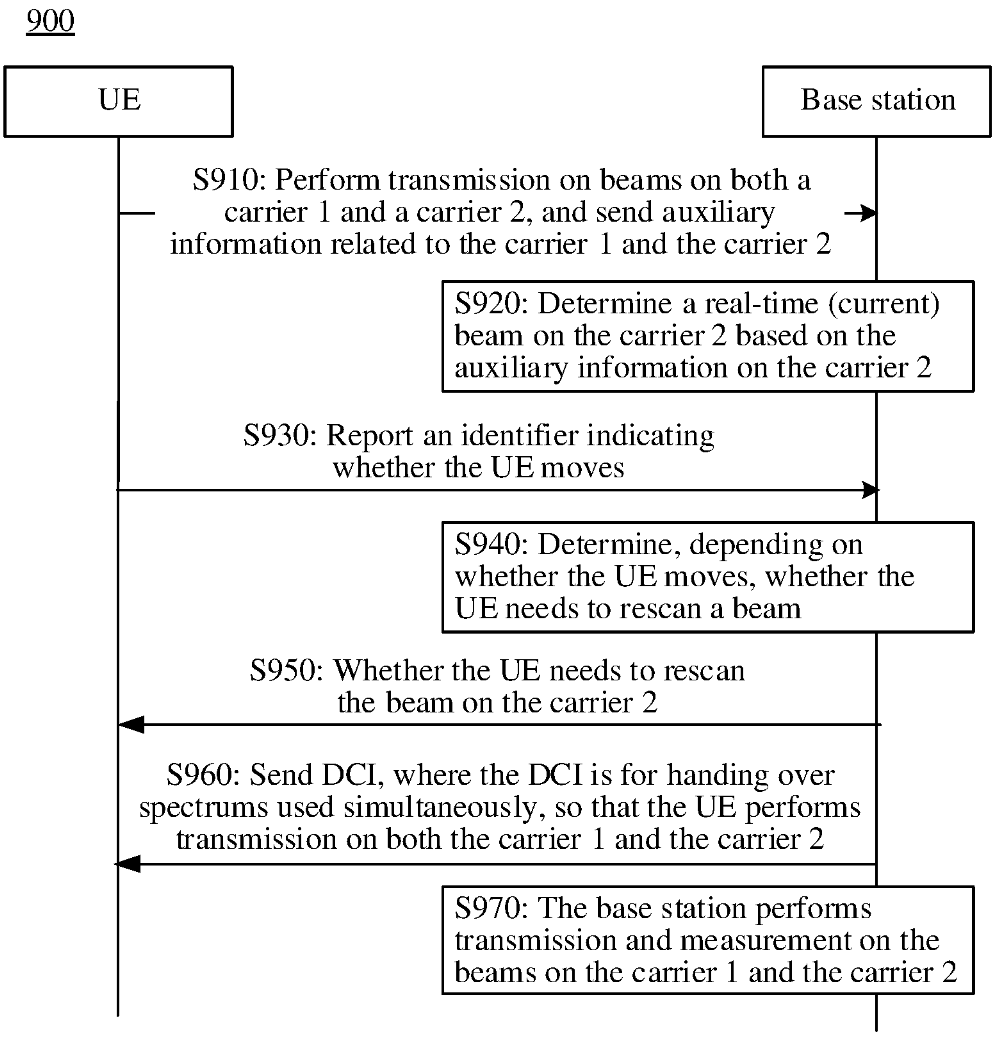
900
UE
Base station
S910: Perform transmission on beams on both a carrier 1 and a carrier 2, and send auxiliary information related to the carrier 1 and the carrier 2
S920: Determine a real-time (current) beam on the carrier 2 based on the auxiliary information on the carrier 2
S930: Report an identifier indicating whether the UE moves
S940: Determine, depending on whether the UE moves, whether the UE needs to rescan a beam
S950: Whether the UE needs to rescan the beam on the carrier 2
S960: Send DCI, where the DCI is for handing over spectrums used simultaneously, so that the UE performs transmission on both the carrier 1 and the carrier 2
S970: The base station performs transmission and measurement on the beams on the carrier 1 and the carrier 2

FIG. 9

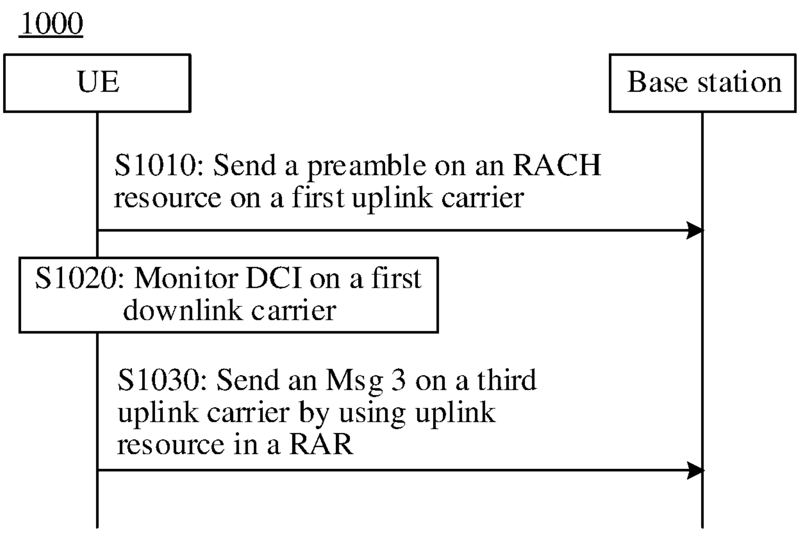
1000
UE
Base station
S1010: Send a preamble on an RACH resource on a first uplink carrier
S1020: Monitor DCI on a first downlink carrier
S1030: Send an Msg 3 on a third uplink carrier by using uplink resource in a RAR

FIG. 10

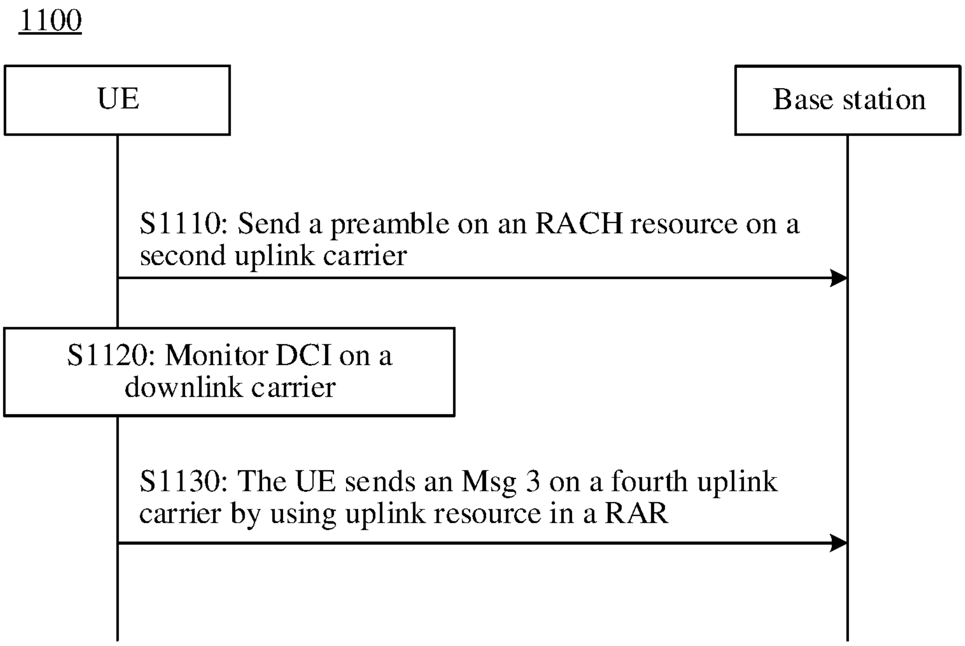


FIG. 11

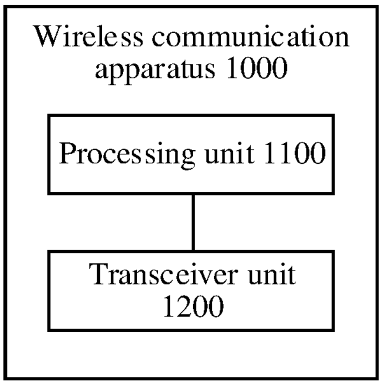


FIG. 12

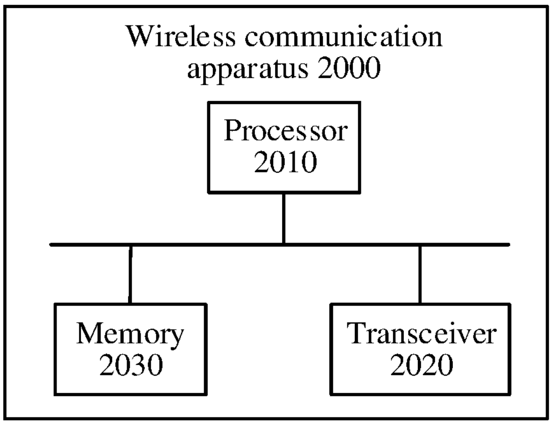


FIG. 13

**INTERNATIONAL SEARCH REPORT**

International application No.
**PCT/CN2022/116503**

**A. CLASSIFICATION OF SUBJECT MATTER**

H04W 72/12(2009.01)i

According to International Patent Classification (IPC) or to both national classification and IPC

**B. FIELDS SEARCHED**

Minimum documentation searched (classification system followed by classification symbols)

H04W72/-; H04W52/-

Documentation searched other than minimum documentation to the extent that such documents are included in the fields searched

Electronic data base consulted during the international search (name of data base and, where practicable, search terms used)

CNABS; CNTXT; ENTXTC; CNKI: 终端, 用户设备, UE, 基站, gNB, eNB, 网络侧, 网络设备, 发送, 接收, 第一, 第二, 载波, 频段, 信道, 信息, 参数, 由, 根据, 确定, 指示, 跨, 多, 载波聚合, CA, MCS, 频谱效率 VEN; USTXT; WOTXT; EPTXT; 3GPP; IEEE: UE, user equipment, gNB, eNB, base station, network, device, send, transmit+, receive, first, second, carrier, band, frequency, channel, information, parameter, based, according, determin+, indicat+, cross, multi+, CA, MCS, efficiency

**C. DOCUMENTS CONSIDERED TO BE RELEVANT**

| Category* | Citation of document, with indication, where appropriate, of the relevant passages | Relevant to claim No. |
|---|---|---|
| X | WO 2020237489 A1 (HUAWEI TECHNOLOGIES CO., LTD.) 03 December 2020 (2020-12-03)<br>description, page 12 | 1, 3, 6, 15-16, 21, 30-35 |
| X | WO 2021114193 A1 (HUAWEI TECHNOLOGIES CO., LTD.) 17 June 2021 (2021-06-17)<br>description, page 13 | 7-9, 11, 14, 22-24, 26, 29-35 |
| A | CN 112272409 A (GUANGDONG OPPO MOBILE COMMUNICATIONS CO., LTD.) 26 January 2021 (2021-01-26)<br>entire document | 1-35 |
| A | CN 102396270 A (HUAWEI TECHNOLOGIES CO., LTD.) 28 March 2012 (2012-03-28)<br>entire document | 1-35 |
| A | CN 108811062 A (HUAWEI TECHNOLOGIES CO., LTD.) 13 November 2018 (2018-11-13)<br>entire document | 1-35 |
| A | US 2020107299 A1 (QUALCOMM INCOPORATED) 02 April 2020 (2020-04-02)<br>entire document | 1-35 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 November 2022** | **30 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/116503**

**C. DOCUMENTS CONSIDERED TO BE RELEVANT**

| Category* | Citation of document, with indication, where appropriate, of the relevant passages | Relevant to claim No. |
|---|---|---|
| A | US 2016020875 A1 (LG ELECTRONICS INC.) 21 January 2016 (2016-01-21)<br>entire document | 1-35 |
| A | US 2018049206 A1 (QUALCOMM INCOPORATED) 15 February 2018 (2018-02-15)<br>entire document | 1-35 |
| A | US 2018041301 A1 (TELEFONAKTIEBOLAGET LM ERICSSON (PUBL)) 08 February 2018 (2018-02-08)<br>entire document | 1-35 |

Form PCT/ISA/210 (second sheet) (January 2015)

**INTERNATIONAL SEARCH REPORT**
**Information on patent family members**

International application No.
**PCT/CN2022/116503**

| Patent document cited in search report | Publication date (day/month/year) | Patent family member(s) | Publication date (day/month/year) |
|---|---|---|---|
| WO 2020237489 A1 | 03 December 2020 | CN 113424618 A | 21 September 2021 |
| WO 2021114193 A1 | 17 June 2021 | CN 114747273 A | 12 July 2022 |
| CN 112272409 A | 26 January 2021 | WO 2019000365 A1 | 03 January 2019 |
| | | TW 201906438 A | 01 February 2019 |
| | | CN 109565826 A | 02 April 2019 |
| | | CN 109565826 B | 03 November 2020 |
| | | CN 112351502 A | 09 February 2021 |
| CN 102396270 A | 28 March 2012 | WO 2010108329 A1 | 30 September 2010 |
| CN 108811062 A | 13 November 2018 | WO 2018202019 A1 | 08 November 2018 |
| US 2020107299 A1 | 02 April 2020 | WO 2020068346 A1 | 02 April 2020 |
| | | US 2021092721 A1 | 25 March 2021 |
| | | EP 3857781 A1 | 04 August 2021 |
| | | CN 112740604 A | 30 April 2021 |
| | | US 10897754 B2 | 19 January 2021 |
| US 2016020875 A1 | 21 January 2016 | CN 105191190 A | 23 December 2015 |
| | | US 2019158234 A1 | 23 May 2019 |
| | | WO 2014137084 A1 | 12 September 2014 |
| | | CN 105191190 B | 13 February 2018 |
| | | US 10567129 B2 | 18 February 2020 |
| US 2018049206 A1 | 15 February 2018 | TW 201806428 A | 16 February 2018 |
| | | WO 2018031107 A1 | 15 February 2018 |
| | | SG 11201811459 T A | 27 February 2019 |
| | | CA 3029753 A1 | 15 February 2018 |
| | | AU 2017309166 A1 | 17 January 2019 |
| | | BR 112019002418 A2 | 04 June 2019 |
| | | EP 3497986 A1 | 19 June 2019 |
| | | CN 109565761 A | 02 April 2019 |
| | | IN 201847049375 A | 11 January 2019 |
| | | ID 201901753 A | 18 March 2019 |
| | | US 11153880 B2 | 19 October 2021 |
| | | TW 743129 B1 | 21 October 2021 |
| | | AU 2017309166 B2 | 23 December 2021 |
| | | CN 109565761 B | 22 February 2022 |
| US 2018041301 A1 | 08 February 2018 | EP 3257179 A1 | 20 December 2017 |
| | | WO 2016130072 A1 | 18 August 2016 |
| | | EP 3257179 B1 | 19 September 2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202111040607